Europäisches Patentamt

European Patent Office

Office européen des brevets

(11) Veröffentlichungsnummer: **0 491 689 B1**

(19)

(12) **EUROPÄISCHE PATENTSCHRIFT**

(45) Veröffentlichungstag der Patentschrift: **09.03.94**

(51) Int. Cl.⁵: **H02M 1/12**

(21) Anmeldenummer: **90900817.9**

(22) Anmeldetag: **12.12.89**

(86) Internationale Anmeldenummer:
**PCT/EP89/01518**

(87) Internationale Veröffentlichungsnummer:
**WO 91/03862 (21.03.91 91/07)**

(54) **VORRICHTUNG UND VERFAHREN ZUM OPTIMIERTEN BETRIEB EINES AN EIN NETZ ANGESCHLOSSENEN STROMRICHTERS.**

(30) Priorität: **11.09.89 DE 3930294**
**11.09.89 DE 3930295**
**11.09.89 EP 89116810**
**11.09.89 EP 89116809**

(43) Veröffentlichungstag der Anmeldung:
**01.07.92 Patentblatt 92/27**

(45) Bekanntmachung des Hinweises auf die
Patenterteilung:
**09.03.94 Patentblatt 94/10**

(84) Benannte Vertragsstaaten:
**CH DE LI**

(56) Entgegenhaltungen:
**US-A- 3 883 792**

**2nd European Conference on Power Electronics and Applications, Vol. 2, September 1987, Grenoble Pages 1239-1244; Holtz & Klein; "The propagation of harmonic currents generated by inverter-fed locomotives in the distributed overhead supply system"**

**IEEE Proceedings vol. 133, No: 2, March 1986, pages 85 - 94; Taufig, Mellit & Goodman: "Novel algorithm for generating near optimal PWM waveforms for AC tractiondrives"**

(73) Patentinhaber: **SIEMENS AKTIENGESELLSCHAFT**
**Wittelsbacherplatz 2**
**D-80333 München(DE)**

(72) Erfinder: **HOLTZ, Joachim**
**Am Forsthof 16**
**D-5600 Wuppertal(DE)**
Erfinder: **KRAH, Jens, Onno**
**Königsberger Str. 42**
**D-5600 Wuppertal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum optimierten Betrieb eines an ein Netz angeschlossenen Stromrichters und eine Vorrichtung hierzu.

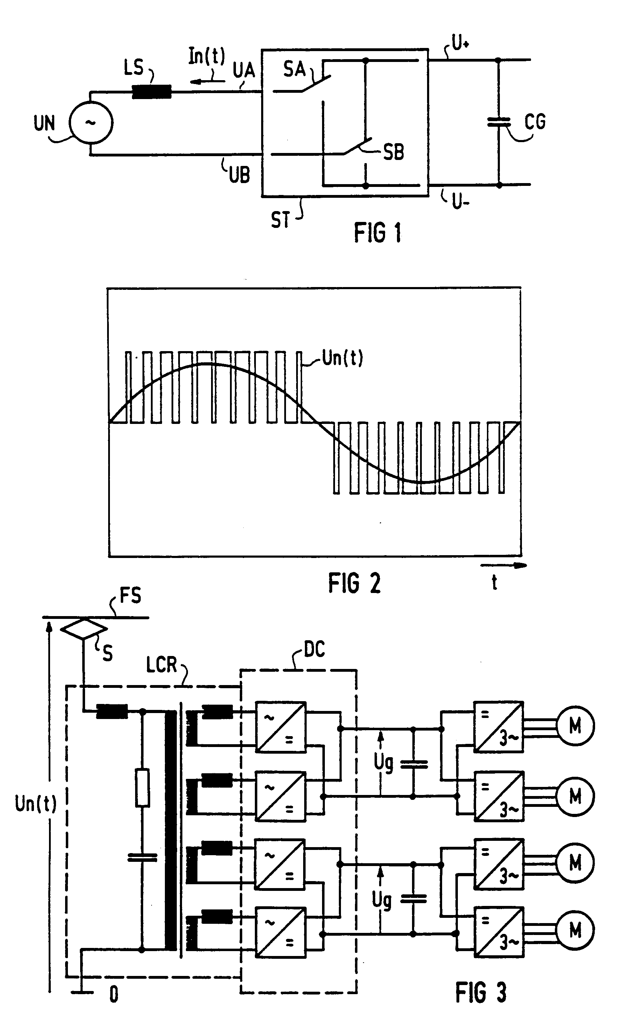

Zur Erläuterung des Problems ist in FIG 1 zunächst ein einphasiger Pulswechselrichter dargestellt, der als "Vierquadranten-Steller" bekannt ist und z.B. im Fall eines Zwischenkreisumrichters mit eingeprägter Gleichspannung an seinen Gleichspannungsanschlüssen auf den Potentialen U+ und U- liegt. Der Schalter SA des Stellers ST verbindet einen Wechselspannungsanschluß alternierend mit den beiden Gleichspannungs anschlüssen, so daß dort das Potential UA nur einen der beiden Werte U+ und U- annehmen kann.

Entsprechendes gilt für den anderen Schalter SB des Stellers und für dessen anderen Wechselspannungsanschluß, dessen Potential UB somit ebenfalls nur einen der beiden Werte U+ und U- annehmen kann. Dieser Wechselrichter besitzt daher an seinen wechselspannungsseitigen Anschlüssen die Anschlußspannung U = UA - UB. FIG 2 zeigt die Spannung U für den Fall, daß die Umschaltimpulse der Schalter durch Modulation einer sinusförmigen Steuerspannung mit einer höherfrequenten Sägezahnspannung gewonnen werden. Durch diese bekannte "Pulsbreitenmodulation" entstehen also eine Spannungsgrundschwingung und Oberschwingung die durch die Gleichspannung $U_+$-$U_-$ und die Phasenlage der Umschaltimpulse gegeben sind.

In FIG 1 ist angenommen, daß der Steller über eine vorgeschaltete Steller-Drossel LS an das Versorgungsnetz UN mit der Versorgungsspannung Un(t) angeschlossen ist. Der Spannungsabfall Uls an der Drossel LS kann daher nur die Werte Uls = Un(t)±(U+ - U-) oder Uls = Un(t) (in diesem Fall sind beide Schalter entweder nur mit U+ oder nur mit U- verbunden) annehmen. Entsprechend der Induktivität Ls der Stellerdrossel gilt dann für den Strom In(t), der über die Stellerdrossel zwischen dem Netz und dem Steller ausgetauscht wird: d/dt In(t) = Uls/Ls.

Durch entsprechendes Betätigen der Schalter kann erreicht werden, daß dieser Strom jede beliebige Kurvenform zumindest näherungsweise annimmt. So kann z.B. gefordert werden, daß das Netz möglichst nur mit Wirkstrom belastet wird. An den wechselspannungsseitigen Stelleranschlüssen muß dann eine gepulste Spannung erzeugt werden, deren Grundschwingung gegenüber dem Netz eine Phasenverschiebung aufweist, die von dem Strom und der Induktivität Ls abhängt. Um die Sinusform des Stromes möglichst gut anzunähern, ist aber eine hohe Schaltfrequenz erforderlich, und die Spannungsgrundschwingung ist von vielen Oberschwingungen überlagert.

Diese Spannungsoberschwingungen erzeugen in der Induktivität LS und dem Netz hochfrequente Störströme und können im Netz vorhandene Impedanzen zu Resonanzen anregen.

Falls an die wechselspannungsseitigen Anschlüsse eine Last mit bekannter Impedanz, z.B. eine Drehfeldmaschine, angeschlossen ist, kann natürlich bei vorgegebener Gleichspannung durch den Stromrichter Frequenz und Amplitude des Laststromes eingestellt werden. Manche der dabei auftretenden Oberfrequenzen sind unkritisch, da sie durch die Innenbeschaltung der Last ausreichend gedämpft oder auch kompensiert werden. Andere Oberschwingungen jedoch sind kritisch, weil sie störende Oberschwingungen anderer Größen (z.B. des Drehmoments der angeschlossenen Maschine) hervorrufen. Um in diesem Fall nicht nur Frequenz, Amplitude und Phasenverschiebung für die Grundschwingung von Laststrom und Spannung zu beeinflussen, sondern auch die störenden Oberschwingungskomponenten zu minimisieren, sind bereits verschiedene Steuerverfahren vorgeschlagen worden.

So können z.B. einzelne Oberschwingungskomponenten vollständig eliminiert werden (H.S.Patel, R.F.Hoft: "Generalized Techniques of Harmonic Elimination and Voltage Control of Thyristor Inverters", IEEE Transactions on Industrial Applications, vol.IA-9 (1973), p.310 - 317 und vol.IA-10 (1974), p.666-673). Es kann auch der Effektivwert der Oberschwingungsströme minimiert werden (G.S.Buja, G.B.Indri: "Optimal Pulse-width Modulation for Feeding AC Motors", IEEE Transactions on Industrial Applications, vol.IA-13 (1977), p.38-44) oder es wird der Scheitelstrom des Wechselrichterstroms minimiert (J. Holtz, S. Stadtfeld, H.P. Wurm: "a Novel PWM Technique Minimizing the Peak Inverter Current at Steady-State and Transient Operation", Elektrische Bahnen, vol.81 (1983), p.55-61).

Die jeweils durchzuführenden Schaltvorgänge führen zu bestimmten "Pulsmustern" und sind gegeben durch die "Schaltwinkel", d.h. durch die Zeitpunkte innerhalb einer Periode der Grundschwingung, bei denen im Stromrichter die Schaltvorgänge vorgenommen werden sollen. Für die Optimierung wird in Abhängigkeit von diesen Schaltwinkeln eine "Ziel-Funktion" aufgestellt, d.h. eine Funktion, deren Wert die jeweils zu optimierende Größe (z.B. Amplitude einer bestimmten Oberschwingung oder Scheitelwert des Wechselrichterstroms) angibt. In einem mathematischen Algorithmus wird dann durch Optimierung der Variablen dieser Zielfunktion, z.B. also Variation der Schaltzeitpunkte, das Pulsmuster berechnet, bei dem die Zielfunktion ihren optimalen Wert annimmt. Diese Optimierungsrechnung ist im allgemeinen verhältnismäßig aufwendig und wird nicht in Echtzeit ("on-line-Optimierung") sondern jeweils für einen Satz von

EP 0 491 689 B1

Betriebsbedingungen, insbesondere für verschiedene Aussteuerungen und Leistungsgrade bei stationärem Betrieb des Wechselrichters, ausgeführt. Die sich jeweils ergebenden, optimierten Schaltwinkel werden dann als feste Pulsmuster im Speicherbereich eines Mikrorechners abgelegt ("off-line-Optimierung"). Im Echtzeitbetrieb wird dann unter den abgespeicherten Pulsmustern das zur gewünschten Aussteuerung gehörende Pulsmuster ausgelesen und zur Steuerung des Stromrichters verwendet. Derartig ausgeführte Steuerungen sind z.B. von J. Holtz, S. Stadtfeld im "An Economic Very High Power PWM Inverter for Induction Motor Drives", First European Conference on Power Electronics and Applications EPE", Brüssel (1985), Seite 3.75 - 3.80 und von J.A.Taufiq, B.Mellit und C.J. Goodman in "Novel Algorithm for Generating Near Optimal PWM Waveforms for A.C. Truction Drives", IEEE Proceedings, vol.133, part B (1986), p.85 - 94 beschrieben. Vergleiche dazu auch die Patentschrift US-H-3 883 792.

Ausgangspunkt für die Optimierung von Pulsmustern ist also die Festlegung eines Zieles, d.h. es muß formuliert werden, was durch die Optimierung erreicht werden soll. Bei der Speisung von Wechselstromlasten ergibt sich dieses Ziel aus den bekannten und im allgemeinen zeitunabhängigen Erfordernissen der Last. Die erwähnten Verfahren sind daher für die Steuerung des maschinenseitigen Pulswechselrichters eines Zwischenkreisumrichters diskutiert. Für den netzseitigen Gleichrichter besteht primär die Forderung, daß dem Netz ein möglichst sinusförmiger Strom entnommen werden soll, dessen Amplitude durch den erforderlichen Laststrom und dessen Phasenlage zur Netzspannung dadurch bestimmt ist, daß das Netz mit keiner oder nur einer definierten Blindlast belastet werden soll.

Wenn die Last nicht einfach aufgebaut ist, sondern z.B. auch Leitungen oder Schwingkreise mit ausgeprägten Eigenresonanz-Frequenzen enthält, so können die bei einer Steuerung nach FIG 2 auftretenden Oberschwingungen diese Eigenresonanzen anregen. Bei der Optimierung der Pulsmuster sollte dann von einer Zielfunktion ausgegangen werden, die auf die Dämpfung dieser Eigenresonanzen besonderes Gewicht legt. Dies setzt aber eine Kenntnis über die Konfiguration der angeschlossenen Last voraus, die bei ausgedehnten Energieverteilungsnetzen schwer zu erhalten ist.

Derartige schwingungsfähige Netzkonfigurationen liegen vor allem in den Versorgungsnetzen der Stromrichter vor, an denen eine oft unbekannte Zahl anderer Geräte mit zeitlich wechselnden Betriebszuständen angeschlossen sind.

Als bevorzugte Anwendung der Erfindung wird im folgenden der Antrieb einer Lokomotive der Baureihe 120 der Deutschen Bundesbahn betrachtet. Es handelt sich also um ein einphasiges Versorgungsnetz mit 16 2/3 Hz, an dem ein Steller angeschlossen ist zur Gleichstromeinspeisung in einen Zwischenkreis vorgegebener Gleichspannung, die über Wechselrichter mehrere Asynchronmotoren speist. Die Erfindung ist aber weder auf den einphasigen Fall noch auf den Gleichrichterbetrieb der speziell dargestellten Stromrichterschaltung beschränkt.

FIG 3 zeigt schematisch den Leistungsteil der Lokomotive, bei dem eine zwischen dem Fahrdraht FS der Oberleitung und einem Erdungsanschluß O liegende Netzspannung Un(t) von etwa 15 kV über einen Stromabnehmer S und ein Oberschwingungsfilter LCR einen Gleichstromsteller speist. Der Gleichstromsteller DC besteht dabei aus vier einzelnen Vier-Quadranten-Stellern, bei denen nach dem Prinzip des Wechselrichters aus FIG 1 jeweils einer der Wechselspannungsanschlüsse über zwei alternierend betätigte Schalter mit den Gleichspannungsanschlüssen verbunden wird.

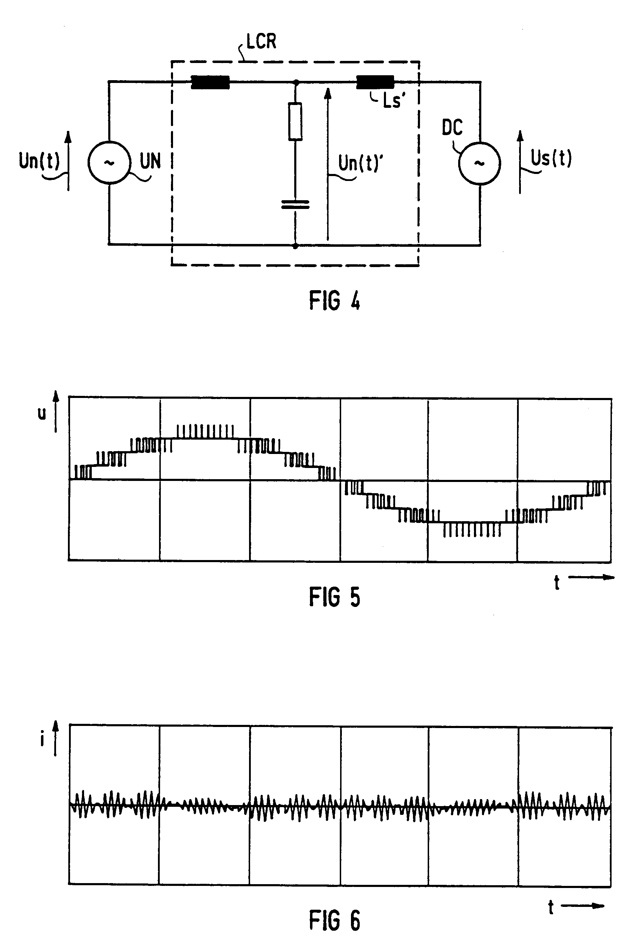

Die einzelnen Vier-Quadranten-Steller sind wechselspannungsseitig transformatorisch in Reihe an das Oberschwingungsfilter angeschlossen. An die Stelle des einzigen Potentials U+ in FIG 1 treten daher durch die additive Wirkung der parallel arbeitenden Einzel-Steller vier Potentiale, und das gleiche gilt für das Potential U−. In dem Ersatzschaltbild der FIG 4 sind die Streuinduktivitäten an den Wechselspannungsanschlüssen der Steller zu einer Steller-Ersatzdrossel Ls' zusammengefaßt, und für den Spannungsabfall Uls' an dieser Steller-Ersatzdrossel gilt dann:

Uls' = Un(t)'- Us(t)

wobei Un(t)' die sekundärseitige Transformatorspannung und Us eine Stellerersatzspannung ist, für die gilt:

Us(t) = k.Ug.

Die Variable k kann dabei die Werte -4, -3, ..., + 4 annehmen. Der jeweilige Wert ist zeitabhängig und durch die Ansteuerung der Schalter, also das Pulsmuster für den Betrieb der gesamten Stelleranordnung gegeben. Entsprechend kann Us(t) aus dem Wert Ug der Gleichspannung und dem Pulsmuster berechnet oder durch Addition der gemessenen Wechselspannungen der Einzel-Steller gebildet werden.

Der Verlauf der Spannung Us(t) ist in FIG 5 dargestellt. Er führt zu einem sinusförmigen Strom im Fahrdraht, der von Oberschwingungen überlagert ist, wie in FIG 6 gezeigt ist. Derartige Pulsmuster liegen auch bei anderen gepulsten Wechselrichtern mit einer eingeprägten Gleichspannung vor, z.B. bei Mehrpunkt-Wechselrichtern.

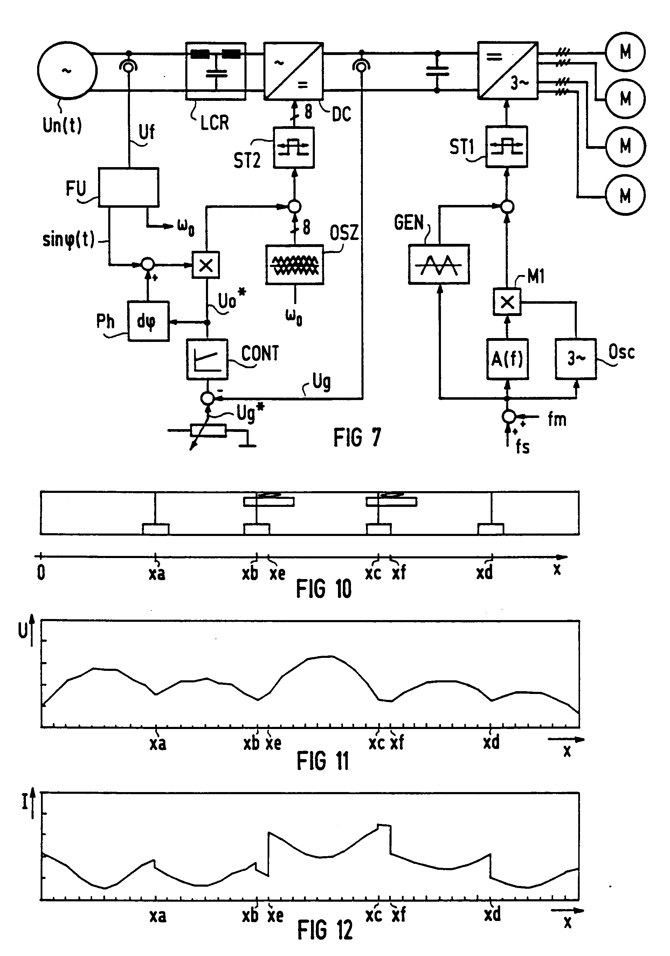

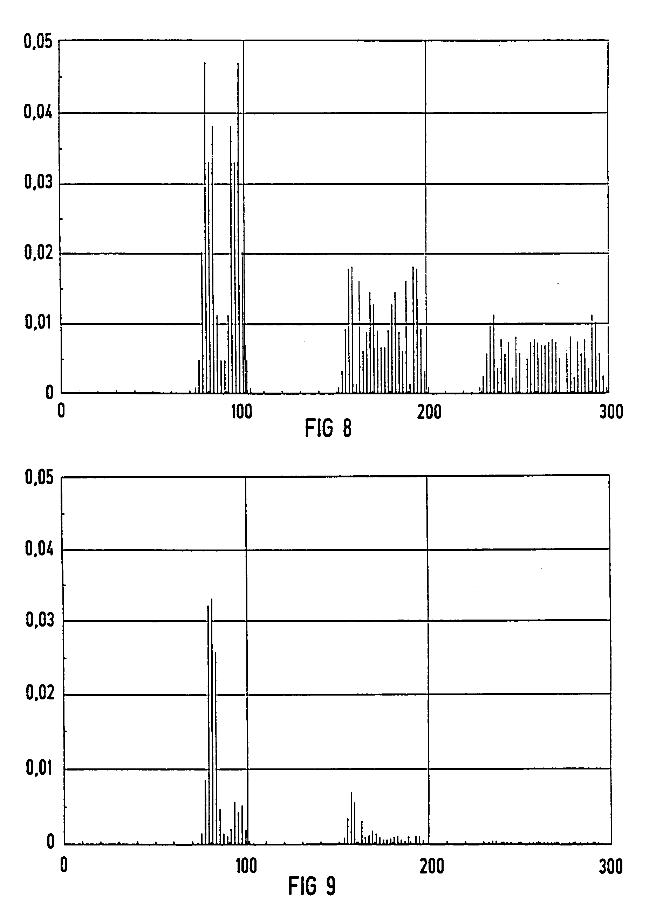

Das Pulsmuster, das der FIG 5 zugrunde liegt, ist bei dieser bekannten Lokomotive durch das "Unterschwingungsverfahren" erzeugt, bei dem ein Sollwert für die Wechselspannung mit einer synchronisierten höherfrequenten Sägezahn-Spannung moduliert wird. FIG 7 zeigt Einzelheiten der Steuerung für die bekannte Lokomotive ("Elektrische Bahnen" 47 (1976), S.18-23).

Dabei wird ein Schlupffrequenz-Sollwert fs, der proportional zum gewünschten Antriebsmoment vorgegeben und der gemessenen mechanischen Drehzahl fm der Antriebsmotoren die Standerfrequenz f = fs + fm der Antriebsmotoren gebildet. Ein Kennlinien-Glied A(f) bildet daraus die Amplitude A, die im Multiplizierer M1 mit den Phasensignalen eines mit der Ständerfrequenz f gesteuerten Oszillators multipliziert wird, um daraus die gegeneinander phasenversetzten Sollwerte der drei Phasenspannungen der Antriebsmotoren M zu erhalten. Diese Phasenspannungen werden pulsbreitenmoduliert, indem aus den Schnittpunkten mit einer Sägezahnspannung, die in einem Generator GEN z.B. als Vielfaches der Ständerfrequenz f gebildet wird, in einem Steuersatz ST1 die Zündimpulse für die Ventile des motorseitigen Wechselrichters erzeugt werden.

Die Eingangsgleichspannung Ug dieses motorseitigen Wechselrichters wird durch die Steuerung des z.B. als Gleichrichter betriebenen einphasigen Pulswechselrichters DC über einen Spannungsregler CONT auf einem vorgegebenen Sollwert Ug* gehalten. Dazu wird am Netz (d.h. am Fahrdraht FS der FIG 3) die Netzspannung Un(t) abgegriffen, aus der in einer Filteranordnung FU die Frequenz $\omega_O$ und der Phasenwinkel $\phi(t) = \omega_O.t$ der Grundschwingung gebildet wird. Eine Frequenzverschiebung, die von Filteranordnung und anderen Bauelementen hervorgerufen wird, kann durch einen entsprechenden Phasendifferenz-Sollwert $d\phi$, der in Abhängigkeit von den am Spannungsregler abgegriffenen AmplitudenSollwert $U_O^*$ der Spannungsgrundschwingung in einem Kennlinienglied Ph gebildet wird, kompensiert werden. Der Multiplizierer M2 bildet entsprechend dem korrigierten Phasenwinkel $\phi(t) + d\phi$ einen Sollwert $U(t)^* = U_O^*.\sin(\phi(t)+d\phi)$ für die Spannungsgrundschwingung des Wechselrichters DC.

Dieser Sollwert $U^*(t)$ wird zur Steuerung des Pulswechselrichters DC verwendet.

Dazu werden vier auf die Frequenz $\omega_O$ abgestimmte, höherfrequente Sägezahnspannungen in einem Oszillator OSZ gebildet, die jeweils einem Einzel-Wechselrichter der FIG 3 zugeordnet sind.

Ein Steuersatz ST2 bildet aus den Schnittpunkten des Sollwertes $U^*(t)$ mit einer Sägezahnkurve bzw. der invertierten Sägezahnkurve die Schaltzeitpunkte zum Betätigen des Umschalters SA bzw. SB (FIG 1) des zugeordneten Einzel-Wechselrichters.

Aufgabe des Oberschwingungsfilters LCR ist, das Netz und andere, daran angeschlossene Geräte von Oberschwingungen zu entlasten, und gleichzeitig auch den eigenen Stromrichter vor Oberschwingungen, die im Netz wegen der anderen Geräte vorhanden sein können, zu schützen. Für die Stellerersatzspannung Us(t) zeigt FIG 8 das Oberschwingungsspektrum, das durch Fourieranalyse aus FIG 5 entsteht, und FIG 9 das entsprechende Spektrum der Spannung Un(t) am netzseitigen Filteranschluß, d.h. am Fahrdraht.

Daraus wird deutlich, daß bei leistungsstarken Stromrichtern das speisende Netz nicht als derart starr angesehen werden kann, daß alle Oberschwingungen bereits vom Filter aufgenommen werden und die Netzspannung nicht mehr beeinflussen. Wie z.B. aus der Praxis bei Hochspannungsgleichstromübertragungen oder bei Bahnnetzen bekannt ist, vermögen derartige Rest-Oberschwingungen, wie sie in FIG 9 dargestellt sind, das Netz noch derart zu belasten, daß empfindliche Geräte gestört werden, vor allem datenverarbeitende Steuergeräte, Sicherheitseinrichtungen, Fernmelde- und Signalanlagen, die am oder in der Nähe des Netzes installiert sind. Derartige Probleme treten nicht nur beim Betrieb von Gleichrichtern an Wechselspannungsnetzen, sondern z.B. auch bei Gleichstromstellern an Gleichspannungsnetzen auf.

So ist z.B. in der deutschen Offenlegungsschrift 29 44 334 vorgeschlagen, im netzgespeisten Gleichstromsteller eines U-Bahn-Triebwagens von einer Stellerfrequenz auf eine andere Stellerfrequenz umzuschalten, wenn die vom Steller und dem nachfolgenden maschinenseitigen Wechselrichter des Triebwagens ins U-Bahn-Gleichstromnetz rückgespeiste Störspannung in einen Frequenzbereich gerät, der für die Sicherheitsanlagen der U-Bahn kritisch ist.

Es handelt sich also bei dieser Umschalteinrichtung um eine besonders einfache Art eines "Optimierungsrechners", der aus vorgegebenen, kritischen Frequenzbereichen derartige Steuersignale für den Steller abgibt, daß diese kritischen Frequenzen im Netz nicht angeregt werden. Als Optimierungskriterium dient in diesem Fall die minimale Anregung der kritischen Frequenzen, auf die das Netz und im Netzbereich installierte Geräte besonders empfindlich ist.

Es ist üblich, die Empfindlichkeit auf Oberschwingungen durch eine Empfindlichkeitsfunktion, den sogenannten "psophometrischen Faktor", zu beschreiben. Der ins Netz rückgespeiste Oberschwingungsstrom des Stromrichters wird dann mit diesem Faktor gewichtet (psophometric weighting), um nachfolgend eine Auswertung zwischen kritischen und unkritischen Oberschwingungen durchführen zu können und geeignete, unkritische Pulsmuster auszuwählen.

Diesen durch diese Bewertung erhaltenen "psophometrischen Störstrom" z.B. im Stromabnehmer einer Lokomotive als Maß für die Störbeeinflussung durch den Stromrichter heranzuziehen, ist zwar üblich, jedoch unzureichend. Für die Störbeeinflussung tatsächlich maßgebend ist nämlich nicht der vom Stromrichter selbst eingespeiste Oberschwingungsstrom, bei einer Lokomotive also der Strom im Stromabnehmer, sondern der im Netz selbst auftretende Oberschwingungsstrom, d.h. der Strom im Fahrdraht. Außerdem ist nicht der Oberschwingungsstrom des Netzes am Ort seiner Einspeisung maßgebend, wo er im Fall eines Triebfahrzeuges schon aus praktischen Gründen nicht meßbar ist, sondern dieser Netz-Oberschwingungsstrom müßte an allen den Orten, an denen kritische Geräte vorhanden sind, gemessen und dem Stromrichter zur Bestimmung des optimalen Pulsmusters gemeldet werden. Die vom Stromrichter angeregten Oberschwingungen breiten sich im Netz nämlich entsprechend der jeweiligen Konfiguration des Netzes und der anderen, daran angeschlossenen Verbraucher aus und können an den verschiedenen Orten des Netzes zu ganz unterschiedlichen Resonanzerscheinungen führen. Daher wären häufig wesentlich größere Oberschwingungsströme am netzseitigen Stromrichteranschluß zulässig, falls in deren Spektrum die jeweils resonanzanregenden Komponenten fehlen würden. Umgekehrt kann ein vom Stromrichter eingespeister, relativ niedriger Oberschwingungsstrom in bestimmten Netzteilen zu erheblichen Stromresonanzen und Stromüberhöhungen führen.

Ist die Konfiguration des Netzes hinreichend genau bekannt, so kann dessen Verhalten durch Systeme partieller Differentialgleichungen beschrieben werden, wie dies z.B. von J.Holtz und H.-J.Klein beschrieben ist ("The propagation of harmonic currents generated by inverter-fed locomotives in the distributed overhead supply system" European Conference on Power Electronics and Applications, EPE Grenoble (1987), Seite 1239 - 1244).

FIG 10 zeigt eine Konfiguration, bei der an den Orten xa, xb, xc und xd entsprechende Unterwerke in einen Fahrdraht einspeisen und sich an den Orten xe und xf Triebfahrzeuge befinden, die über ihre Stromabnehmer an den Fahrdraht angeschlossen sind. Die Figuren 11 und 12 zeigen den Effektivwert der Oberschwingungen von Spannung und Strom längs des Fahrdrahtes.

Aus FIG 11 erkennt man, daß die von den Lokomotiven in den Fahrdraht eingespeiste Störspannung zu einem Störstrom führt, der sich über den Fahrdraht ausbreitet und nur teilweise über die nächste Anschlußstelle (Lokomotive oder Unterwerk) abfließt. Für die von diesem Teil des Störstromes angeregten Frequenzen wirken also die anderen Stromrichter des Netzes bereits als Dämpfung, was einen niedrigen Wechselstromwiderstand (Impedanz) des Netzes für den eingespeisten Störstrom dieser Frequenz bedeutet.

Ein Teil des Störstromes breitet sich aber über das ganze Netz aus und regt Strom und Spannung zu stehenden Wellen an, die nur von dem längs des ganzen Netzes verteilten Widerstand des Fahrdrahtes gedämpft werden können. Im Resonanzfall kann das Netz nicht mehr Energie aufnehmen, als im Fahrdraht selbst verbraucht wird, das Netz besitzt daher für diese Frequenzen ein Maximum der Impedanz.

Eine Reihenschaltung aus einem Widerstand R, einer Induktivität L und einer Kapazität C besitzt die Impedanz

$$Z = \sqrt{R^2 + (\omega L - 1/\omega.c)^2}$$

die bei der Frequenz

$$\omega_i = \sqrt{\frac{1}{LC} - \frac{R^2}{4L^2}}$$

ein Minimum besitzt. Frequenzen, für die das Netz sich wie ein Reihenschwingkreis verhält, sind also für die Ausbreitung stehender Wellen unkritisch. Werden jedoch Induktivität und Kapazität parallel geschaltet, so besitzt die Impedanz für diese Frequenz ein Maximum ("Parallelschwingkreis"). Ein derartiges Verhalten des Netzes ist kritisch.

Die Ausbildung stehender Wellen und deren Frequenzen sind sowohl von der räumlichen Konfiguration des Netzes, insbesondere also auch dem Ort der jeweiligen Stromrichter, wie auch von den Betriebszuständen der Stromrichter selbst abhängig. Da sich diese Parameter aber zeitlich ständig verändern können, kann man von vornherein keine bestimmte, zeitlich konstante Frequenz angeben, auf deren Unterdrückung das Pulsmuster eines Stromrichters ausgelegt werden müßte, um Resonanzen im Netz auszuschließen.

Kommt es infolge der Resonanzanregung zu lokalen Spannungsüberhöhungen, so müssen auch für Geräte, die keinen Frequenzbereich besitzen, in dem sie besonders oberschwingungsgefährdet sind, Störungen erwartet werden. Daß dies auftreten kann, ergibt sich aus Spannungsüberschlägen, die an elektrischen Einrichtungen im Bereich von Bahnnetzen bereits beim Betrieb von Triebfahrzeugen mit Pulsstromrichtern ohne vorgeschaltete Oberschwingungsfilter beobachtet worden sind. Durch die Installation eines entsprechendes Oberschwingungsfilters kann sich aber das Gewicht einer Lokomotive um nahezu eine Tonne erhöhen, was wiederum ungünstige Auswirkungen auf die räumliche und mechanische Konstruktion der Lokomotive hat.

Ferner ist es wünschenswert, daß auch Oberschwingungen niedriger Ordnungszahl nur schwach angeregt werden, da diese von einem Oberschwingungsfilter nicht gedämpft werden können. Derartige niederfrequente Oberschwingungen treten aber auch bei festen Impulsmustern, die an sich nur höhere Oberfrequenzen enthalten, immer dann auf, wenn in der Steuerung der Stromrichter Unsymmetrien vorliegen. Ferner kann es beim Betrieb von Fahrzeugen vorkommen, daß nur ein Drehgestell angetrieben und dann das eigene Oberschwingungsfilter abgeschaltet werden muß, um eine Überlastung zu vermeiden.

Aus FIG 11 erkennt man, daß selbst in entfernteren Netzabschnitten noch erhebliche Resonanzströme aufteten können. Befinden sich mehrere Triebfahrzeuge in einem gleichen oder benachbarten Netzabschnitt, so kommt es zu einer gegenseitigen Beeinflussung, bei der zwischen den beteiligten Fahrzeugen hohe Störströme ausgetauscht werden.

Diese Nachteile erzeugen den Wunsch, den Stromrichter so zu steuern, daß die Spektralkomponenten der von ihm in das ausgedehnte Versorgungsnetz eingespeisten Oberschwingungsströme nicht mit den Eigenfrequenzen des Netzes zusammenfallen. Dadurch kann erreicht werden, daß die Gefährdung von Anlagenteilen des Netzes durch Resonanzüberspannungen vermieden, die Störung von Signal- und Fernmeldesystemen im Netzbereich vermindert, die gegenseitige Beeinflussung von mehreren am gleichen Netz betriebenen Stromrichtern verhindert und die Baugröße von Oberschwingungsfiltern im Hochspannungsteil der Stromrichter verringert bzw. ein derartiges Filter überflüssig gemacht wird.

Um dies zu erreichen, könnten an sich die an das Netz angeschlossenen Ventile des Stromrichters nach einem Optimierungsverfahren gesteuert werden. Die für die Optimierung erforderliche Zielfunktion ist jedoch von der jeweiligen aktuellen Konfiguration des Netzes und der daran angeschlossenen Verbraucher abhängig und ändert sich ständig. Daher sind die erwähnten off-line-Verfahren der Optimierung nicht anwendbar.

Vielmehr ist eine Optimierung erforderlich, die an momentannen Resonanzeigenschaften des tatsächlichen Netzes angepaßt ist.

Der Erfindung liegt die Aufgabe zugrunde, für die Betätigung der Schaltelemente eines an ein Netz angeschlossenen Stromrichters optimale Schaltzeitpunkte zu ermitteln, damit im Netz störende Oberschwingungen nur mit einer möglichst geringen Amplitude auftreten.

Gemäß Anspruch 1 wird zur Lösung dieser Aufgabe während des Betriebes des Stromrichters (also "on line") zumindest für die Harmonischen, die in elektrischen Größen zwischen Netz und Stromrichter momentan auftreten, wenigstens die Beträge des Fourierkoeffizienten der momentanen Impedanz oder des momentanen Leitwerts im Bereich von Maxima oder Minima durch geeignete Meßgrößen erfaßt. Vorteilhaft werden mit vergleichbarem Software-Aufwand für alle Harmonischen bis zu einer vorgegebenen Ordnung die komplexen Fourierkoeffizienten einer der Impedanz äquivalenten Übertragungsfunktion "on line" erfaßt. Die Zündwinkel für den Betrieb des Stromrichters werden dann (ebenfalls "on line") nach einem vorgegebenen Optimierungskriterium für ein virtuelles System errechnet, bei dem das andere Stromrichter angeschlossene Netz durch ein virtuelles Modell ersetzt ist. Das virtuelle Modell ist durch die Meßgrößen bestimmt und simuliert das Netz wenigstens in dem Maß, daß die Frequenzabhängigkeit des Betrags der Impedanz oder des Leitwertes des Modells im Bereich der Maxima oder Minima mit den Beträgen der erfaßten Fourierkoeffizienten übereinstimmt.

Liegt ein Wechselrichter mit eingeprägtem Gleichstrom vor, so werden durch das Betätigen der Schaltelemente am Wechselstrom-Aus-gang Strompulse erzeugt, deren Flanken durch die Schaltzeitpunkte bestimmt und steuerbar sind, während die Pulsamplitude vom Gleichstrom bestimmt und praktisch von den Schaltzeitpunkten unabhängig ist. Die Schaltzeitpunkte legen einen Betriebszustand fest, bei dem der Wechselstrom eine Funktion der Schaltzeitpunkte ist, während sich die Wechselspannung entsprechend der Belastung im Netz frei einstellt. Bevorzugt befaßt sich die Erfindung aber mit spannungseinprägenden Umrichtern. In diesem Fall werden an der Anschlußstelle des Stromrichters dem Netz Spannungsoberschwingungen eingeprägt und sowohl der ins Netz eingespeiste Strom als auch ein im Netz angeregter Oberschwingungsstrom stellt sich frei ein.

Allgemein wird also aufgrund der Schaltzeitpunkte und des entsprechenden Betriebszustands des Stromrichters ein Strom ins Netz eingespeist, der Oberschwingungen enthält, die entsprechende Oberschwingungen von Strom und Spannung im Netz anregen können.

Die anregenden Oberschwingungen in der eingeprägten Ausgangsgröße des Stromrichters sind daher zwar aus den Steuersignalen für die Schaltelemente bestimmt und errechenbar, aber die Resonanzerscheinungen im Netz hängen davon ab, ob im räumlich verteilten Netz stehende Wellen angeregt werden.

Die Anregung tritt auf, wenn die Oberschwingungen der eingeprägten elektrischen Größe in Nähe von Eigenfrequenzen des Netzes liegen. Diese Eigenfrequenzen des Netzes sind aber vor allem bei ausgedehnten Netzen und/oder bei Netzen, bei denen andere Geräte mit wechselnden Betriebszuständen angeschlossen sind, weitgehend unbekannt. Besonders vorteilhaft kann die Erfindung bei mobilen Stromrichtern angewendet werden, d.h. wenn der Anschlußpunkt des betrachteten Stromrichters sich örtlich ändert, wie dies bei einer über einen Stromrichter am Netz angeschlossenen Lokomotive der Fall ist.

Die Erfindung geht dabei davon aus, daß es für den optimalen Betrieb eines zwischen einem Netz und einer Last angeordneten Stromrichters nicht genügt, das Frequenzspektrum in der eingeprägten Ausgangsgröße des Wechselrichters nur im Hinblick auf die Last und den Stromrichter selbst zu optimieren, ohne auf die momentanen Eigenfrequenzen des Netzes Rücksicht zu nehmen.

Vielmehr wird zur Lösung der Aufgabe vorgeschlagen, von einem virtuellen Ersatzschaltbild auszugehen. Dieses wird durch Meßgrößen für die momentane Übertragungsfunktion (Impedanz oder Leitwert) des Netzes festgelegt und besteht aus einer endlichen Anzahl von Schwingkreisen, die jeweils nur einen Widerstand, eine Induktivität und eine Kapazität enthalten. Diese Schwingkreis-Parameter werden so bestimmt, daß die sich für das Ersatzschaltbild ("virteulles Modell") ergebende Übertragungsfunktion zumindest im Bereich der Resonanzfrequenzen an die Übertragungsfunktion des Netzes angepaßt ist.

Am netzseitigen An-schluß des Stromrichters können daher zwei unterschiedliche elektrische Größen fortlaufend erfaßt werden, aus denen durch Fourier-Transformation eine gemessene Übertragungsfunktion bestimmt wird. So kann z.B. am Abgriff, der den Stromrichter mit dem Netz verbindet, Strom und Spannung gemessen und dadurch für jede Oberfrequenz die Eingangsimpedanz (d.h. der Quotient der Oberschwingungsamplituden der Netzspannung und des in das Netz eingespeisten Stromes) bestimmt werden. Ist der Stromrichter über ein Bandpaßfilter oder ein anderes Impedanzelement an das Netz angeschlossen, so kann durch Messung der Spannungen an den beiden Enden des Impedanzelementes eine Übertragungsfunktion bestimmt werden, die auch die Eigenfrequenzen des Netzes enthält.

Für diese Eigenfrequenzen und deren Anregung im Netz kann die Energieaufnahme während des Stromrichterbetriebs durch das aus fiktiven Schwingkreisen aufgebaute virtuelle Modell simuliert werden. Es wird dann ein virtueller Betrieb betrachtet, bei dem die Ausgangsgrößen des Stromrichters nicht ans tatsächliche Netz, sondern nur rechnerisch ("virtuell") an das virtuelle Modell gekoppelt sind. Der durch Fourier-Transformation gemessenen Übertragungsfunktion der tatsächlichen elektrischen Größen entspricht dann eine Modell-Übertragungsfunktion des Modells, die allein durch die Parameter für Impedanz, Kapazität und Widerstand der Schwingkreise bestimmt ist. Die zunächst unbekannten Parameter der Schwingkreise können durch Annäherung der Modell-Übertragungsfunktion an die gemessene Übertragungsfunktion festgelegt werden, wie dies in der Anmeldung "Verfahren und Vorrichtung zur Erfassung von Resonanzmeßgrößen eines an einen Stromrichter angeschlossenen Netzes" des gleichen Anmelders beschrieben und in dieser Anmeldung als bevorzugte Möglichkeit zum Bestimmen des Modelles mit beansprucht ist.

Das Modell gestattet es, für die Schaltzeitpunkte des Stromrichters beliebige Werte vorzugeben und den entsprechenden fiktiven Anregungszustand des virtuellen Modells zu berechnen. Im Modell würden annähernd die gleichen Eigenfrequenzen auftreten und angeregt werden wie im tatsächlichen Netz, falls die Schaltelemente des Stromrichters zu diesen beliebig gewählten, "fiktiven" Schaltzeitpunkten betätigt würden.

In diesem Betriebszustand wäre also im Modell annähernd die gleiche Energie gespeichert wie im Netz. Im Netz würde also die gleiche Energie gespeichert (also auch die gleiche Oberschwingungsamplitude auftreten), wie in den Schwingkreisen des Ersatzschaltbildes.

Wird also der Stromrichter am Netz zunächst mit vorgegebenen Startwerten für die Schaltzeitpunkte betrieben, so kann mittels des Modelles eine Zielfunktion aufgestellt werden, die auch für andere Schaltzeitpunkte den Anregungszustand des tatsächlichen Netzes wiedergibt. Aus der mathematischen Abhängigkeit dieser Zielfunktion von diesen Schaltzeitpunkten kann ein Anregungszustand errechnet werden, bei dem diese Zielfunktion ein Optimierungskriterium erfüllt. Z.B. können diejenigen Werte der Schaltzeitpunkte gefunden werden, bei denen die im Modell gespeicherte Energie oder der in den Schwingkreisen fließende Strom ein Minimum aufweist. Um diese optimierten Schaltzeitpunkte aus der Zielfunktion zu berechnen, können mathematische Methoden (insbesondere der Variationsrechnung) angewendet werden.

Durch die optimierten Werte der Schaltzeitpunkte sind dann die Schaltzeitpunkte des neuen Betriebszustandes für den Wechselrichter festgelegt. Die Schaltelemente des Wechselrichters werden daher zu den durch die optimierten Werte festgelegten Zeitpunkten betätigt.

Für das Auffinden eines Extremums der Zielfunktion braucht an sich nur deren funktionale Abhängigkeit von den Schwingkreisparametern und den Schaltzeitpunkten bekannt zu sein. So kann es genügen, nur die mathematische Ableitung der Zielfunktion nach den virtuellen Schaltzeitpunkten, also z.B. die Änderung der in den Schwingkreisen gespeicherten Energie, jeweils in Abhängigkeit von einer virtuellen Änderung der Schaltzeitpunkte zu berechnen. Der optimale Wert dieses Schaltzeitpunktes ist dann durch die Nullstelle dieser Ableitung bestimmt. Von der verwendeten Methode zur Nullstellen-Berechnung hängt es ab, ob dabei jeweils für veränderte Schaltzeitpunkte auch der entsprechend veränderte Wert der Zielfunktion errechnet werden muß.

Bevorzugt wird für die Bestimmung der optimierten Schaltzeitpunkte jeweils ein Schaltzeitpunkt nach dem anderen optimiert. Dabei wird zunächst aus vorangegangenen Schaltzeitpunkten bzw. aus dem entsprechenden Betriebszustand des Modells oder des Netzes, die im Netz bereits gespeicherte Energie bestimmt. Außerdem wird aus den Modellparametern für bestimmte Zeitpunkte der Stromvorausberechnet, der dem Modell zugeführt wird, wenn zu diesen Zeitpunkten ein Schaltelement betätigt wird. Dabei wird überprüft, ob die Energie bzw. der Strom in den Schwingkreisen zunimmt oder abnimmt.

Anspruch 4 gibt die entsprechenden Merkmale des Verfahrens und Anspruch 12 die allgemeinen Merkmale der erfindungsgemäßen Vorrichtung wieder.

Vorteilhafte Weiterbildungen der Erfindung sind in den Unteransprüchen gekennzeichnet und werden anhand von Ausführungsbeispielen und weiteren Figuren näher erläutert. Es zeigen:

| | |
|---|---|
| FIG 1 und 2 | einen bereits erläuterten Vierquadranten-Steller und seine Anschlußspannung Un(t) als erstes Beispiel eines Stromrichters, |
| FIG 3 und 4 | den bereits beschriebenen Leistungsteil eines Lokomotiven-Antriebs als bevorzugtes Beispiel eines Stromrichters und dessen Ersatzschaltbild, |
| FIG 5 und 6 | den bereits erläuterten Verlauf der Stromrichter-Anschlußspannung und des dabei auftretenden Oberschwingungsstroms, |
| FIG 7 | die bekannte Steuerung des Stromrichters, |
| FIG 8 und 9 | das Fourier-Spektrum der Spannung in FIG 5 und der dabei auftretenden Fahrdrahtspannung, |
| FIG 10 bis 12 | eine Fahrstrecke der in FIG 3 beschriebenen Lokomotive und die örtliche Amplitude der dabei auftretenden Oberwellen von Spannung und Strom, |
| FIG 13 und 14 | Ersatzschaltbilder zu FIG 3 unter Verwendung verschiedener Modelle, |
| FIG 15 | eine schematische Darstellung der Erfindung und ihrer Anwendung auf die Anordnung nach FIG 3, |
| FIG 16 | einen mit Rechenfehlern behafteten Quotienten von Fouriertransformierten, |
| FIG 17 und 18 | die beiden Fouriertransformierten für den Quotienten der FIG 16, |
| FIG 19 und 20 | ein Unterprogramm zur Bereinigung von Rechenfehlern und das entsprechend bereinigte Spektrum der FIG 16, |
| FIG 21 bis 23 | Unterprogramme zur Ermittlung der Resonanzfrequenz und Halbwertsbreite und deren Erläuterung, |
| FIG 24 und 25 | eine Impedanzfunktion mit einem Maximum und deren Darstellung durch einen Modell-Schwingkreis, |
| FIG 26 und 27 | eine Impedanzfunktion mit drei Maxima und eine darin enthaltene für eine Resonanzfrequenz isolierte Impedanzfunktion, |
| FIG 28 und 29 | zwei aus dem bereinigten Spektrum der FIG 20 gewonnene Spektren, die jeweils für eine Resonanzfrequenz isoliert wurden, |
| FIG 30 | die aus dem Netzmodell ermittelte und dem Impedanzspektrum der FIG 20 angenaherte Modell-Übertragungsfunktion, |
| FIG 31 und 33 | den on-line-berechneten Impedanzverlauf eines Netzes bei stochastischer Anregung und Anregung durch den Stromrichter einer Lokomotive, der die in FIG 32 dargestellte Oberschwingungsspannung erzeugt, |
| FIG 34 | die Bildung eines Phasors zur Beschreibung des virtuellen Stromes im Netzmodell, |
| FIG 35 bis 37 | für die Berechnung optimierter Schaltzeitpunkte verwendete Programme zur virtuellen Variation, |
| FIG 38 | das dadurch erhaltene Pulsmuster der Stromrichter-Anschlußspannung, |
| FIG 39 und 40 | das Spektrum der Stromrichter-Anschlußspannung und der Netzspannung nach der Erfindung zum Vergleich mit FIG 8 und 9, |
| FIG 41 | den dabei fließenden Störstrom, |
| FIG 42 | die Verteilung von Störstrom und Störspannung über den Fahrdraht bei der Erfindung im Vergleich zu FIG 11 und FIG 12, |

| FIG 43 | eine sinusförmige Sollspannung und die bei einem mehrstufigen Pulswechselrichter verfügbaren Spannungsniveaus, |
| FIG 44 | einen vorteilhaften Verlauf eines Grenzwertes zur Bestimmung der Schaltzeitpunkte nach dem Integralwertverfahren bei einem mehrstufigen Pulswechselrichter, |
| FIG 45 | entsprechende Grenzwert-Verläufe für die Bestimmung des.Variationsintervalles bei einer virtuellen Variation der Schaltzeitpunkte, |
| FIG 46 | den Programmverlauf bei der Variation nach dem Integralwertverfahren, |
| FIG 47 und 48 | die dabei entstehende Pulsmuster-Ausgangsspannung für die einzelnen Steller der Schaltung und den gesamten Stromrichter, |
| FIG 49 | den dabei auftretenden Störstrom, |
| FIG 50 und 51 | das Frequenzspektrum der Spannungen im Vergleich zu FIG 8 und FIG 9 bzw. FIG 39 und FIG 40 |
| FIG 52 | die Verteilung von Störstrom und Störspannung im Vergleich zu FIG 10 bis 12 bzw. FIG 42. |

Gemäß der Erfindung besteht der erste Schritt im Auffinden der Parameter des virtuellen Netzmodelles, dessen Resonanzverhalten zumindest für diejenigen Resonanzfrequenzen des Netzes, die zwischen dem Abgriff am Netz und dem Stromrichteranschluß in erfaßbaren, elektrischen Größen auftreten, mit dem Resonanzverhalten des tatsächlichen Netzes übereinstimmt.

Mittels dieser Modellparameter werden dann Pulsmuster errechnet, die das Netzmodell nicht oder nur schwach anzuregen oder sogar zu dämpfen vermögen. Mit diesen "on-line" errechneten Pulsmustern wird dann der Stromrichter betrieben.

Der erste Schritt kann insbesondere so vorgenommen werden, wie es in der Anmeldung "Verfahren und Vorrichtung zur Erfassung von Resonanzmeßgrößen eines an einem Stromrichter angeschlossenen Netzes" des gleichen Anmelders beschrieben ist. Demnach werden also vorteilhaft am Ort des Stromrichters (genauer: zwischen seinem netzseitigen Anschluß und dem Abgriff am Versorgungsnetz) zwei unterschiedliche elektrische Größen erfaßt. Diese Erfassung erfolgt fortlaufend - oder zumindest ununterbrochen während einer Periode einer vorgegebenen Grundfrequenz. Die eine elektrische Größe wird aufgefaßt als eine Anregung des Netzes, die vom Stromrichter und dessen Pulsmuster abhängig ist. Die andere elektrische Größe liefert dann Meßwerte für die im Netz angeregten Oberschwingungen.

Für die beiden elektrischen Größen wird gemäß der Erfindung eine Übertragungsfunktion in Abhängigkeit von den in der anregenden Größe enthaltenen Frequenzen gebildet. Diese Übertragungsfunktion kann durch Fourier-Transformation beider Größen und anschließende Division der Fourier-Transformimerten gewonnen werden. Es sind aber auch andere Möglichkeiten durchführbar. Z.B. kann eine Funktion mit geschätzten Koeffizienten angesetzt werden, wobei die geschätzten Koeffizienten durch einen iterativen Algorithmus, der einem Vergleich errechneter Werte mit gemessenen Werten entspricht, korrigiert werden. Diese Funktion ist dann gleichwertig mit dem Quotienten der Fourier-transformierten Meßgrößen Für jede Frequenz gibt dieser Quotient einen Meßwert für die Anregung des Netzes wieder.

An diese "gemessene" Übertragungsfunktion wird anschließend die Übertragungsfunktion eines virtuellen Modelles angenähert, das durch eine endliche Anzahl von Schwingkreisen dargestellt werden kann. Ein derartiger Schwingkreis besitzt jeweils einen Parameter-wert für seine Induktivität, Kapazität und Widerstand. In diesen Parametern sind dann die Resonanzeigenschaften des tatsächlichen Netzes konzentriert. Die Verschaltung dieser "konzentrierten" Elemente kann z.B. als Reihenschwingkreis oder als Parallelschwingkreis vorgenommen sein.

In die Übertragungsfunktion des Modells gehen die "konzentrierten" Elemente als Parameter ein, die durch die Annäherung an die aus den Meßwerten gewonnene tatsächliche Übertragungsfunktion praktisch meßbar werden. Diese Parameter geben daher die Resonanzeigenschaften des Netzes in einer geeigneten Form wieder und können als entsprechende Meßgrößen ausgegeben werden.

Das Netzmodell selbst braucht gar nicht in Hardware oder Software nachgebildet zu werden, vielmehr genügt es, daß die angenäherte Übertragungsfunktion lediglich der Übertragungsfunktion eines aus Schwingkreisen aufgebauten virtuellen Netzwerkes derart entspricht, daß der Übertragungsfunktion die charakteristischen Größen dieses virtuellen Modelles, insbesondere Anzahl, Frequenz, Halbwertsbreite und Dämpfung der Resonanzfrequenzen entnommen werden können. Diesen Größen entsprechen dann Anzahl, Widerstände, Kapazitäten und Impedanzen der Schwingkreise.

Die Fourier-Transformation der anregenden und der angeregten elektrischen Größe liefert Signale, die für jede Oberschwingung der Ordnung n die Oberschwingungsamplitude und die Phasenlage bestimmen.

Die Europäische Patentschrift 106 022 zeigt in FIG 9 eine an einem Netz angeschlossene Hardware-Schaltung, die letztlich als ein Bandpaßfilter mit einer Phase-locked-loop-Schaltung wirkt und für eine Grundschwingungsperiode, die für die Steuerung eines Stromrichtergerätes vorgegeben ist und am angeschlossenen Netz selbst bestimmt werden kann, die Amplitude und Phasenlage der Grundschwingung eines skalaren Meßwertes bestimmt.

Diese Schaltung kann also auch hier benutzt werden, um die Grundschwingungsperiode festzulegen und z.B. die Strom- oder Spannungsgrundwelle hinsichtlich Amplitude und Phasenlage zu bestimmen. Nach FIG 10 dieser Patentschrift kann dieses Meßverfahren auch für Drehstromsysteme angewendet werden, und es kann, wie die Europäische Patentschrift 97 958, FIG 5, 6 und 8 zeigt, für Ströme oder Spannungen eingesetzt werden, um für eine vorgegebene Ordnung k die entsprechende Oberschwingungsamplitude und -phase zu bestimmen.

Um z.B. Oberwellen bis zur Ordnung 300 zu erfassen, sind bei dieser Hardware-Lösung entsprechend vieler derartiger Schwingungsanalysen nötig. Im folgenden wird die Übertragungsfunktion in Software ermittelt und nur für Störgrößen betrachtet, die aus den ermittelten elektrischen Größen durch Subtraktion der entsprechenden Grundschwingung entstehen.

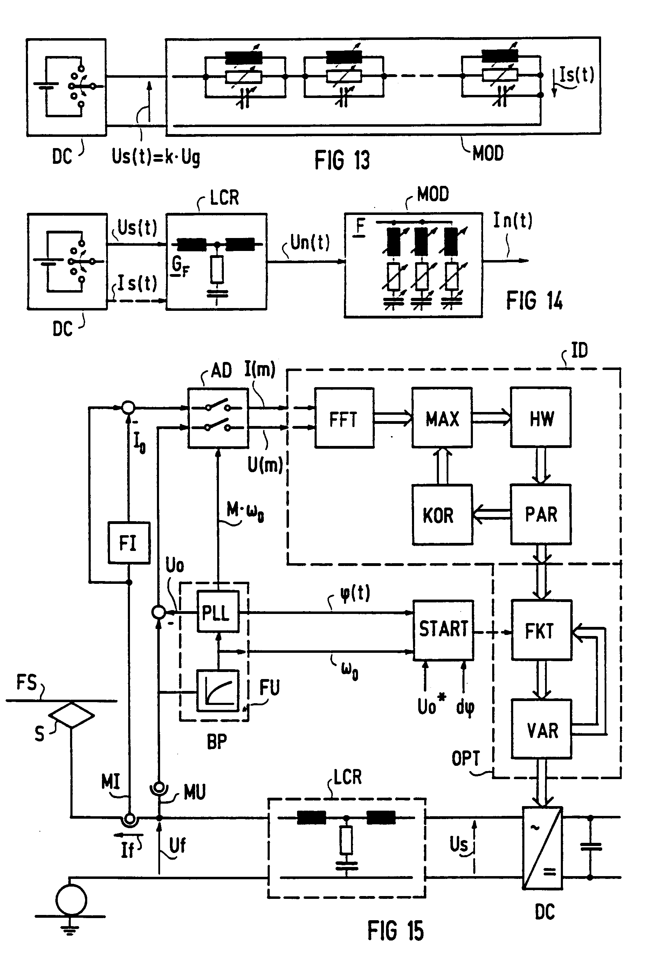

Als anregende und angeregte elektrische Größe können die Störspannung Us(t) und der Störstrom Is(t) direkt am Anschluß des Stromrichters verwendet werden (z.B. weil ein Oberschwingungsfilter zwischen dem Stromrichter und dem Anschluß des Netzes gar nicht vorhanden ist oder weil das Filter in die Betrachtung der Resonanzfrequenzen einbezogen werden soll). Betrachtet man nur die Eigenresonanzfrequenzen des Netzes, die als kritische Frequenzen ermittelt werden sollen, so ergibt sich für die Oberschwingungen von Strom und Spannung ein in FIG 13 gezeigtes geeignetes Ersatzschaltbild. Jede kritische Resonanzfrequenz entspricht dabei der Resonanz eines Reihenschwingkreises.

Der als Stromrichter betrachtete Steller DC ist dabei nach Art eines Mehrpunkt-Wechselrichters als eine Gleichspannungsquelle mit stufenweise einstellbarer Ausgangsspannung $U_s(t)$ dargestellt. Die Spannung ergibt sich dabei durch die Ansteuerung der Stromrichterventile und kann daher aus dem Pulsmuster und der eingeprägten Gleichspannung des Stellers berechnet werden.

Anstelle einer derartigen errechneten Stellerersatzspannung kann aber auch die Anschlußspannung selbst gemessen werden.

Die Fouriertrans formation der erfaßten zeitabhängigen Werte von Strom und Spannung liefert jeweils komplexe Zahlen $\underline{Is}(\omega_n)$ und $\underline{Us}(\omega_n)$ zur Darstellung der Oberschwingung mit der Frequenz $\omega_n$. Für die vom Steller erzeugten Oberschwingungen stellt das anschlußseitige Netzwerk ein schwingungsfähiges Gebilde dar, dessen Übertragungsfunktion

$$\underline{Z}(\omega_n) \;=\; \frac{\hat{U}s(\omega_n) \cdot \exp\,(j(\omega_n \cdot t - \varphi_u))}{\hat{I}s(\omega_n) \cdot \exp\,(j(\omega_n \cdot t - \varphi_i))} \;=\; \frac{\underline{U}s(\omega_n)}{\underline{I}s(\omega_n)}$$

für jede Oberschwingungsfrequenz $\omega_n$ sowohl das Verhältnis der Scheitelwerte $\hat{I}s(\omega_n)$ und $\hat{U}s(\omega_n)$ von Oberschwingungs-Strom und -Spannung, wie auch deren relative Phasenverschiebung angibt. Daher ist $\underline{Z}(\omega_n)$ eine komplexe Funktion der Frequenz $\omega_n$, die die spektrale Verteilung der Impedanz darstellt. Deren Betrag hat Maxima bei Frequenzen, bei denen eine Parallelresonanz im Netzwerk auftritt.

Bezüglich dieser Resonanzfrequenzen kann also die unbekannte Konfiguration des Netzes durch ein virtuelles Modell Mod nach FIG 3 ersetzt werden, dessen Übertragungsfunktion im Bereich der Impedanzmaxima hinreichend genau auf die gemessene Übertragungsfunktion $Z(\omega_n)$ abgeglichen werden kann.

In FIG 13 tritt immer dann ein Impedanzmaximum auf, wenn einer der hintereinander geschalteten Parallelschwingkreise in Resonanz gerät und daher die Stromrichter-Anschlußspannung $U_s(t)$ im wesentlichen an diesem Schwingkreis abfällt. Sollen also im tatsächlichen Netz keine Parallelresonanzen auftreten, so sollte ein optimales Pulsmuster gesucht werden, dessen Frequenzspektrum keine Frequenzen enthält, die im Resonanzfrequenz-Bereich eines der Schwingkreise des Netzmodells liegen.

Die Anzahl der Maxima in der tatsächlichen ("gemessenen") Übertragungsfunktion ergibt daher die Zahl der für das Netzmodell erforderlichen Schwingkreise. Frequenz, Amplitude und Halbwertsbreite bestimmen dabei die konzentrierten Parameter des Modells und beschreiben gleichzeitig das Resonanzverhalten des Netzes. Sie können daher als Meßgrößen der gemessenen Übertragungsfunktion entnommen und in einer geeigneten Zielfunktion für die Optimierung verwendet werden.

Ist an das Netz z.B. ein Wechselrichter mit vorgegebenem Eingangsgleichstrom angeschlossen, dessen Pulsmuster daher den Oberschwingungsstrom $I_s(t)$ einprägt, so kann als Kriterium für die Optimierung des Pulsmusters gefordert werden, daß die Summe der Spannungsabfälle an den Ersatzschwingkreisen - summiert über alle Stromoberschwingungen des Pulsmusters - minimal ist.

EP 0 491 689 B1

Da im Fall der Parallelresonanz in den Elementen des resonanten Schwingkreises hohe Ströme fließen, die den von außen eingespeisten Strom erheblich überschreiten können, kann als Zielfunktion einer Optimierung auch die Summe dieser Schwingkreisströme oder die von den Schwingkreisen aufgenommene Energie verwendet werden. Die Optimierung liefert dann ein Pulsmuster, bei dem der Wert dieser Zielfunktion optimal, also z.B. die Stromsumme oder die aufgenommene Energie minimal ist.

Auf diese Weise kann der Stromrichter betrieben werden, ohne im Netz wesentliche Parallelresonanzen anzuregen.

Bekanntlich kann eine Reihenschaltung von Impedanzen in eine äquivalente Parallelschaltung überführt werden, wobei sich die Dimensionierung der Impedanzelemente ändert. FIG 14 zeigt ein Ersatzschaltbild zu FIG 3, bei dem das Netz durch eine Parallelschaltung von Reihenschwingkreisen dargestellt ist. Eine derartige Darstellung ist vor allem für Spannungseinprägende Stromrichter vorteilhaft, da die Netzspannung $U_n(t)$ dabei an allen Reihenschwingkreisen gleichermaßen anliegt und die Aufstellung einer von dem Pulsmuster abhängigen Zielfunktion (z.B. die Berechnung der oben erwähnten Stromsumme oder der aufgenommenen Energie) erleichtert.

In diesem Fall kann wieder für jeden Reihenschwingkreis des Modells die Dimensionierung der konzentrierten Elemente aus einem zugehörigen Maximum der Übertragungsfunktion entnommen werden. Als Übertragungsfunktion wird am einfachsten in diesem Fall die Leitwertfunktion

$$\underline{F}(\omega_n) \;=\; \frac{\underline{I}n(\omega_n)}{\underline{U}n(\omega_n)}$$

ermittelt. In Fig. 14 sind dabei Strom und Spannung am Abgriff des Netzes die beiden elektrischen Größen, aus deren Meßwerten $I_n(t)$ und $U_n(t)$ durch Fouriertransformation die Größen $\underline{I}_n(\omega_n)$ und $\underline{U}_n(\omega_n)$ zur Bestimmung von $\underline{F}(\omega_n)$ gebildet werden können.

Tritt also bei der Frequenz $\omega_n = \omega_i$ ein Maximum in der Impedanz $Z(\omega_n)$ bei FIG13 bzw. im Leitwert F-$(\omega_n)$ bei FIG 14 auf, so ist ein Resonanzkreis angeregt, dessen konzentrierte Parameter gegeben sind durch den Maximalwert $Z(\omega_i)$ bzw. $F(\omega_i)$ und die Bandbreite $\Delta\omega_i$ gemäß den bekannten Beziehungen:

$R_i = Z(\omega_i)$ bzw. $1/F(\omega_i)$

$$L_i = Z(\omega_i) \cdot \Delta\omega_i/\omega_i^2 \text{ bzw. } 1/(\Delta\omega_i \cdot F(\omega_i))$$
$$C_i = 1/(\omega_i \cdot Z(\omega_i)) \text{ bzw. } F(\omega_i) \cdot \Delta\omega_i/\omega_i^2.$$

Ist ein Filter RCL zwischen dem Stromrichteranschluß und dem Abgriff am Netz vorhanden, so genügt es, zum Bestimmen der Übertragungsfunktion von den Größen $U_s(t)$, $I_s(t)$, $U_n(t)$ und $I_n(t)$, die an den Enden des Filters auftreten, irgendein Paar dieser Größen auszuwählen, da zwischen diesen Größen physikalische Beziehungen bestehen, die aus den bekannten Elementen des Filters errechnet werden können. Da aie Resonanzen des Netzes in den entsprechenden Frequenzbereichen den Verlauf der dieser Übertragungsfunktion bestimmen, können die entscheidenden Schwingkreisparameter auch den anderen Übertragungsfunktionen entnommen werden.

So kann z.B. die Spannung $U_s(t)$ am Stromrichteranschluß und die Spannung $U_n(t)$ am Netzanschluß (bei Lokomotiven: die Fahrdraht-Spannung) gemessen werden. Bei einem Impedanzmaximum im Netz tritt auch in der entsprechenden Übertragungsfunktion

$$\underline{G}(\omega_n) \;=\; \frac{\underline{U}n(\omega_n)}{\underline{U}s(\omega_n)}$$

nur ein entsprechend schwach gedämpftes Maximum auf, und umgekehrt entspricht eine starke Dämpfung bei einem Minimum der Netzimpedanz einer entsprechend stark gedämpften Oberschwingung im Spektrum $\underline{G}(\omega_n)$. Auch die vom Stromrichter durch sein Pulsmuster eingeprägte elektrische Größe (z.B. die Spannung

11

$U_s(t)$ eines spannungseinprägenden Umrichters) ist aus dem Pulsmuster und anderen Betriebsparametern des Stromrichters (z.B. der Anschlußgleichspannung) berechenbar. Unter Umständen kann daher z.B. auf eine eigene Messung der Größe $U_s(t)$ verzichtet werden und statt dessen für $\underline{U}s(\omega_n)$ eine mathematische Bestimmung vorgenommen werden.

FIG 15 zeigt die Anwendung des erfindungsgemäßen Verfahrens bei der Steuerung der betrachteten Lokomotive. An den Fahrdraht FS ist über den Stromabnehmer S und das Oberschwingungsfilter LCR der eine Pol des Stromrichters DC angeschlossen, dessen anderer Pol über die Räder geerdet ist. Der über den Stromabnehmer mit dem Netz (Fahrdraht FS) ausgetauschte Strom ist von einem Strommeßglied MI abgegriffen, um mittels eines Filters FI zur Subtraktion der Stromgrundschwingung IO den Störstrom If zu ermitteln. Auch für die Ermittlung der Störspannung Uf ist ein entsprechendes Spannungsmeßglied MU und ein Filter FU vorgesehen.

Dabei ist mit unterbrochenen Linien angedeutet, daß im Fall eines vorhandenen Filters LCR vorzugsweise das auf die Stromrichter-Anschlußspannung $U_s(t)$ wirkende System im Modell virtuell erfaßt wird.

Um den zeitlichen Verlauf des Oberschwingungsstroms und Oberschwingungsspannung während einer Periode der Grundschwingung zu ermitteln, werden diese Größen mittels eines Analog/Digital-Umsetzers AD in regelmäßig kurzen Zeitabständen $\tau$ abgetastet und einem Identifikationsrechner ID zugeführt. Wegen der sich ständig ändernden Konfiguration des Netzes muß diese Abtastung ständig wiederholt werden.

Das Spannungsfilter FU enthält daher neben einem Bandpaß BP eine "phase-locked-loop"-Schaltung PLL und liefert neben dem Phasensignal $\phi(t)$ und der Grundschwingungsamplitude UO die Grundfrequenz $\omega O$, die in einem Abtasttakt $M \cdot \omega_o$ umgesetzt wird. Ist M = 1024 gewählt, so besteht zwischen der Grundschwingungsperiode TO der Netzspannung und der Abtastzeit $\tau$ des Analog/Digital-Umsetzers AD der Zusammenhang TO = $M.\tau$ und die Störgrößen werden zu den Zeitpunkten $t_m = m \cdot \tau$ mit m = 0, 1,..., M - I innerhalb der Grundschwingungsperiode abgetastet.

Dem Identifikationsrechner ID werden also anstelle kontinuierlicher Eingangsgrößen die diskreten, digitalen Werte I(m) und U(m) zugeführt, die jeweils für die Abtastperiode konstant gehalten sind. Entsprechend kann der Identifikationsrechner nur Werte berechnen, die für die diskreten Oberschwingungen $\omega n = n \cdot \omega O = n \cdot 2\pi/TO = n \cdot 2\pi/M \cdot \tau$ mit den Werten der tatsächlichen Übertragungsfunktion übereinstimmen. Sollen daher genügend viele Oberfrequenzen erfaßt werden, so muß M entsprechend groß gewählt werden.

Üblicherweise ermittelt eine Steuer- und Regeleinrichtung, mit welchen Sollwerten der Stromrichter betrieben werden soll, um in der angeschlossenen Last bestimmte Betriebsbedingungen aufrechtzuerhalten. Z.B. kann der Amplituden-Sollwert UO* sowie eine bestimmte Phasenverschiebung $d\phi$ gegenüber der Netzspannung vorgegeben werden, um einzustellen, mit welcher Wirkleistung und Blindleistung das Netz vom Stromrichter beaufschlagt wird. Aus diesen Sollwerten folgen dann erste Startwerte für die Schaltwinkel des Umrichters. Diese werden z.B. beim Unterschwingungsverfahren dadurch gebildet, daß eine sinusförmige Grundschwingung mit Frequenz $\omega_o$, der Amplitude UO* und der Phasenverschiebung $d\phi$ durch eine höherfrequente Sägezahnspannung moduliert wird. Die dadurch erhaltenen Zündwinkel sind jedoch noch nicht auf die Anregung von Resonanzschwingungen optimiert. Eine derart arbeitende Vorrichtung "START" liefert also nur die Zündwinkel für einen noch nicht optimierten Betrieb, die aber als Startwerte für eine Optimierung der Pulsmuster dienen können.

Der Optimierungsrechner OPT stellt nun sicher, daß die Pulsmuster, mit denen der Stromrichter DC tatsächlich angesteuert wird, keine Oberschwingungen in kritischen Frequenzbändern anregen. Diese kritischen Frequenzbänder werden durch Meßgrößen (z.B. die Resonanzfrequenzen $\omega_i$ und deren Halbwertsbreiten $\Delta\omega_i$ des Netzes) bestimmt, die vom Identifikationsrechner ID geliefert werden.

In besonders einfachen Fällen, in denen das von der üblichen Steuereinrichtung START gebildete Pulsmuster nur für wenige Oberschwingungen eine nennenswerte Anregung darstellt und auch für das Netz nur bestimmte Frequenzbänder kritisch werden können, kann es genügen, wenn der Optimierungsrechner lediglich das von START vorgegebene Pulsmuster daraufhin überprüft, ob es Frequenzen in den kritischen Frequenzbändern enthält, und ggf. auf ein anderes Impulsmuster umschaltet. Voraussetzung ist hierbei, daß von vornherein (z.B. durch eine vorangegangene off-line-Optimierung) eine ausreichende Auswahl an unterschiedlichen Pulsmustern vorgegeben werden kann.

In vielen Fällen kann jedoch die Konfiguration des Netzes derart variieren, daß es schwierig wird, in einer off-line-Optimierung geeignete Pulsmuster festzulegen, zwischen denen dann der Optimierungsrechner OPT nur auszuwählen hätte. In diesen Fällen ist es günstiger, wenn ein Funktionsrechenteil FKT jeweils zu einem Pulsmuster den Wert einer Zielfunktion (z.B. die in den Schwingkreisen gespeicherte Energie bei einem mathematisch nachgebildeten Betriebszustand, bei dem der Stromrichter die im virtuellen Modell des Netzes darstellbaren Schwingkreise mit-tels dieses Pulsmusters speisen würde) errechnet und das Pulsmuster im Variationsrechenteil VAR variiert, mit dem variierten Pulsmuster erneut den Wert der Zielfunktion errechnet, bis nach einigen Iterationen das optimale Pulsmuster gefunden ist, bei dem die Zielfunktion ein vorgegebenes Optimierungskriterium erfüllt. So kann z.B. das Pulsmuster gefunden werden, bei dem die gespeicherte Energie ein Minimum aufweist.

Die zu diesem optimalen Pulsmuster gehörenden Zündwinkel bestimmen dann Schaltwinkel. Sobald also der Phasenwinkel $\phi(t)$ der Spannungsgrundschwingung den auf diese Weise optimierten Wert eines Schaltwinkels erreicht, wird dem Steller ein entsprechender Umschaltbefehl gegeben.

Aus den Parametern der Schwingkreise muß aber die Zielfunktion selbst gar nicht direkt berechnet werden. Vielmehr genügt es, wenn mittels der Parameter für die einzelnen Schaltzeitpunkte lediglich berechnet wird, ob sich die Zielfunktion bei einer Variation des jeweiligen Schaltzeitpunktes verbessert oder verschlechtert. Auch dadurch wird es möglich, die einzelnen Schaltzeitpunkte solang zu variieren, bis die Zielfunktion ihren optimalen Wert annimmt.

Weitere Einzelheiten der jeweiligen Optimierungsrechnung sind in der gleichzeitig eingereichten Patentanmeldung des gleichen Anmelders "Verfahren und Vorrichtung zum optimierten Betrieb eines an ein Netz angeschlossenen Stromrichters" beschrieben.

Um im Identifikationsrechner zu den Zeitpunkten $t = m \cdot \tau$ aus den abgetasteten Werten der beiden elektrischen Größen, z.B. U(m) und I(m) das Übertragungsverhalten zu bestimmen, können analytische Verfahren der Prozeßrechentechnik angewendet werden. Man kann auch einen instationären Zustand so behandeln, als ob die innerhalb einer Periode abgetasteten Istwerte sich in den weiteren Perioden ständig wiederholen. Das Netz wird dann als ein lineares zeitinvariantes diskretes System betrachtet, für das die in der Prozeßrechentechnik übliche z-Transformation vorgenommen werden kann. Für die entsprechende z-Übertragungsfunktion kann der Quotient zweier Polynome angesetzt werden, dessen Parameter mit Methoden der Modelladaption und Parameterschätzung ermittelt werden können.

Eine geeignete Methode ist die RIV-Methode der Hilfsvariablen, wie sie z.B. von A.Isermann in "Digitale Regelsysteme", Berlin 1977, bzw. "digital control systems" 1981 beschrieben ist. Dabei werden für die Koeffizienten dieser Polynome Schätzwerte eingesetzt, und jeweils nach der Abtastung eines Wertes für I-(m) und U(m) wird ein Algorithmus durchlaufen, der bei einer Anzahl N von Parametern jeweils N abgetastete Wertepaare verarbeitet und die Parameter des Modells korrigiert.

Die dabei ermittelten Koeffizienten geben dann die vollständige z-Übertragungsfunktion an, aber noch nicht die Anzahl und Dimensionierung der Schwingkreise, die für das Netzmodell erforderlich sind. Hierzu muß vielmehr erst die Variable z durch exp $(-j\omega)$ substituiert werden, wodurch der Frequenzgang des Systems, also letztlich der Quotient der Fouriertransformierten Störfunktionen ermittelt wird.

Da sich diese Übertragungsfunktion auch hinsichtlich der Anzahl und Form ihrer Maxima ständig ändert, muß von vornherein eine ausreichend hohe Ordnung der Polynome (d.h. entsprechend viele Koeffizienten) angesetzt werden. Dadurch verlangsamt sich das Rechenverfahren erheblich. Dieses Verfahren ist daher wegen der verfügbaren Rechenzeit nur für einfache Netzkonfigurationen anwendbar. In diesen Fällen ist allerdings vorteilhaft, daß bereits eine stetige und verhältnismäßig glatte Übertragungsfunktion ermittelt wird.

Vorteilhaft wird mit den heute verfügbaren Rechnern jedoch eine direkte Fourier-Transformation der Störfunktionen vorgenommen. Dies geschieht nach der bekannten Methode der "Fast Fourier Transformation", wie sie im Programmteil FFT des Identifikationsrechners der Fig. 15 abläuft. Zur Einsparung an Rechenzeit und Speicherplätzen werden die beiden zeitabhängigen Störfunktionen gleichzeitig transformiert.

Die Fouriertransformierte einer reellen Zeitfunktion ist eine komplexe Funktion, deren Realteil durch eine gerade Funktion gebildet wird, während deren Imaginärteil eine ungerade Funktion ist. Man kann aber eine reelle Zeitfunktion in eine rein imaginäre Zeitfunktion überführen, deren Fouriertransformierte sich dann gerade umgekehrt verhält: Der Realteil ist eine ungerade Funktion, der Imaginärteil eine gerade Funktion. Daher kann aus der reellen Störfunktion U(m) und der reellen Zeitfunktion I(m) eine komplexe Zeitfunktion

$$\underline{F}(m) = U(m) + j \cdot I(m)$$

synthetisiert werden, die keiner natürlichen Zeitfunktion zugeordnet werden kann und auch nicht die Symmetrieeigenschaften der Fouriertransformierten solcher Zeitfunktionen besitzt.

Mittels der Symmetrieeigenschaften der reellen Zeitfunktionen U(m) und I(m) kann aber diese synthetische Funktion $\underline{F}(m)$ in die komplexen Fouriertransformierten der beiden reellen Störfunktionen zurückzerlegt werden. Bezeichnet man mit Re(n) den Realteil und mit Im(n) den Imaginärteil der Fouriertransformierten $\underline{F}(n \cdot \omega_o)$ der Funktion $\underline{F}(m)$ für die Frequenz $n \cdot \omega O$, so erhält man für die Fouriertransformierte $\underline{U}$-$(n \cdot \omega O)$ der Spannung die Fouriertransformierte

$$(Re(n) + Re(M-n))/2 + j(Im(n) - Im(N-n)) = REF(n \cdot \omega O)$$

wobei M wieder gemäß M. = TO durch die Abtastperiode des Analog/Digital-Umsetzers AD bestimmt ist. Entsprechend ergibt sich für die Fouriertransformierte $\underline{I}(n.\omega O)$ die Fouriertransformierte

$(Im(n) + Im(M-n))/2 - j(Re(n) - Re(M-n))/2 = ANF(n.\omega O)$.

Der Betrag dieser Funktionen ist

$$ANB(n.\omega O) = \sqrt{(Re(n) - Re(M-n))^2 + (Im(n) + Im(M-n))^2}$$
$$REB(n.\omega O) = \sqrt{(Re(n) + Re(M-n))^2 + (Im(n) - Im(M-n))^2}.$$

Werden also zu den Abtastzeiten t = $m.\tau$ die Funktionswerte $\underline{F}(m.\tau)$ dieser synthetischen komplexen Zeitfunktion gebildet, so führt für die Oberfrequenz der Ordnung n (also die Frequenz $n.\omega O = n/M.\omega_O$) die Fouriertransformation zum komplexen Fourierkoeffizient

$$\underline{F}(n/M.\tau) = \underline{F}(m.\tau) . exp(-j2\pi .n.m/M) = \underline{w} . \underline{f}.$$

Die Fourierkoeffizienten für die Oberschwingung der Ordnung n ergeben sich also, wenn der M-dimensionale Meßvektor $\underline{f}$ = $\{F(m\tau)\}$ mit der MxM-dimensionalen Matrix $\underline{w}$ = $exp(-j2\ n.m/M)$ multipliziert wird. Hierzu sind also M.M komplexe Multiplikationen und (M-I).(M-I) komplexe Additionen erforderlich.

Der Rechenaufwand kann nach der bekannten Methode der "Fast-Fourier-Transformation" (FFT) verringert werden, bei dem die Matrix in geeignete, nur noch schwach besetzte Teilmatrizen zerlegt wird. Die FFT ist z.B. von Brigham und E. Oran in "FFT: Schnelle Fourier-Transformation", München 1985, beschrieben und ein besonders geeigneter Algorithmus ist der "Cooley-Tukey-Radix-2", der z.B. von C.S.Burrus in "DFT/FFT and Convolution Algorithms (Topics in Digital Signal Processing)", New York 1985, insbesondere Seite 108, beschrieben ist.

Für die Berechnung der Übertragungsfunktion sollen Frequenzen bis zur 300. Oberschwingung betrachtet werden. Die Fouriertransformation benötigt wegen ihres periodischen Spektrums zur Berechnung von M Oberschwingungen auch 2M Abtastwerte, also mindestens 600 Abtastwerte während einer Grundperiode. Die FFT setzt jedoch voraus, daß die Anzahl der Abtastwerte eine Potenz von 2 ist. Das ist durch die Abtastung mit $2^{10}$ = 1024 Abtastwerten sichergestellt.

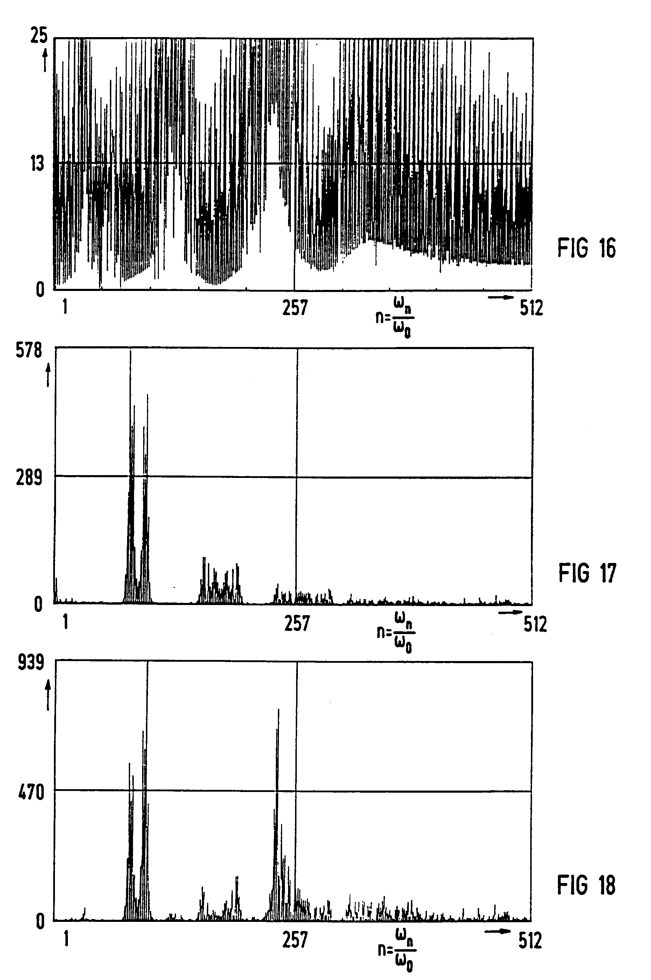

FIG 16 zeigt den Verlauf der Funktion
$Z(n.\omega O) = REB(n.\omega O)/ANB(n.\omega O)$, wobei der Maximalwert dieses Quotienten durch die Rechenkapazität des Rechners begrenzt ist. Hierbei treten starke Amplitudenabweichungen zwischen benachbarten Frequenzen auf. Diese sind auf numerisch bedingte Fehler zurückzuführen, die dadurch entstehen, daß der Quotient zweier sehr kleiner Zahlen gebildet wird. FIG 17 und FIG 18 zeigen jeweils den Betrag der Fouriertransformierten der Funktionen, wobei im Spektrum der erregenden Funktion (FIG 17) z.B. alle ungeraden Oberwellen verschwinden und daher auch im Spektrum der angeregten Funktion (FIG 18) nicht auftreten können. Der Quotient der entsprechenden, verschwindenden Spektralkomponenten ist also unbestimmt, durch Rundungsfehler bei der FFT werden jedoch die Amplituden nicht exakt Null, so daß nach der Division starke Unstetigkeitsstellen auftreten.

Um derartige Scheinwerte zu eliminieren, werden Frequenzen, bei denen im Spektrum der Erregerfunktion eine bestimmte Mindestamplitude nicht erreicht wird, in der Berechnung nicht berücksichtigt. Allerdings wird auch für Frequenzen, die in der Erregerfunktion vorhanden sind, aber nicht im Spektrum der angeregten Funktion, der Fourierkoeffizienten Null berücksichtigt.

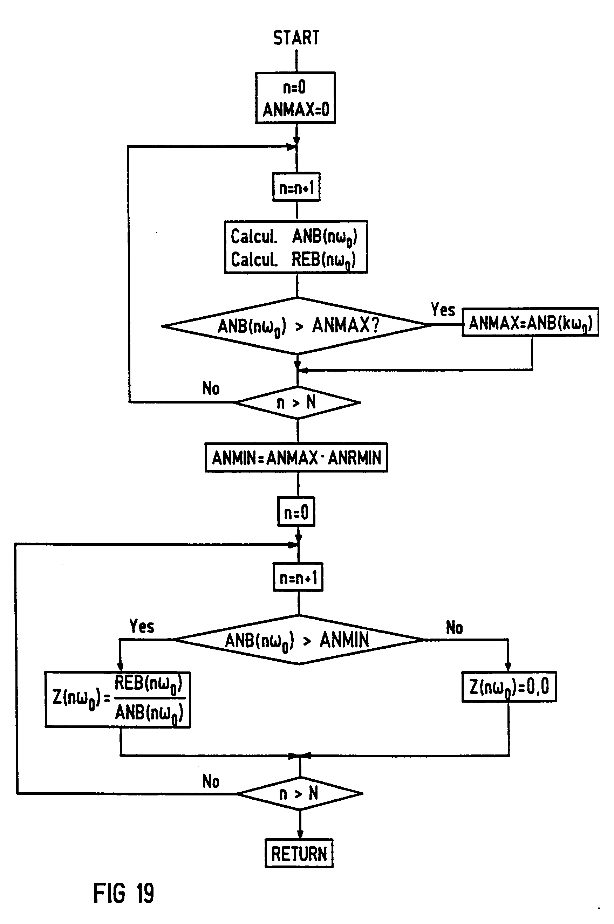

Diese Bereinigung der gemessenen Fourierkoeffizienten wird durch das in Fig. 19 gezeigte Unterprogramm vorgenommen. Im ersten Teil dieses Programms wird zuerst der Maximalwert ANMAX im Spektrum der anregenden Funktion $ANB(n.\omega O)$ bestimmt. Sodann wird ein relativer Schwellwert ANRMIN vorgegeben und mit dem Maximalwert ANMAX multipliziert, um einen Schwellwert ANMIN zu erhalten. Anschließend wird für alle Oberfrequenzen $n .\omega O$ überprüft, ob der entsprechende Wert $ANB(n.\omega_O)$ der Fourier-transformierten Anregungsfunktion über diesem Schwellwert liegen. Ist dies nicht der Fall, wird die gesuchte Übertragungsfunktion, z.B. die Impedanzfunktion $Z(n.\omega O)$ gleich dem Wert Null gesetzt, im anderen Fall wird der Quotient der Fouriertransformierten beider Störfunktionen gebildet.

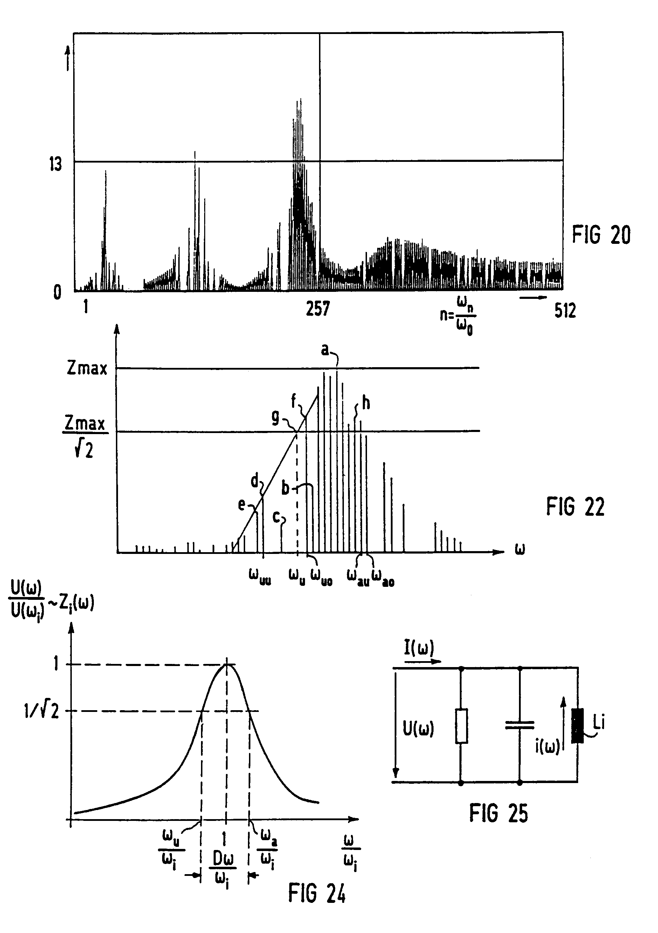

FIG 20 zeigt das zu FIG 18 gehörende, nunmehr bereinigte Spektrum der Übertragungsfunktion.

Sind im gemessenen Impedanzverlauf auch nach der Bereinigung noch starke Abweichungen benachbarter Werte vorhanden, wie dies z.B. in FIG 20 für die niedrigeren Frequenzen deutlich wird, so müssen diese starken Schwankungen vom Identifikationsrechner geglättet werden. FIG 21 zeigt die Struktur des entsprechenden Programmteils MAX, das anhand von FIG 22 näher erläutert wird. Der Programmteil MAX

EP 0 491 689 B1

des Identifikationsrechners dient dazu, die Maxima einer geglätteten Impedanzfunktion nach folgenden Kriterien zu finden:

Zunächst wird ein Maximalwert DMAX für die Hälfte der Halbwertsbreite vorgegeben. Diese Maßnahme hat zur Folge, daß enger liegende Maxima zu einem Maximum zusammengefaßt werden.

Die maximale Anzahl der Maxima ist auf M/(2.DMAX + I) begrenzt. Niedrigere Maxima werden also einem engbenachbarten größeren Maximum zugeschlagen.

Oberfrequenzen $\omega_n$, die wegen fehlender Anregung im Programm nach Fig. 19 ausgesondert wurden und deren Impedanzwert $Z(\omega_n)$ = O gesetzt wurde, werden übergangen.

Oberfrequenzen $\omega_n$ werden nur dann als Resonanzfrequenzen $\omega_i$ akzeptiert, wenn für alle Oberfrequenzen $\omega_j$, deren Ordnung j zwischen i+DMAX und i-DMAX liegen, eine Impedanz $Z(\omega_j)$ besitzen, die kleiner ist als $Z(\omega_i)$.

Oberfrequenzen werden außerdem nur dann als Resonanzfrequenzen $\omega_i$ akzeptiert, wenn es (sowohl für kleinere wie für größere Frequenzen) in einem Bereich, in dem alle Amplituden größer sind als $Z(\omega_i)/\sqrt{2}$, es keinen Wert $\omega_j$ gibt, für den $Z(\omega_j)$ größer ist als $Z(\omega_i)$. Die Grenzen dieses Bereiches werden überprüft, indem festgestellt wird, ob für die nächste zugelassene Frequenz außerhalb des Bereiches die Impedanzfunktion kleiner ist als für die Frequenz, die diese Bereichsgrenze markiert.

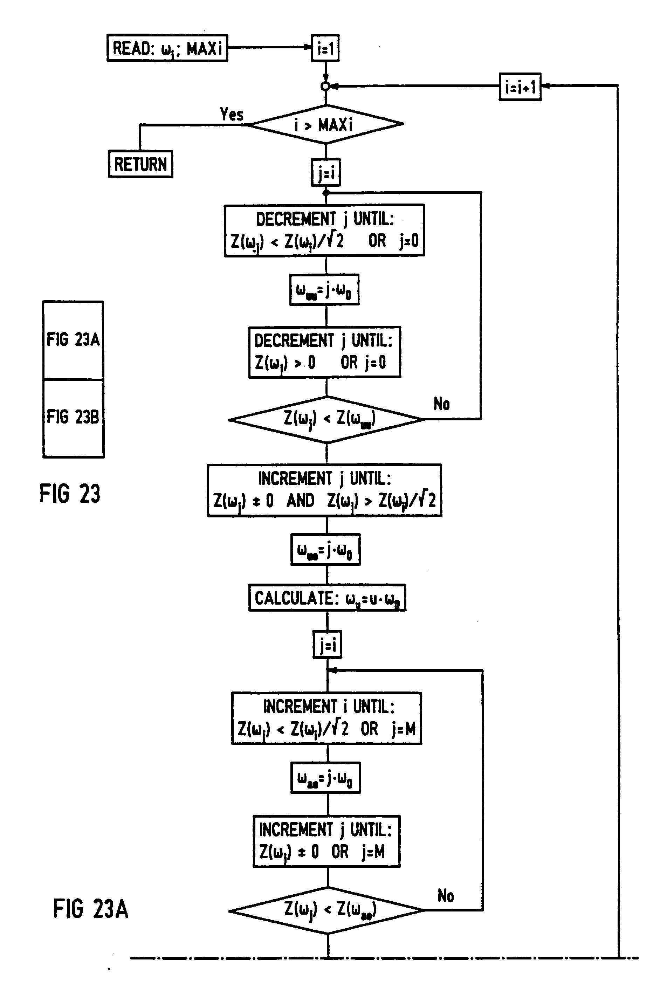

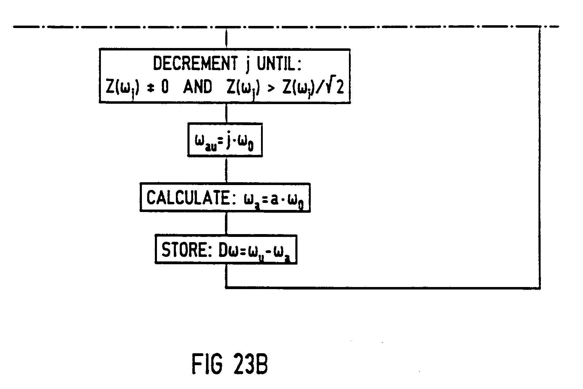

Beim Programm nach FIG 23 wird zunächst mit der Oberfrequenz $\omega_k$ begonnen, für die k = DMAX gilt. Daraufhin wird k inkrementiert, wobei überprüft wird, ob k größer ist als M-DMAX. Diese Bedingung markiert den Ausstieg aus dem Unterprogramm.

Die Ordnung k wird solange inkrementiert, bis sich innerhalb des durch DMAX bestimmten Bereiches um $\omega_k$ keine Impedanz mehr findet, die größer ist als $Z(\omega_k)$. In dem Ausschnitt eines möglichen Spektrums, das in FIG 22 gezeigt ist, findet man auf diese Weise die mit d bezeichnete Spektrallinie.

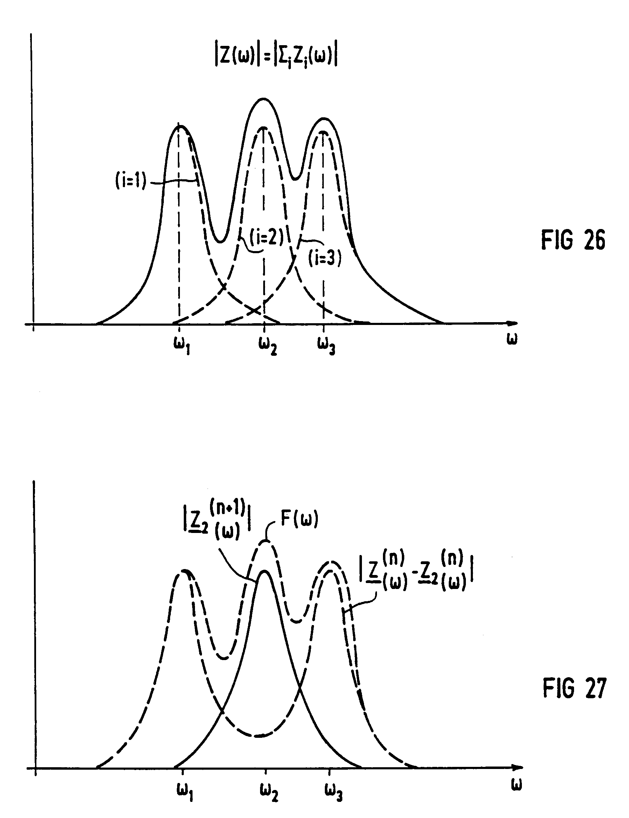

Um festzustellen, ob diese Linie den genannten Kriterien genügt, wird die nächste niedrigere Oberfrequenz $\omega_j$ gesucht, deren Impedanz $Z(\omega_j)$ entweder kleiner ist als $Z(\omega_k)/\sqrt{2}$, also außerhalb der tatsächlichen Bandbreite der als Resonanzfrequenz betrachteten Frequenz $\omega_k$, oder dessen Impedanz größer ist als der Wert $Z(\omega_k)$, der bisher als Maximum akzeptiert ist. Dabei wird die Spektrallinie J = $\ell$ gefunden, die betragsmäßig kleiner ist als die Linie k = d und sogar kleiner ist als $Z(\omega_k)/\sqrt{2}$. Entsprechend wird diese Frequenz $\omega_j$ als untere Grenzfrequenz $\omega_u$ im Sinne der FIG 24 betrachtet.

Ist allerdings die Impedanz für diesen Wert Null, weil diese Frequenz im Programm nach FIG 19 ausgesondert wurde, so wird die Dekrementierung von j weitergeführt, bis entweder die Grundfrequenz (d.h. j = O) erreicht ist, oder ein angeregter Impedanzwert gefunden wird. Sollte dieser nächste, außerhalb der Bandbreite liegende Wert aber größer sein als $Z(\omega_u)$, so wird $\omega_u$ als Grenzfrequenz verworfen und die Dekrementierung von j fortgesetzt.

Anschließend wird, wiederum beginnend von der vorläufig als Resonanzfrequenz akzeptierten Frequenz $\omega_k$, die gleiche Untersuchung für höhere Frequenzen durch Inkrementierung der Ordnung j fortgesetzt. Dabei zeigt sich, daß die Linie c zwar kleiner ist als $Z(\omega_d)/\sqrt{2}$ (Linie d), trotzdem kann aber diese Linie c nicht als obere Grenzfrequenz $\omega_a$ im Sinne der FIG24 akzeptiert werden, da der nächste gültige Wert, nämlich die Linie f, größer ist als die Linie d, die zunächst als Maximum akzeptiert war.

Daher wird die Spektrallinie d als Maximum verworfen und die Inkrementierung der Ordnung k fortgesetzt. Dabei wird zunächst die Linie a als eine Linie identifiziert, die innerhalb der Umgebung DMAX ein Maximum darstellt. Als Frequenz $\omega_j$, deren Impedanz $Z(\omega_j)$ kleiner ist als $Z(\omega_k)/\sqrt{2}$, wird zunächst die Linie b gefunden, aber als Wert für $\omega_u$ verworfen, da die nächstniedrigere Frequenz durch die Spektrallinie f gegeben ist, die größer ist als die Spektrallinie b.

Die Suche nach $\omega_u$ führt dann zur Spektrallinie c, die aber ebenfalls verworfen wird, da die Spektrallinie d wieder größer ist. Jedoch gilt für diese Spektrallinie d nunmehr $Z(\omega_j) < Z(\omega_k)/\sqrt{2}$ und stellt somit einen akzeptierten Wert für die untere Grenzfrequenz dar.

Die entsprechende Suche nach einer oberen Grenzfrequenz führt ebenfalls zum Erfolg, so daß die Linie a als Maximum erkannt und ihre Frequenz als Resonanzfrequenz $\omega_i$ und ihre Amplitude als Maximum $Z(\omega_i)$ in einen Speicher eingegeben werden kann und für die weitere Berechnung zur Verfügung steht.

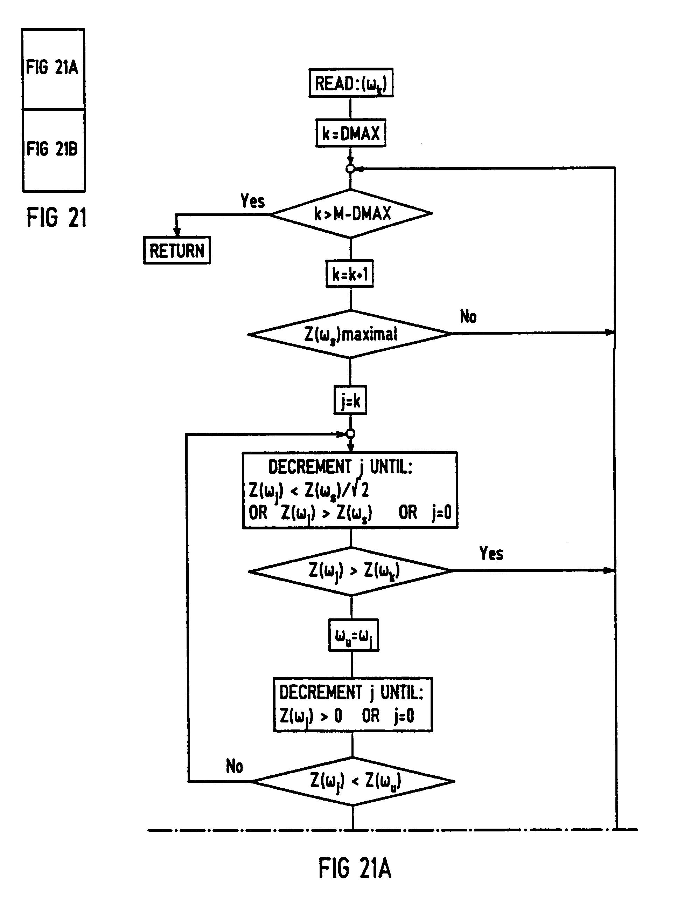

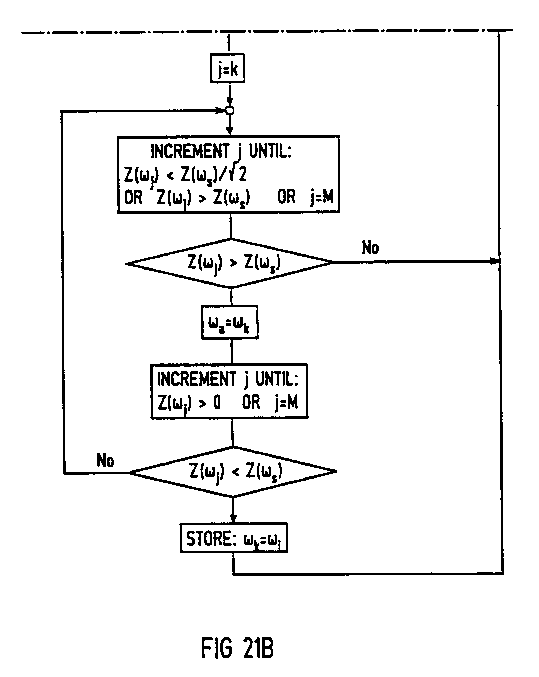

Im Programmteil HW wird nun die Halbwertsbreite für jedes Maximum ermittelt. Dazu wird zunächst bei kleineren Frequenzen der Wert $\omega_{uO}$ und $\omega_{uu}$ gesucht, dessen Impedanzen größer und kleiner sind als $Z(\omega_i)/\sqrt{2}$. Dies sind für die Maximallinie a zunächst die Linien f und b. Da jedoch die Linie b (und auch die Linie c) jeweils kleiner sind als die Linie der nächstniedrigeren Oberfrequenz f (bzw. d), werden auf die bereits im Programm der FIG 21 gezeigte Weise die Linien b und c verworfen und erst die Linie d gibt einen gültigen Wert von $\omega_{uu}$ an. Dieses Verfahren wird auch für höhere Frequenzen durchgeführt, um die Werte $\omega_{au}$ und $\omega_{aO}$ zu finden.

Durch diese Punkte kann nun eine Gerade gelegt werden, wie in FIG 22 gezeigt ist, um den zu $Z(\omega_i)/\sqrt{2}$ gehörenden Frequenzwert $\omega_u$ bzw. $\omega_a$ zu finden. Dies geschieht rechnerisch nach den Gleichungen

15

$$\omega'_u = \frac{(\omega'_{uo} - \omega'_{uu}) \cdot Z(\omega_i)/\sqrt{2} + Z(\omega'_{uo}) \cdot \omega'_{uu} - Z(\omega'_{uu}) \cdot \omega'_{uo}}{Z(\omega'_{uo}) - Z(\omega'_{uu})}$$

$$\omega'_a = \frac{(\omega'_{ao} - \omega'_{au}) \cdot Z(\omega_i)/\sqrt{2} + Z(\omega'_{ao}) \cdot \omega'_{au} - Z(\omega'_{au}) \cdot \omega'_{ao}}{Z(\omega'_{ao}) - Z(\omega'_{au})}$$

aus denen sich die Bandbreite ergibt:

$$\Delta\omega = \omega_a - \omega_u$$

Das hierzu gehörende Programm ist in FIG 23 angegeben.

Im Programmteil PAR werden die Resonanzfrequenzen $\omega_i$, ihre Amplituden $Z(\omega_i)$ sowie Halbwertsbreiten gespeichert und gegebenenfalls in $L_i$, $C_i$ und $R_i$ umgerechnet.

Um nun aus diesem gemessenen Frequenzverlauf der Impedanzfunktion einen angenäherten Verlauf der Impedanzfunktion des Netzmodelles zu bestimmen, ist in FIG 25 zunächst ein mit dem Index i bezeichneter Parallelschwingkreis dargestellt, wie er beim Netzmodell nach FIG 13 vorgesehen ist. FIG 24 zeigt die spektrale Verteilung der Impedanz im Fall, daß dem Schwingkreis der FIG 24 ein konstanter Strom I( ) von außen zugeführt wird. Entsprechend ergibt sich die dabei auftretende Spannung U($\omega$), die für die Resonanzfrequenz $\omega = \omega_i$ den Maximalwert U($\omega_i$) aufweist. Der durch die Impedanz Li fließende Strom i($\omega$) nimmt für diesen Resonanzfall ($\omega = \omega_i$) hohe Werte an und lädt den Kondensator CI auf die Spannung U-($\omega$) auf, wobei der Spannungsabfall am Widerstand $R_i$ von dem von außen eingespeisten Strom I($\omega$) kompensiert wird. Der Strom i($\omega$) kann also für $\omega = \omega_i$ Werte annehmen, die weit höher liegen als I($\omega$) und Ursache der anfangs erwähnten Störungen im Netz sind.

Für die Resonanzfrequenz $\omega_i = I/\sqrt{L_i.C_i}$ ist der Impedanzwert $Z(\omega_i) = U(\omega_i)/I(\omega_i)$ durch den Widerstand $R_i$ gegeben, während die Dämpfung D durch $\omega_i.L_i/R_i = I/(\omega_i.C_i.R_i) = \sqrt{L_i/C_i}/R_i$ gegeben ist. Definiert man eine obere Grenzfrequenz $\omega_a$ und eine untere Grenzfrequenz $\omega_u$ als diejenigen Werte, für die $Z(\omega_u) = Z(\omega_a) = Z(\omega_i)/\sqrt{2}$ gilt, so gilt für die Bandbreite B $= (\omega_a - \omega_u)/2 = D.\omega_i = R_i/L_i = C_i.R_i$. Resonanzfrequenz und Dämpfung bzw. $R_i$, $C_i$ und $L_i$ können also aus der Impedanzkurve abgelesen werden.

Besitzt der gemessene Impedanzverlauf F($\omega_i$) also nur ein Maximum, so wird man das Netzmodell zweckmäßig mit einem einzigen Schwingkreis konzipieren, der den in FIG 24 gezeigten Verlauf $Z_i(\omega)$ der Impedanz aufweist. Dieser ist innerhalb seiner Bandbreite um die Resonanzfrequenz $\omega_i$ hierum näherungsweise mit F($\omega_n$) identisch, d.h. es gilt

$$|\underline{F}(\omega)| \approx |\underline{Z}_i(\omega)| \text{ für } \omega \approx \omega_i$$

Für einen Impedanzverlauf mit N Maxima werden auch N Schwingkreise mit den Resonanzfrequenzen $\omega_i$ benötigt. In der Nähe jedes Maximus gilt

$$|\underline{F}(\omega)| \approx |\underline{Z}_1(\omega) + \underline{Z}_2(\omega) + \dots \underline{Z}_N(\omega)| \text{ für } \omega \approx \omega_I, \dots \omega_N.$$

Liegen die Resonanzfrequenzen weit auseinander und sind ihre Bandbreiten gering, so wird der i-te Schwingkreis von der Gesamtheit der anderen Schwingkreise praktisch nicht beeinflußt.

Es gilt also

$$|\underline{Z}_i(\omega)| \gg \left| \sum_{j=1,\dots N; i \neq j} \underline{Z}_j(\omega) \right| \quad \text{für } \omega \approx \omega_i$$

und man kann näherungsweise auch für die diskreten Frequenzen $\omega_n$ im Frequenzspektrum der FIG 20 setzen

$$F(\omega_n) = |Z_i(\omega_n)|$$

EP 0 491 689 B1

Man erhält also dadurch, daß aus dem gemessenen Impedanzverlauf in der Nähe jedes Maximums die Parameter eines Ersatzschwingkreises berechnet werden, eine erste Annäherung der Impedanzfunktion des Netzmodelles an die gemessene Übertragungsfunktion.

In FIG 26 ist für ein System aus N = 3 Schwingkreisen mit den gestrichelten Linien ($\mu = 1$), ($i = 2$) und ($i = 3$) jeweils die Resonanzkurve für den Betrag der Impedanz eines einzelnen Schwingkreises angegeben. Die vollständige Wechselstromimpedanz, wie sie sich durch die Fourieranalyse ergibt, enthält aber noch einen frequenzabhängigen Phasenwinkel, der zwischen $+\pi/2$ und $-\pi/2$ liegt und in der Nähe der Resonanzfrequenz einen Nulldurchgang aufweist. Sind die Schwingkreise, wie dies im Netzmodell angenommen wird, direkt aneinander gekoppelt, so wird die Resonanzschwingung eines benachbarten Schwingkreises sowohl von der Phasenlage wie von der Amplitude der im benachbarten Schwingkreis angeregten Schwingung beeinflußt. Die Gesamtimpedanz $\underline{Z}(\omega)$ ergibt sich zwar als Summe der Einzelimpedanzen $\underline{Z}_i(\omega)$, wobei mit i = I,...N die einzelnen Resonanzkreise gezählt werden.

Für den Betrag der Impedanzfunktion kann aber die Betragsbildung nur für die gesamte Summe, nicht für die einzelnen Summanden vorgenommen werden. Da die bisher betrachtete, erste Näherung zur Bestimmung der Parameter des Ersatzschwingkreises nur von einer isolierten Betrachtung eines einzelnen Impedanzmaximums ausgeht, wird also ein Fehler begangen, der im Programmschritt KOR korrigiert werden soll.

Da die Programmteile MAX, HW, PAR und KOR in einer Iterationsschleife angeordnet sind, wird das hierzu vorgeschlagene Verfahren gleich für den Fall erläutert, daß die Schleife (n)-mal durchlaufen ist und somit für jeden mit i gekennzeichneten Schwingkreis bereits ein (n)-mal korrigierter Parameterwert

$$R_i^{(n)}, \quad C_i^{(n)} \quad \text{und} \quad L_i^{(n)}$$

zur Verfügung steht, der die entsprechende isolierte Impedanz aufweist:

$$\underline{Z}_i^{(n)}(\omega) \;=\; \frac{1}{1/R_i^{(n)} + j(\omega \cdot C_i^{(n)} - 1/\omega \cdot L_i^{(n)})}$$

Das Netzmodell besitzt in dieser Näherung dann als Übertragungsfunktion die Summe aller isolierten Impedanzen:

$$\underline{Z}^{(n)}(\omega) \;=\; \sum_i \underline{Z}_i^{(n)}(\omega)$$

Für den Schwingkreis i = j soll dessen isolierte Impedanz

$$\underline{Z}_j^{(n)}(\omega)$$

ersetzt werden durch

$$\underline{Z}_j^{(n+1)}(\omega) \;=\; \underline{Z}_j^{(n)}(\omega) \;+\; \underline{\Delta Z}_j(\omega)$$

17

wobei wenigstens das j-te Maximum des Netzmodells durch die Korrekturfunktion

$$\underline{\Delta\ Z}_j(\omega)\ =\ \underline{F}(\omega)\ -\ \underline{Z}\overset{(n)}{(\omega)}$$

an die gemessene Impedanz $\underline{F}(\omega)$ des Netzes angenähert wird. Es gilt also:

$$\underline{Z}_j^{(n+1)}(\omega)\ =\ \underline{F}(\omega)\ -\ \underline{Z}\overset{(n)}{(\omega)}\ +\ \underline{Z}_j\overset{(n)}{(\omega)}$$

Der Betrag $|\underline{F}(\omega)|$ der komplexen Netzimpedanz ist durch die Fouriertransformation gemessen, während die Phasenlage durch die Modellimpedanz näherungsweise bestimmt ist. Daher kann gesetzt werden:

$$\underline{F}(\omega)\ =\ |\underline{F}(\omega)|\ \cdot\ \frac{\underline{Z}\overset{(n)}{(\omega)}}{|\underline{Z}\overset{(n)}{(\omega)}|}$$

Für die verbesserte isolierte Impedanzfunktion ergibt sich also

$$Z_j^{(n+1)}(\omega)\ =\ |\underline{F}(\omega)|\ \cdot\ \frac{\underline{Z}\overset{(n)}{(\omega)}}{|\underline{Z}\overset{(n)}{(\omega)}|}\ -\ \underline{Z}\overset{(n)}{(\omega)}\ +\ Z_j\overset{(n)}{(\omega)}$$

und aus dem Betrag dieser Funktion

$$|Z_j\overset{(n)}{(\omega)}|\ =\ |\ Z_j\overset{(n)}{(\omega)}\ +\ |\underline{F}(\omega)|\frac{\underline{Z}\overset{(n)}{(\omega)}}{|\underline{Z}\overset{(n)}{(\omega)}|}\ -\ Z\overset{(n)}{(\omega)}\ |$$

ergeben sich Resonanzfrequenz, Amplitude und Halbwertsbreite, die eine verbesserte Bestimmung der konzentrierten Schwingkreisparameter darstellen.

FIG 27 veranschaulicht, wie aus dem gemessenen Betrag der komplexen Übertragungsfunktion und den Übertragungsfunktionen der Schwingkreise (i = 1) und (i = 3) der FIG 26 die isolierte mit durchgezogener Linie gezeichnete Impedanzfunktion

$$|Z_2^{(n+1)}(\omega)|$$

des isolierten Schwingkreises (i = 2) bebildet wird.

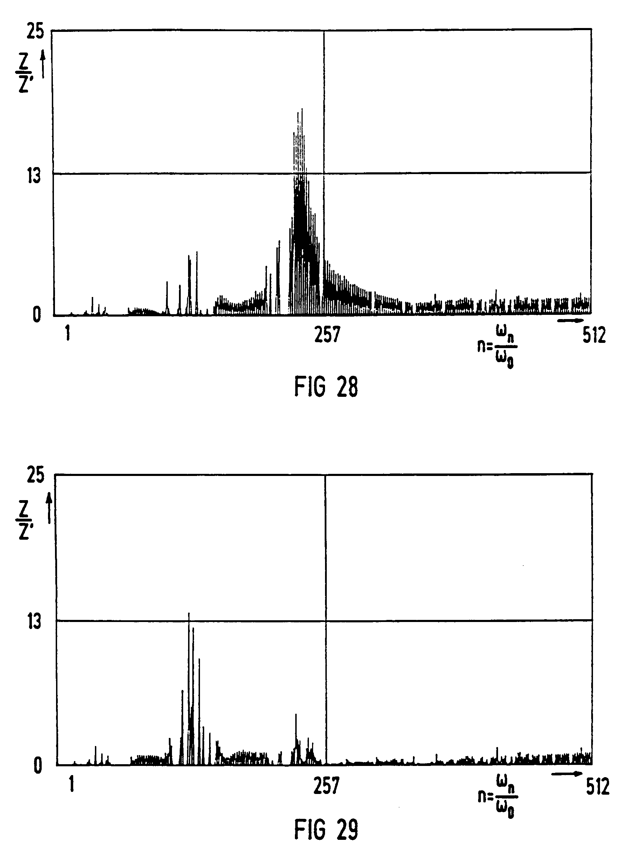

Auf diese Weise kann in vier Iterationen aus dem Spektrum der Fig. 20 das Spektrum einer isolierten Resonanz bei der Frequenz $\omega_i = n_i.\omega_0$ ermittelt werden, das in FIG 28 für $n_i \approx 250$ und in FIG 29 für $n_i \approx 120$ gezeigt ist. Gegenüber der ersten Näherung haben sich die Parameter der einzelnen Ersatzschwingkreise um etwa 30 % verbessert.

Außerdem kann es vorkommen, daß im gemessenen Impedanzspektrum zunächst mehrere einzelne Maxima identifiziert werden, die aber im Laufe der Iterationen als Artefakte erkannt werden und sich als rechenbedingte oder meßfehlerbedingte Schwankungen innerhalb des Bereiches einer einzigen Resonanz herausstellen. Dies tritt besonders auf, wenn als Kriterium für ein Maximum im Programm MAX nur gefordert wird, daß in der durch die maximale Halbwertsbreite vorgegebenen Umgebung einer Resonanzfrequenz keine andere Impedanz größer sein soll als die Resonanzimpedanz. Werden jedoch die im Programm nach FIG 22 aufgestellten, schärferen Kriterien angewendet, so werden Scheinmaxima, die lediglich durch Systemfehler entstehen, bereits weitgehend unterdrückt. Die Ermittlung der Parameter braucht daher häufig nur alternativ nach FIG 22 oder dem Programmteil KOR vorgenommen zu werden.

Die beschriebene Korrektur ist vor allem für Maxima, die große Werte annehmen und/oder nahe beieinanderliegen, vorteilhaft. Kleine Maxima dagegen können unterdrückt oder ohne Iteration weiterbehandelt werden, ohne daß dadurch ein wesentlicher Fehler begangen wird. Dies kann besonders dann vorteilhaft sein, wenn bei der erwähnten Subtraktion

$$Z_j^{(n)}(\omega) \; - \; Z*^{(n)}(\omega)$$

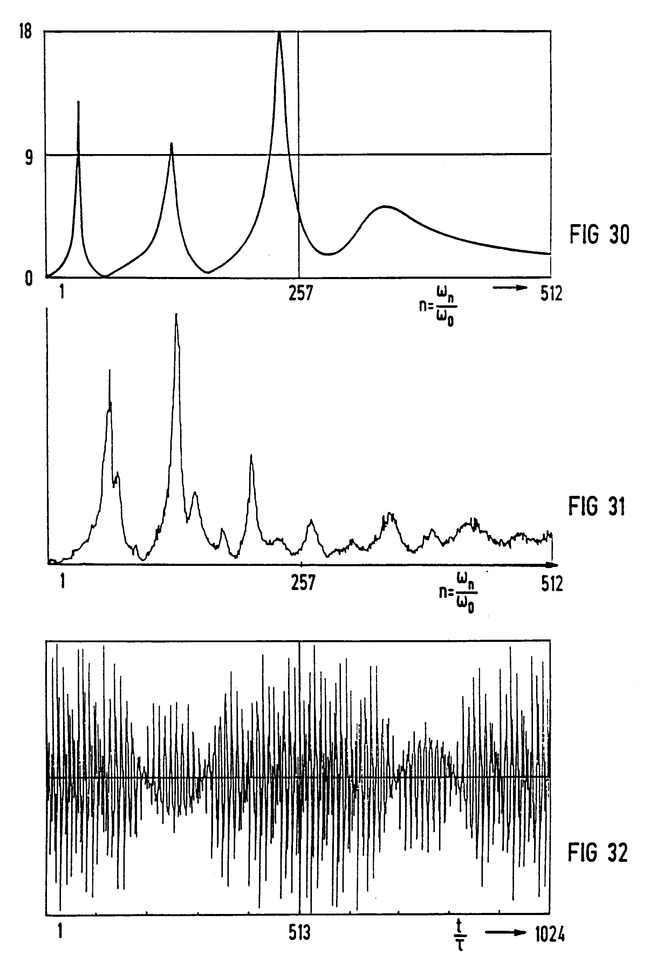

der Subtrahend größer als der Minuend wird, so daß im Laufe der Iteration der zu einem derartigen "kleinen Maximum" gehörende Impedanzwert an wächst, was zu einer Divergenz des Algorithmus führen kann. FIG 30 zeigt nunmehr für die bereits in FIG 20 dargestellte Übertragungsfunktion die angenäherte Übertragungsfunktion, die aus dem derart berechneten Netzmodell als kontinuierliche Kurve errechnet ist.

Wird als Identifikationsrechner ein Signalprozessor TMS 320 C25 der Firma Texas Instrument eingesetzt, so zeigt sich, daß für die Fourier-Transformation der eingetasteten Meßwerte von Strom und Spannung etwa 35 ms benötigt werden. Bei der daraus folgenden Berechnung des Impedanzwertes ist vor allem das Bilden der Quadratwurzel und die Division zeitraubend, so daß für die Berechnung der Impedanz einer angeregten Oberwelle etwa 0,11 ms benötigt werden. Die Berechnung des gesamten Impedanzverlaufes hängt stark von der Anzahl der angeregten Oberwellen ab und beträgt im ungünstigsten Fall, bei dem alle 512 Oberwellen angeregt sind, 60 ms. Die Suche nach den Maxima und Bandbreiten erfordert weitere 20 ms. Außerdem muß das Programm bei jedem Durchlauf für das Einlesen der M = 1024 Abtastwerte unterbrochen werden, so daß weitere 10 ms zu addieren sind. Daraus ergibt sich eine Gesamtrechenzeit des Identifikationsrechners, die je nach Anregung der Oberwellen zwischen 70 ms und 125 ms liegt.

Dies ist etwas mehr als die Periodendauer der Spannungen und Ströme, die im deutschen Bahnnetz 60 ms beträgt. Es genügt aber, auf der Lokomotive zwischen dem Stromabnehmer und dem Wechselrichter nur in jeder dritten Periode die elektrischen Größen abzutasten, um aus den dabei gebildeten Meßgrößen sofort ("on-line") ein optimiertes Pulsmuster für den Stromrichterbetrieb zu errechnen.

Soll das vollständige Impedanzspektrum des Netzes aufgenommen werden, so kann der Stromrichter mit einem stochastisch veränderlichen Pulsmuster betrieben werden, dessen Ausgangsgrößen daher alle Oberfrequenzen anregen. FIG 31 zeigt die entsprechende Übertragungsfunktion des Netzes.

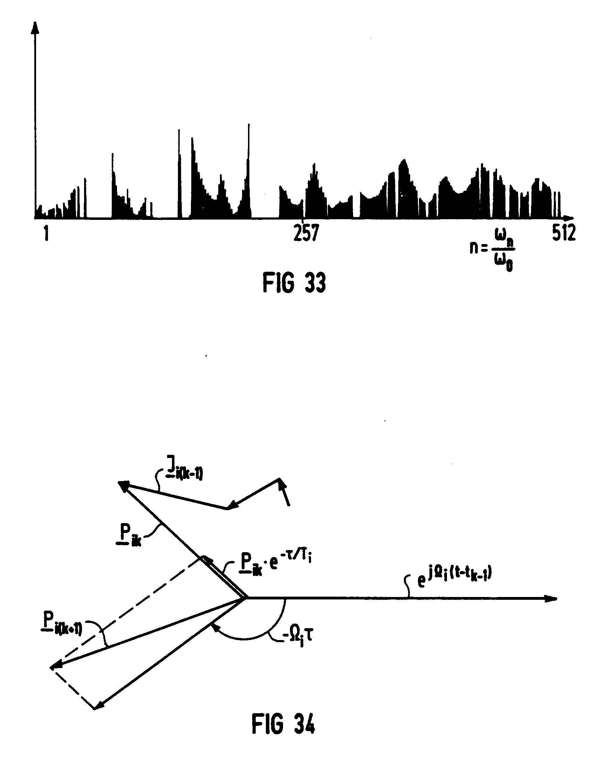

Im gleichen Zustand des Netzes enthält aber die Ausgangsspannung eines Stromrichters, der die Motoren einer Lokomotive nach FIG 3 speist, nur die in FIG 32 gezeigte Störspannung, in der manche Frequenzbereiche nicht angeregt sind. FIG 33 zeigt das dabei meßbare Frequenzspektrum der Netzimpedanz.

In den Figuren 5 bis 12 sind die vom Pulsmuster vorgegebene Anschlußspannung $U_s(t)$ des Stromrichters, sein Störstrom, die Frequenzspektren der Störspannung am Stromrichter und am Fahrdraht und die räumliche Verteilung der Amplituden von Störspannung und Störstrom längs des Fahrdrahtes bereits dargestellt. Diese Größen ändern sich ständig während der Fahrt.

Die erfindungsgemäß gebildeten Resonanzmeßgrößen führen nach Optimierung einer daraus abgeleiteten Zielfunktion (z.B. der in den Schwingkreisen des Netzmodelles virtuell gespeicherten Energie) zu einem Pulsmuster und einer Spannung Us(t), die in in FIG 34 gezeigt ist.

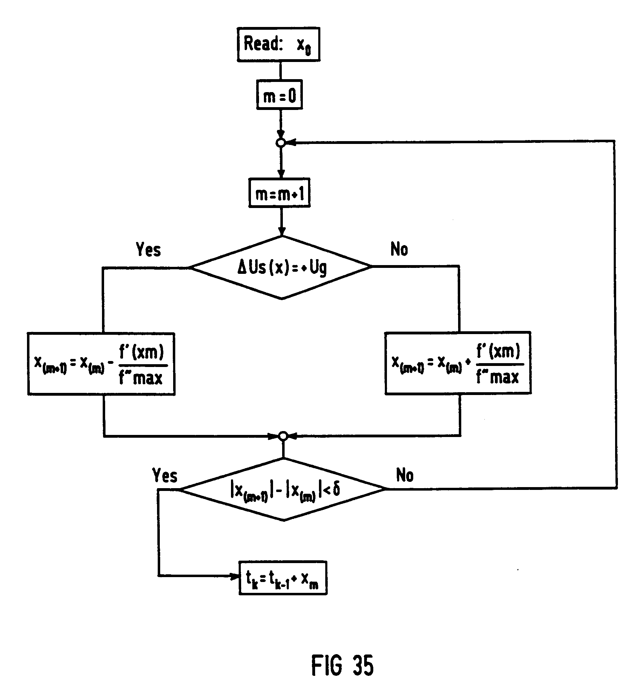

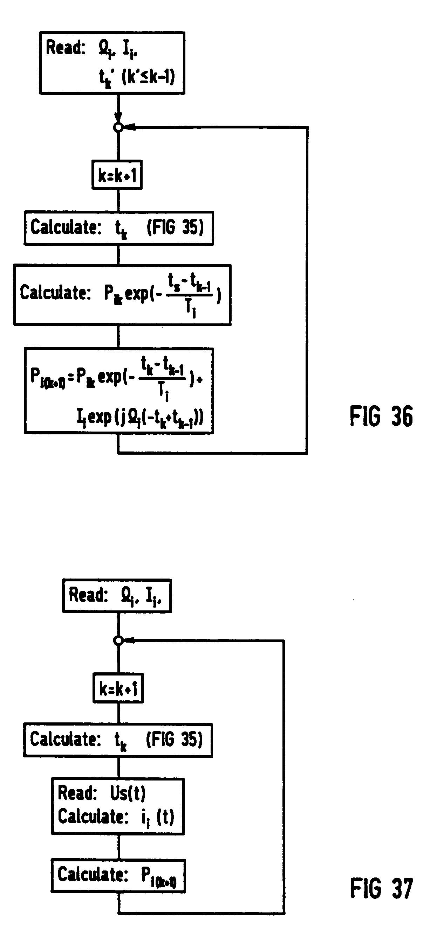

FIG 35 zeigt den dabei auftretenden Störstrom. Die dabei auftretenden, den Figuren 8 und 9 entsprechenden Frequenzspektren der Störspannung sind in FIG 36 und 37 wiedergegeben und zeigen am Stromrichter eine wesentliche Verschiebung der Maxima in einem wesentlich gleichmäßiger angeregten Spektrum, während am Stromabnehmer nur noch schwache Maxima der Netzspannung auftreten.

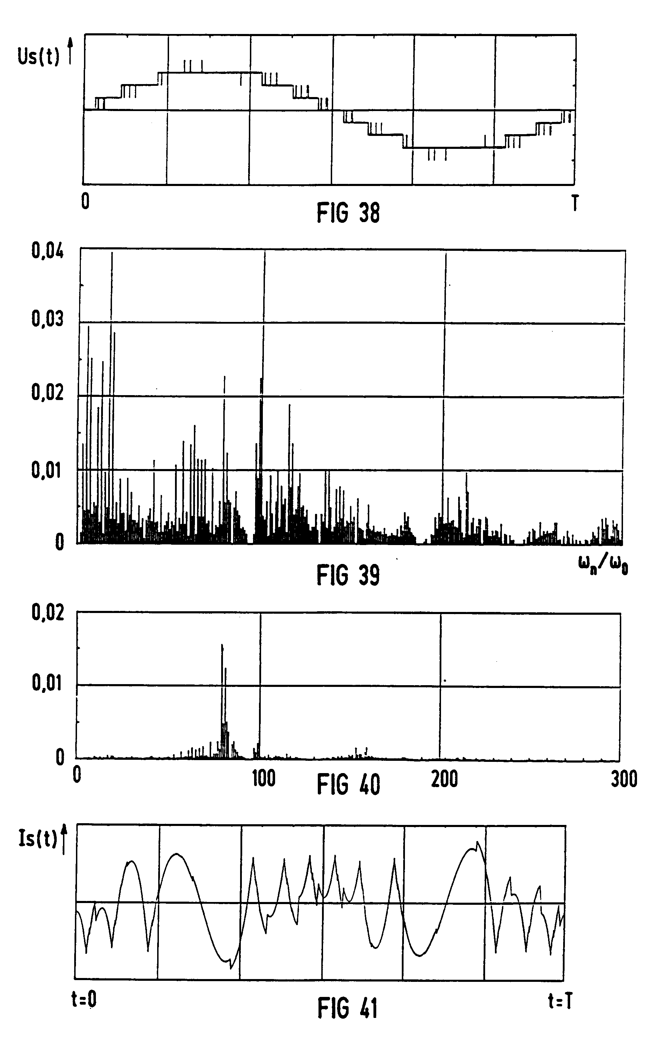

Die Amplitude und räumliche Verteilung der Störspannung ist jetzt wesentlich weniger ausgeprägt (FIG 38) und der ins Netz eingespeiste, unvermeidliche Störstrom, der in FIG 39 in gegenüber FIG 12 vergrößertem Maßstab dargestellt ist, fließt weitgehend über die benachbarten Unterwerke ab. Es kommt somit im Netz nicht zu Parallelresonanzen und stehenden Wellen von Strom und Spannung.

Um die Übertragungsfunktion aus den elektrischen Großen zu bestimmen, ohne die in den FIG 16 bis 23 erläuterten, zeitraubenden Berechnungen durchzuführen, können die Koeffizienten $Z(\omega_u)$ dieser Übertragungsfunktion auch aus Fourierkoeffizienten der elektrischen Größen bestimmt werden, die jeweils in mehreren Perioden gemessen und anschließend gemittelt werden.

Dadurch werden stochastische Schwankungen in der gemessenen Übertragungsfunktion ausgemittelt. Außerdem können die Fourierkoeffizienten nicht nur betragsmäßig, sondern auch vollständig als komplexe Zahlen erfaßt werden.

Soll z.B. die Übertragungsfunktion

$$\underline{G}(\omega_n) \ = \ \underline{U}n(\omega n)/\underline{U}s(\omega_n)$$

bestimmt werden, so liefert die bereits beschriebene Fast-Fourier-Transformation zunächst für jede Frequenz $\omega_n$ und jede Periode m die komplexen Koeffizienten $\underline{U}n(\omega_n)^{(m)}$, $\underline{U}s(\omega_n)^{(m)}$ und damit auch die dazu konjugiert komplexen Werten $\underline{U}n^*(\omega_n)^{(m)}$ und $\underline{U}s^*(\omega_n)^{(m)}$. Daraus werden die beiden reellen Werte

$$Gnn \ = \ \underline{U}n(\omega_n)^{(m)} \cdot \underline{U}n^*(\omega_n)^{(m)}$$
$$Gss \ = \ \underline{U}s(\omega_n)^{(m)} \cdot \underline{U}s^*(\omega_n)^{(m)}$$

und der komplexe Korrelationskoeffizient

$$\underline{G}ns \ = \ \underline{U}n(\omega_n)^{(m)} \cdot \underline{U}s^*(\omega_n)^{(m)}$$

gebildet, wobei jeweils nur eine komplexe Multiplikation auszuführen ist.

In jeder Periode m kann für die Frequenz $\omega_n$ der Koeffizient der Übertragungsfunktion $\underline{G}(\omega_n)$ bestimmt werden als

$$\underline{G}ns(\omega_n)^{(m)}/Gss(\omega_n)^{(m)}$$

was lediglich die Division durch eine reelle Zahl erfordert.

Vorteilhaft werden jedoch die in jeder Periode berechneten Produkte gemittelt. Dies kann rekursiv in der Periode m unter Verwendung des in der Periode (m-l) gebildeten Mittelwertes

$$\overline{\underline{Gns}}(\omega_n)^{(m-1)}$$

geschehen:

$$\overline{\underline{Gns}}(\omega_n)^{(m)} \ = \ \beta \cdot \overline{\underline{Gns}}(\omega_n)^{(m-1)} + (1-\beta) \cdot \underline{Gns}(\omega_n)^{(m)}$$

$\beta$ entspricht dabei der Zeitkonstante eines Glättungsgliedes für einen Meßwert. Entsprechend dem dadurch gebildeten Mittelwert

$$\overline{\underline{Gns}}(\omega_n)$$

können auch die gemittelten ("geglätteten") Produkte $\overline{Gnn}(\omega_n)$ und $\overline{Gss}(\omega_n)$ berechnet werden.

Für zeitlich konstante Meßwerte ergibt sich in jeder Periode dann die Übertragungsfunktion

$$\underline{G}(\omega_n) \ = \ \underline{U}n(\omega_n)/\underline{U}s(\omega_n) \ = \ \overline{\underline{Gns}}(\omega_n)/\overline{Gss}(\omega_n)$$

Meßwert-Streuungen werden dabei weitgehend unterdrückt.

An dem mittleren komplexen Korrelationskoeffizient

$$\overline{\underline{Gns}}(\omega_n)$$

EP 0 491 689 B1

läßt sich durch Normierung ein Plausibilitätsfaktor bilden:

$$P(\omega_n) = \overline{\underline{Gns}}(\omega_n)^2/(\overline{Gnn}(\omega_n) \cdot \overline{Gss}(\omega_n))$$

wobei

$$\overline{\underline{Gns}}(\omega_n)^2$$

das Quadrat des Mittelwertes oder - bevorzugt - der Mittelwert des Quadrates von $\underline{Gns}(\omega_n)$ ist. $P(\omega_n)$ ist eine reelle Zahl, die für zeitlich konstante Meßwerte den Wert I annimmt, während sich bei stochastischen Beziehungen zwischen Betrag und Phase der beiden elektrischen Größen der Wert Null ergibt.

Um also bei der Annäherung der Modell-Übertragungsfunktion an die gemessene Übertragungsfunktion $\underline{G}(\omega_n)$ oder $\underline{Z}(\omega_n)$ um plausible Meßwerte zu berücksichtigen, kann eine aus $P(\omega_n)$ gebildete Gewichtsfunktion eingeführt werden. Dabei werden Frequenzen mit hohem $P(\omega_n)$ stark berücksichtigt, bei kleinem $P(\omega_n)$ aber praktisch unterdrückt (z.B. Gewicht "I" für $P(\omega_n) \geq 0{,}8$ und Gewicht "O" für $P(\omega_n) < 0{,}8$).

Die komplexe Übertragungsfunktion erfaßt (z.B. über die Terme $\underline{Gns}(\omega_n)$ und $Gss(\omega_n)$) auch die erwähnten Lauf- und Totzeiteffekte, die durch die räumliche Ausdehnung des Netzes hervorgerufen werden. Diese beeinflussen Betrag und Argument der Übertragungsfunktion, können und sollen aber im virtuellen Modell nur soweit berücksichtigt werden, als sie bei einer Resonanz des Netzes die Energieaufnahme und Dämpfung bestimmen.

Diese Übertragungsfunktion, die also auch die Phasenlage der Übertragungsfunktion erfaßt, wird wieder dazu verwendet, um die Parameter (Kapazität, Induktivität und Widerstand) von virtuellen Schwingkreisen zu bestimmen. Jeder Parallelresonanz des Netzes, d.h. jedem entsprechenden Extremum der auf diese Weise gemessenen (und gegebenenfalls mit der Konstanten $\beta$ geglätteten) Übertragungsfunktion, kann wieder ein Schwingkreis zugeordnet werden, der Amplitude, Halbwertsbreite und Frequenz des vom Netz aufgenommenen Resonanzstromes zu simulieren gestattet.

Diese Resonanzparameter werden als Meßgrößen von einem entsprechenden Identifikationsrechner ausgegeben und können für die Berechnung optimierter Zündwinkel zum Betrieb des Stromrichters weiter verwendet werden.

Im folgenden wird das Netzmodell der FIG 14 verwendet, also eine Parallelschaltung von Schwingkreisen aus einer Kapazität Ci, einer Induktivität Li und einem Widerstand Ri, wobei der Index i die einzelnen virtuellen Schwingkreise bezeichnet. An allen Schwingkreisen liegt daher die Netzspannung Un(t), während sich der ins Netzmodell eingespeiste Strom In(t) aufteilt in

$$I_n(t) = \sum_i i_i(t)$$

Für jeden dieser Schwingkreise ist der Strom $i_i(t)$ eine Funktion der Spannung und der Schwingkreisparameter.

Die Energie eines Schwingkreises berechnet sich zu

$$W_i = L_i \cdot i_i(t)^2/2 + C_i \cdot u_i(t)^2/2$$

wobei $u_i(t)$ die Spannung am Kondensator des virtuellen Schwingkreises ist. Bei den Nulldurchgängen dieser Spannung besitzt der Strom $i_i(t)$ seinen maximalen Momentan wert $i_i(t)_{max}$, für den also gilt:

$$W_i(t) = L_i \cdot i_i(t)_{max}^2/2$$
$$i_i(t)_{max} = \sqrt{2 \cdot W_i(t)/L_i}.$$

Wenn also die Energie eines Schwingkreises klein ist, so ist auch die Amplitude des im Schwingkreis fließenden Stromes klein.

Andererseits wird die Spannung bei spannungseinprägenden Umrichtern durch die Schaltzeitpunkte des Stromrichters vorgegeben. Die im Netzmodell gespeicherte Energie bzw. die Summe der Momentanamplituden $i_i(t)_{max}$ in den Schwingkreisen ist also aus den Schaltzeitpunkten berechenbar und kann als Zielfunk-

21

EP 0 491 689 B1

tion verwendet werden.

Zunächst gehen in die Zielfunktion alle Schwingkreisparameter, die aus der Übertragungsfunktion des Netzes identifiziert wurden, als bekannte Größen ein. Werden die aufeinanderfolgenden Umschaltzeitpunkte innerhalb einer Grundperiode mit dem Index k = I,...,K bezeichnet, so können außerdem im virtuellen System aus Stromrichter und Netzmodell für die Schaltzeitpunkte beliebige Werte $t_k$ eingesetzt werden, die dann als "virtuelle Schaltzeitpunkte" einen Betriebszustand des Netzmodelles (und damit einen virtuellen Betriebszustand des Netzes) bestimmen, und es kann der entsprechende Wert der Zielfunktion berechnet werden.

Diese virtuellen Schaltzeitpunkte sind von den Zeitpunkten, zu denen im Stromrichter tatsächlich geschaltet wird, unabhängig und können beliebig verändert werden. Sie sind also die mathematischen Variablen der Zielfunktion. Nach mathematischen Methoden können durch virtuelle Variation dieser Variablen die Werte für die virtuellen Schaltzeitpunkte $t_k$ gefunden werden, bei denen die Zielfunktion einen optimalen Wert annimmt.

Im vorliegenden Fall wird als Optimierungskriterium für diese virtuelle Variation die Bedingung verwendet, daß die in allen Schwingkreisen gespeicherte Energie bzw. die Summe der momentanen Maximalamplituden $i_i(t)_{max}$ minimal ist.

Dies ist gleichbedeutend damit, daß das Differential dieser Funktion, also die Änderung des Funktionswertes bei einer virtuellen Änderung der Variablen $t_k$, zu Null wird. Mathematisch können also die virtuellen Schaltzeitpunkte solange verändert werden, bis bei den optimalen Werten für $t_k$ keine differentielle Änderung des Zielfunktionswertes mehr auftritt.

Da bei der betrachteten Lokomotive zu einem Schaltzeitpunkt $t_k$ jeweils ein Schalter des Stellers geschaltet wird und die vorgegebene Eingangsgleichspannung Ug auf den Stromrichterausgang aufgeprägt wird, tritt zu diesen Zeitpunkten $t_k$ jeweilseine Unstetigkeit in der Steller-Ausgangsspannung auf. Diese Spannung und deren Unstetigkeit regt sowohl im Netz wie im virtuellen Netzmodell die Oberschwingungen an. Daher kann für jeden virtuellen Schwingkreis der Strom als Funktion der Spannung Ug und der Unstetigkeitsstellen $t_k$ in der virtuellen Ausgangsspannung des Stromrichters berechnet werden.

Diese Berechnung geschieht vorteilhaft mit Hilfe der Laplace-Transformation. Durch Superposition der Laplace-Transformierten kann dann errechnet werden, welcher Strom dem Netzmodell durch den entsprechenden Schaltvorgang zugeführt wird.

Die Differenzialgleichung für den Strom im Schwingkreis kann aufgestellt werden, wenn man berücksichtigt, daß der Strom $i_i(t)$ den Kondensator $C_i$ auf die Spannung $u_i(t)$ gemäß

$$u_i = i_i(t)/C_i$$

auflädt. Der Spannungsabfall $Us(t) - u_i - R_i \cdot i_i(t)$ an der Induktivität $L_i$ des virtuellen Schwingkreises ist gegeben durch

$$i_i(t) = \frac{1}{L_i}(Us(t) - u_i - R_i \cdot i_i(t))$$

Dies führt zur Differentialgleichung

$$\frac{\partial^2}{\partial t^2} i_i(t) + \frac{R_i}{L_i} \frac{\partial}{\partial t} i_i(t) + \frac{1}{L_i C_i} i_i(t) = \frac{1}{L_i} \frac{\partial}{\partial t} u_i$$

und deren Laplace-Transformierten

$$s^2 \cdot I_i() + \frac{R_i}{L_i} s \cdot I_i(s) + \frac{1}{L_i C_i} I_i(s) = \frac{1}{L_i} s \cdot Us(s)$$

22

Führt man die Frequenz $\Omega_i$ und die Dämpfungskonstante $T_i$ ein:

$$\Omega_i = \sqrt{\frac{1}{L_i C_i} - \left(\frac{R_i}{2L_i}\right)^2}$$

$$T_i = \frac{2L_i}{R_i}$$

so ist für einen Einschaltsprung bzw. einen Ausschaltsprung zum Zeitpunkt $t_k$, die Lösung für den in den im Schwingkreis angeregten Strom $I_{ik'}(t)$:

$$I_{ik'}(t) = \pm(u_g / L_i \Omega_i) \cdot e^{-\frac{t-t_{k'}}{T_i}} \cdot \sin \Omega_i (t-t_{k'})$$

wobei der Einschaltsprung durch $Us(t-t_{k'}) = +u_g$ und der Ausschaltsprung durch $Us(t-t_{k'}) = -u_g$ gegeben ist. Man kann $I_{ik'}(t)$ auffassen als Realteil einer komplexen Zeitfunktion, die nur für $t>t_{k'}$ definiert ist:

$$I_{ik'}(t) = \mathrm{Re}\left\{ I_i \exp\left(- \frac{t-t_{k'}}{T_i} + j\cdot\Omega_i \cdot(t-t_{k'})\right)\right\}$$

mit

$I_i = \pm j \cdot Ug/(\Omega_i \cdot L_i)$

Der gesamte durch einen Schwingkreis fließende Strom $i_i(t)$ ist die Summe der Sprungantworten auf alle früheren Schaltvorgänge. Er besitzt eine nach dem letzten Schaltzeitpunkt $t_{k-1}$ abklingende momentane Maximalamplitude $i_i(t)_{max}$, deren Berechnung erleichtert wird durch Einführung einer Bezugsphase, z.B. einer auf den letzten Schaltzeitpunkt synchronisierten Schwingung $\exp(j \Omega_i \cdot (t-t_{k-1})$. Das führt zu einer Beschreibung des Stromes durch einen "Phasor" $P_{ik} \cdot \exp\{-(t-t_{k-1})/T_i\}$:

$$i_i(t) = \mathrm{Re}\left\{ e^{j \Omega_i \cdot (t-t_{k-1})} \cdot i_i(t)_{max}\right\}$$

$$i_i(t)_{max} = \left| P_{ik} \cdot e^{-\frac{t-t_{k-1}}{T_i}} \right|$$

$$P_{ik} = \sum_{k'}^{k-1} I_i e^{j \Omega_i (t_{k-1} - t_{k'})} \cdot e^{-\frac{t_{k-1}-t_{k'}}{T_i}}$$

Für den nächsten Schaltzeitpunkt $t_k = t_{k-1} + \tau$ lautet die Sprungantwort in der auf die Bezugsphase synchronisierten Darstellung

$$I_{ik}(t) = I_i e^{j \Omega_i \tau} e^{-\frac{t-t_{k-1}}{T_i}}$$

Dem betrachteten Schwingkreis mit dem Index i wird durch den fiktiven Schaltvorgang also ein Strom virtuell zugeführt:

$$I_{ik} = I_i \exp(j \cdot \Omega_i \cdot \tau)$$

dessen Maximalamplitude $|J_{ik}| = |I_i|$ durch die Schwingkreisparameter gegeben ist. Daher gilt für den virtuellen Strom $i_i(t)$ nach dem SChaltvorgang:

$$i_i(t) = \left\{ e^{j\Omega_i(t-t_{k-1})} \cdot e^{-\frac{t-t_k}{T_i}} \cdot \left( I_k e^{-j\Omega_i\tau} + e^{-\frac{\tau}{T_i}} P_{ik} \right) \right\}$$

der durch den Phasor $(P_{i(k+1)} \cdot \exp\{-(t-t_k)/T_i\}$ beschrieben wird. Für die Phasoren gilt also die Rekursivformel:

$$P_{i(k+1)} = I_i\, e^{-j\Omega_i\tau} + P_{ik}\, e^{-\tau/T_i}$$

Diese ist in FIG 34 dargestellt: Im Intervall $\tau$ zwischen den Schaltzeitpunkten klingt die ursprüngliche Momentanamplitude $|P_{ik}|$ mit der Zeitkonstanten $T_i$ ab.

Beim Schaltvorgang wird der durch die Maximalamplitude $|I_i|$ gegebene Strom $I_{ik}$ mit der auf $\Omega_i.(t-t_{k-1})$ bezogenen Phasenlage $\Omega_i\tau$ addiert und bestimmt die Maximalamplitude $|P_{i(k+1)}|$ des Stromes für das nächste Intervall.

Der Phasor $P_{ik}$ selbst ist aus den entsprechend abgeklungenen, bei früheren Schaltvorgängen zugeführten Strömen $I_{ik}$, entstanden.

Da die Dämpfungszeitkonstante des Schwingkreises wesentlich größer ist als eine Periodendauer T der Grundschwingung, genügt es für die Berechnung der Phasoren, jeweils nur die letzten, also z.B. die im Zeitintervall zwischen $t_k$-T und $t_k$ liegenden Schaltvorgänge zu berücksichtigen. Wegen

$$W_i(t) = \frac{1}{2} L_i \cdot i_i(t)^2_{max}$$

ist auf diese Weise auch die Energie in diesem Schwingkreis berechenbar.

Aus den Beträgen der Phasoren $P_{ik}$ und $P_{i(k+1)}$ kann man unmittelbar die Wirkung des Schaltvorganges zum Zeitpunkt $t=t_k$ ablesen: Gilt $|P_{i(k+1)}| > |P_{ik}|$, so liegt unmittelbar nach diesem Schaltvorgang (d.h. $t=t_k$) eine größere Maximalamplitude des Kreisstromes vor und die Energie des Schwingkreises wird erhöht gegenüber dem Zustand unmittelbar nach dem vorangegangenen Schaltzeitpunkt (d.h. $t=t_{k-1}$). Umgekehrt bedeutet $|P_{i(k+1)}| < |P_{ik}|$, daß durch den Schaltvorgang $t_k$ aus dem Schwingkreis Strom und Energie abgeführt wird. Man erhält als eine hinreichende Bedingung für eine gute Dämpfung also, daß

$$|P_{i(k+1)}| = |I_i\, e^{-j\Omega_i\tau} + P_{ik}\, e^{-\tau/T_i}|$$

ein Minimum aufweist.

Da die Parameter des Schwingkreises $I_i$ und $\Omega_i$ bestimmen, und in die Zeiger $I_{ik}$ zur Bildung von $P_{ik}$ zusätzlich nur noch die vorangegangenen Schaltzeitpunkte $t_{k'} < t_k$ eingehen, enthält diese Bedingung als Variable nur noch den Abstand $\tau = t_k-t_{k-1}$ des zu optimierenden Schaltzeitpunktes vom letzten Schaltzeitpunkt. Daher kann der optimale Wert $\tau_{opt}$ und der optimale Wert $t_{k\,opt} = t_{k-1} + \tau_{opt}$ nach mathematischen Methoden aus $|P_{i(k+1)}|$ berechnet werden.

Ist durch hinreichend hohe Schalthäufigkeit $\tau \ll T_i$ sichergestellt, so kann z.B. als mathematische Bestimmungsgleichung

$$\frac{d}{d\tau}\,|P_{i(k+1)}| = \frac{d}{d\tau}\,|I_i\,e^{-j\Omega_i\tau} + P_{ik}\,e^{-\tau/T_i}|$$

$$\approx \frac{d}{d\tau}\,|I_i\,e^{-j\Omega_i\tau} + P_{ik}| = c$$

oder

$$\frac{d}{d\tau}\,(P_{i(k+1)})^2 = 0$$

ausgewertet werden. Dies gilt, falls das Netzmodell nur einen virtuellen Schwingkreis enthält. Im anderen Fall wird durch Summation über alle i-Schwingkreise die im virtuellen Netzmodell gespeicherte Energie als Funktion der Schaltzeitpunkte und den dazugehörigen Maximalwerten der zugeführten Kreisströme bzw. den daraus sich ergebenden Phasoren berechnet:

$$W(t) = \sum_i \frac{L_i}{2}\,i_i(t)^2_{max} = \sum_i \frac{L_i}{2}\,|P_{i(k+1)}|^2\,e^{-2\frac{t-t_k}{T_i}}$$

Durch mathematische Variation der Variablen der Phasoren, d.h. der Schaltzeitpunkte, können also optimale Schaltzeitpunkte gefunden werden, die einen virtuellen Betriebszustand beschreiben, bei dem die Energie im virtuellen Netzmodell minimal ist. Ebenso kann man auch von den Maximalströmen der einzelnen Schwingkreise ausgehen und einen Betriebszustand aufsuchen, bei dem die Summe aller Maximalwerte der Kreisströme (d.h. also der im Netzmodell fließende Gesamt-Kreisstrom):

$$i(t) = \sum_i i_i(t)_{max} = \left(\sum_i |P_{i(k+1)}|\right)\cdot e^{-\frac{t-t_k}{T_i}}$$

minimal ist. Es können als Zielfunktion auch andere Betriebsgrößen des Systems, z.B. die Summe der einzelnen Verluste $R_i.i_i(t)^2$ auf diese Weise optimiert werden.

Schreibt man die aus den abgeleiteten Beziehungen folgenden Gleichungen für die Energie $W(t)$ bzw. den Gesamtstrom $i(t)$ als Funktionen des Zeitintervalles $\tau = t_k - t_{k-1}$, so erhält man also durch die Substitution $t = t_{k-1} + \tau + \Delta t$ als mögliche Zielfunktion

$$W'(\tau) = \sum_i \frac{L_i}{2}\left\{|P_{i(k+1)}|^2\,e^{-2\frac{\Delta t}{T_i}}\right\} \quad bzw.$$

$$i(\tau) = e^{-\frac{\Delta t}{T_i}}\sqrt{\sum_i |P_{i(k+1)}|^2}$$

Daß beim optimalen Wert von $\tau$ optimale Dämpfung vorliegt, bedeutet dann, daß für $\Delta t \to 0$ die entsprechende Funktion ihr Minimum aufweist. Mathematisch wird für eine Funktion $f(x)$ der optimale Wert $x = \tau$ gesucht, für dessen Ableitung $df(x)/dt = f'(x)$ gilt

$$f'(x) = 0$$

unter der Nebenbedingung

$$f''(x) \gg 0.$$

Für die Phasoren

$$P_{i(k+1)} = P_{ik} \cdot e^{-\tau/T_i} + I_i e^{-j \Omega_i \tau}$$

kann man unter Aufspaltung von $P_{ik}$ in Realteil $X_i$ und Imaginärteil $y_i$ und unter der Voraussetzung hinreichender kurzer Schaltintervalle (d.h. $\tau \ll T_i$) offensichtlich auch als Zielfunktion f(x) der Optimierung verwenden:

$$i(\tau)^2 = \sum_i \left[ (X_i + I_i \cos(\Omega_i \cdot \tau))^2 + (Y_i + I_i \sin(\Omega_i \tau))^2 \right]$$

Physikalisch bedeutet dieses Vorgehen:

Aus den Parametern des Netzmodelles werden die Resonanzfrequenz $\Omega_i$ sowie die anderen Parameter entnommen. Aus einem noch nicht optimierten Betrieb, der z.B. im Funktionsteil START der Fig. 15 nach dem verwendeten Unterschwingungsverfahren gesteuert wird, werden die vorangegangenen Schaltzeitpunkte (und evtl. ein erster Schätzwert für $t_k = t_{k-1}$ und die Grenzen, innerhalb derer $t_k$ variiert werden darf) entnommen; daraus kann ein erster virtueller Kreisstrom

$$i_i(\tau) = P_{ik} \cdot e^{j \Omega_i \cdot \tau}$$

berechnet werden, der vor dem Schaltzeitpunkt $t_k$ (d.h. nach dem letzten Schaltzeitpunkt $t_{k-1}$) fließt, wobei dieser Strom für $\tau \ll T_i$ ungedämpft angenommen wird. Dieser Kreisstrom jedes Schwingkreises (Index i) hat die durch den Phasor $P_{ik}$ gegebene Maximalamplitude.

Zum Schaltzeitpunkt $t_k = t_k + \tau$ addiert sich zu diesem (ungedämpften) Kreisstrom der durch den Schaltzeitpunkt zugeführte Strom, der durch den Zeiger

$$\underline{I}_i(\tau) = I_i e^{-j \Omega_i \tau}$$

nach FIG 34 gegeben ist. Der nach diesem virtuellen Schaltzustand fließende Strom soll, nach Addition über die Schwingkreise, minimal werden.

Anstelle des Minimums dieses Stromes (Funktion f(x)) kann mathematisch auch von der Ableitung df(x)/dx als Zielfunktion ausgegangen und deren Nullstelle als Kriterium der Optimierung verwendet werden.

Für die Suche nach dem Minimum wird berücksichtigt, daß nur Nullstellen der Funktion f' interessieren, welche einem lokalen Minimum zuzuordnen sind. Außerdem muß das nächste lokale Minimum gefunden werden, damit die Schaltzeitpunkte nicht zu stark von einem Startwert entfernt sind, der im Hinblick auf eine sinusförmige Grundwelle des Stromes vorgegeben wird.

Dies wird durch ein iteratives Verfahren erreicht, wobei im ersten Schritt m = O von einem Startwert $x_m = x_O$ ausgegangen wird und dieser Startwert iterativ in Richtung auf kleinere Werte von f' verändert wird, bis praktisch das Minimum erreicht ist. Das entsprechende Programm ist in Fig. 35 dargestellt. Dabei werden im Iterationsschritt (m + l) aus dem im vorangegangenen Iterationsschritt errechneten Wert $x_{(m)}$ die Ableitung $f'(x_m)$ der Funktion f(x) für $x = x_m$ und deren zweite Ableitung $f''(x_m)$ errechnet. Daraus ergibt sich ein verbesserter Wert $x_{(m+l)}$:

$$x_{(m+1)} = x_{(m)} \mp \frac{f'(x_m)}{f''(x_m)}$$

Das positive Vorzeichen entspricht hier einem Einschaltsprung (d.h. $u_s(t)$ soll durch Schalten des Stromrichters erhöht werden), das negative Vorzeichen einem Ausschaltsprung. Die Iteration wird solange fortgesetzt, bis sich die Werte $x_{(m)}$ und $x_{(m+1)}$ um weniger als eine vorgegebene Genauigkeitsgrenze $\delta$ unterscheiden.

Im einzelnen wird in diesem Rechenausdruck statt der zweiten Ableitung $f''(x_m)$ deren Betrag eingesetzt, um ausschließlich Nullstellen zu finden, welche einem Minimum der Zielfunktion zuzuordnen sind. Ist also die erste Ableitung positiv, so wird der Wert verkleinert, ist sie aber negativ, so wird der Wert vergrößert. Dies entspricht der Suche nach einem Minimum.

Wird aber die zweite Ableitung sehr klein, so kann der Quotient einen sehr großen Wert annehmen und das nächste lokale Minimum (die nächste Nullstelle der Ableitung) übergangen werden. Daher wird statt der zweiten Ableitung dessen Maximalwert eingesetzt, indem jeweils anstelle cos(x) der Wert I gesetzt wird. Dadurch wird der Nenner unabhängig von x und es kann für alle Iterationsschritte ein nur einmal errechneter Wert verwendet werden.

Dieses Verfahren führt in der Regel nach fünf Iterationsschritten zu einem auf 1$\mu$s genauen Wert für $t_k = t_{k-1} + X_m$.

Dieser optimale Wert bestimmt einen virtuellen Anregungszustand des Netzes, bei dem der als Zielfunktion angesetzte Gesamtkreisstrom im Netzmodell ein Minimum annimmt. Der virtuelle Zustand des Netzmodelles und des Stromrichters erfüllt also das vorgegebene Optimierungskriterium. Ein tatsächliches, entsprechend dem Netzmodell aufgebautes und an den Wechselrichter angeschlossenes Netzwerk würde daher nicht zu Parallelresonanzen angeregt werden, wenn der Stromrichter zu diesem optimierten Schaltzeitpunkt tatsächlich geschaltet würde. Da aber die Übertragungsfunktion des Netzmodelles an die Übertragungsfunktion des tatsächlichen Netzes angenähert ist, werden Resonanzschwingungen im Netz ebenfalls gedämpft oder jedenfalls nicht angeregt, wenn der Stromrichter zu diesem optimierten Schaltzeitpunkt tatsächlich betätigt wird.

Die Rechenschritte können von üblichen Rechnern so schnell ausgeführt werden, daß der errechnete Wert für $x_m = t - t_{k-1}$ bzw. die auf die Phasenlage des Netzes bezogene Phasenlage $\phi_m(t)$ unmittelbar mit der erfaßten Phasenlage $\phi(t)$ verglichen und der Rechner den Schaltimpuls für die Stromrichterventile abgeben kann.

Für die Optimierung des nächsten Schaltzeitpunktes muß nun berechnet werden, welche Phasoren dem neuen Betriebszustand tatsächlich entsprechen.

Dies kann nach dem bereits erwähnten Bildungsgesetz der Phasoren folgen, wobei aber der Dämpfungsfaktor $\exp(-\tau/T_i)$ berücksichtigtwerden muß. Fig. 36 zeigt den schematischen Ablauf der Optimierung.

Vor Beginn einer neuen Grundperiode stehen im Rechner bereits die Meßgrößen $L_i$, $C_i$ und $R_i$ sowie Startwerte $t_k'$ zur Verfügung. Damit ist der Betriebszustand des virtuellen Systems (Stromrichter und Netzmodell) vor Beginn einer neuen Grundperiode festgelegt.

In einer Programmschleife wird zunächst für die Berechnung des neuen Schaltzeitpunktes $t_k$, zu dem die früheren Schaltzeitpunkte (Index k' mit k' $\leq$ k-1) gehören, die Variable x eingeführt, deren optimaler Wert $x_m$ aus $P_{ik}$ und dem Startwert $x_O$ nach Fig. 35 berechnet wird und den optimalen nächsten Schaltzeitpunkt $t_k = x_m + t_{k-1}$ liefert.

Anschließend erfolgt zu diesem neuen Betriebszustand, der jetzt auch den neuen Zeitpunkt $t_k$ erfaßt, die Berechnung der Phasoren $P_{i(k+1)}$, wozu nach dem erwähnten Bildungsgesetz die Multiplikation mit dem jeweiligen Dämpfungsfaktor und die komplexe Addition des virtuell zugeführten Kreisstromes vorgenommen wird.

Damit stehen die Phasoren $P_{i(k+1)}$ für die Ermittlung des nächsten Schaltzeitpunktes $t_{k+1}$ zur Verfügung.

Die Dämpfung der Kreisströme im Zeitintervall zwischen dem letzten Schaltzeitpunkt $t_{k-1}$ und dem optimierten Zeitpunkt $t_k$, bei dem wieder geschaltet wird, kann aber auch direkt durch Simulation der Schwingkreise in einem Rechner nachgebildet werden.

So kann z.B. aus dem für die Spannung $U_s(t)$ vorgegebenen Pulsmuster oder insbesondere aus Meßwerten der Spannung $U_s(t)$ selbst der Strom $i_i(t\ t_k)$ für die Zeit vor dem Umschaltzeitpunkt $t_k$ errechnet werden. Der Zusammenhang mit dem Phasor $P_{ik}$ lautet dabei:

$$i_i(t > 0) = \mathrm{Re}\left\{ P_{ik}\, e^{-\frac{t - t_{k-1}}{T_i}} \cdot e^{j\Omega_i(t - t_{k-1})} \right\}$$

oder

$$\Omega_i(t - t_{k-1}) = \cos^{-1} \frac{i_i(t < t_k)}{i_i(t < t_k)_{max}}$$

$$|P_{ik}|\, e^{-\frac{t - t_{k-1}}{T_i}} = i_i(t < t_k)_{max}$$

Für den Schwingkreis gelten die bereits erwähnten Beziehungen:

$$u_i = \frac{1}{C_i} \int i_i(t) \cdot dt \quad ; \quad i_i(t)_{max} = \sqrt{2 W_i / L_i}$$

$$W_i = \tfrac{1}{2} L_i \cdot i_i(t)^2 + \tfrac{1}{2} C_i (Us(t) - u_i)^2$$

wobei berücksichtigt ist, daß bei einem Reihenschwingkreis, der in eine Gleichspannungsquelle $U_s$ angeschlossen ist, die kapazitiv gespeicherte Energie zwischen der Gleichspannungsquelle und dem Kondensator (Spannung $u_i$) ausgetauscht wird.

Daher kann für $t = t_k$ bei vorgegebenen $U_s(t)$ und rechnerisch ermitteltem $i_i(t)$ auch der Phasor $\underline{P}_{ik}$ in Betrag und Phase ermittelt werden. Diese werden zur Ermittlung des nächsten Umschaltzeitpunktes nach Fig. 35 benötigt.

Das entsprechende Iterationsprogramm ist in Fig. 37 dargestellt.

Vorteilhaft wird die mögliche Variationsbreite für die Optimierung der Schaltzustände auf einen Maximalwert begrenzt.

Dadurch wird vermieden, daß die Amplituden der Oberschwingungen niedrigerer Ordnungszahlen ansteigen. Außerdem kann durch die Begrenzung des Variationsintervalls sichergestellt werden, daß keine "Pulsdurchdringung" stattfindet, d.h. der optimierte Wert eines späteren Schaltzeitpunktes früher liegt als der optimierte Wert eines früheren Schaltzeitpunktes. Liegt der optimierte Schaltzeitpunkt außerhalb eines durch die Variationsgrenzen angegebenen Bereiches, so wird als optimierter Wert die obere bzw. untere Grenze dieses Intervalls verwendet.

In FIG 8 und 9 ist bereits das Frequenzspektrum der Ausgangsspannung Us(t) des Wechselrichters und der Spannung Un(t) am Stromabnehmer für den Fall gezeigt, daß der Stromrichter zunächst mit einem durch das "Unterschwingungsverfahren"gebildeten Pulsmuster betrieben wird. Werden die Schaltzeitpunkte dieses Pulsmusters als Startwerte für die beschriebene Optimierung verwendet, so zeigt FIG 38 das auf diese Weise erhaltene, optimierte Pulsmuster (d.h. praktisch die entsprechende Spannung Us(t) am Stromrichteranschluß). Beim optimierten Betrieb des Stromrichters haben diese Spannungen Us(t) und Un(t) das Spektrum der FIG 39 und 40.

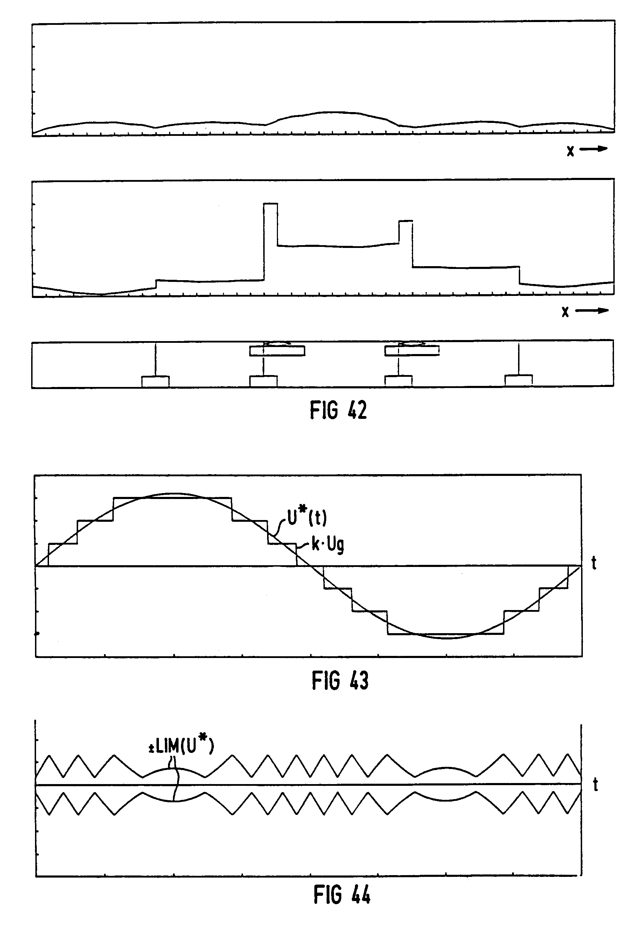

FIG 41 zeigt den Zeitverlauf des Stromes nach der Optimierung. In FIG 42 ist dargestellt, wie sich nun der Effektivwert von Spannung und Strom entlang des Fahrdrahtes ausbildet. Trotz eines gegenüber FIG 8 und 9 vergrößerten Maßstabes erkennt man aus dem Spannungsverlauf, daß praktisch keine stehenden Wellen auftreten. Der Stromrichter erzeugt zwar Stromoberwellen, die prinzipiell nicht vermeidbar sind, jedoch fließt der Oberschwingungsstrom im wesentlichen über die nächstgelegenen Unterwerke, d.h. es werden hauptsächlich Reihenresonanzen angeregt, die aber durch die Unterwerke stark gedämpft werden und sich nicht über das Netz ausbreiten können.

Bei dem bisher geschilderten Verfahren ist von einem Pulsmuster ausgegangen worden, das mittels des eingangs beschriebenen "Unterschwingungsverfahren" gebildet ist und einen nicht-optimierten Betrieb gestattet. Dessen Schaltzeitpunkte liefern jeweils einen Startwert, der durch die Iteration optimiert wird.

Man kann aber auch von einem nicht-optimierten Betrieb ausgehen, wie er in der gleichzeitig eingereichten Anmeldung "Pulssteuerverfahren für einen mehrstufigen Wechselrichter" des gleichen Anmelders beschrieben ist. Dabei werden sowohl die Startwerte wie die Endpunkte des Variationsintervalls in einem Mehrpunkt-Regelverfahren gebildet, das die Ausbildung von Harmonischen niedrigerer Ordnung weitgehend unterdrückt und insbesondere für die hier beschriebene Optimierung geeignet und bestimmt ist. Der Inhalt dieser Anmeldung gehört daher zum Inhalt der hier beschriebenen Optimierung.

Dabei wird davon ausgegangen, daß der Stromrichter seinem Netzanschluß eine elektrische Größe einprägt, die nur bestimmte diskrete Werte annehmen kann. Der Istwert dieser Größe, hier also die Spannung $U_s(t) = k.Ug$ mit $k = -4, -3, ..., +4$ wird von einem kontinuierlich veränderbaren Sollwert $U^*(t) = A . \cos(\omega^*.t)$ subtrahiert und das Integral $\int(U_s(t) - U^*(t))\, dt = J(t)$ bestimmt die Umschaltzeitpunkte:

Sobald $J(t)$ einen oberen Grenzwert LIMh erreicht, wird auf eine höhere Stufe der Ausgangsspannung, also z.B. von $k = 2$ auf $k = 3$, umgeschaltet, wodurch der Integrand sein Vorzeichen ändert und $J(t)$ abnimmt. Wird ein unterer Grenzwert LIMl erreicht, so wird wieder auf eine niedrigere Stufe umgeschaltet und $J(t)$ strebt wieder dem oberen Grenzwert zu.

Dadurch entsteht ein asynchrones Pulsmuster, das aber in eine begrenzte Beziehung zur Frequenz des Sollwertes gesetzt werden kann, indem die Grenzwerte mit der Frequenz des Sollwertes verändert werden.

Insbesondere kann LIMh' $= +$LIM $= -$LIMl und

$$LIM = a . \min(|U^*(t) - k.Ug|) + b$$

gesetzt werden, wobei b ein Minimalwert, $\min(|U^*(t)-k.Ug|)$ der minimale Abstand des Sollwertes von den möglichen Spannungsstufen $k . Ug$ $(k = -4, ... +4)$ und a ein Proportionalitätsfaktor ist. FIG 43 zeigt den Verlauf des Sollwertes $U^*(t)$ und die möglichen Spannungsstufen und FIG 44 die beiden Grenzwerte LIMh und LIMl.

Setzt man im Integral

$$J(t) = J(t_0) + \int_{t_0}^{t} (A . \sin(\omega^* . \tau) - Us(\tau)) . d\tau$$

für $\sin(\omega^* .\tau)$ eine Taylor-Reihe an, die z.B. bereits nach dem ersten Glied abgebrochen wird, so kann man aus der Umschaltbedingung

$$|J(t)| = LIM$$

eine algebraische Gleichung ableiten, die nach t aufgelöst werden kann und den nächsten Umschaltzeitpunkt bestimmt.

Daß die diskret veränderliche Ausgangsspannung zwischen den beiden letzten Schaltzeitpunkten von der gewünschten Sollspannung abgewichen ist, wird also bei der Berechnung des nächsten Schaltintervalles berücksichtigt. Die Zeitflächen der Spannungsabweichung zwischen zwei Schaltvorgängen sind allein durch den Grenzwert LIM vorgegeben und heben sich gegenseitig auf.

Der dabei errechnete Zeitpunkt t kann als Startwert für die beschriebene Optimierung des jeweiligen Schaltzeitpunktes benutzt werden.

Darüber hinaus wird vorteilhaft durch LIM' $= a_1 .$ LIM und LIM'' $= a_2 .$ LIM mit vorgegebenen Konstanten (z.B. $a_1 = 0,8$, $a_2 = 2,0$) auch jeweils eine Bedingung $J(t) = $ LIM' und $J(t) = $ LIM'' vorgegeben, aus denen auf die gleiche Weise Zeitpunkte t' und t'' errechnet werden, die festlegen, wann der früheste bzw. späteste nächste Umschaltzeitpunkt liegen darf.

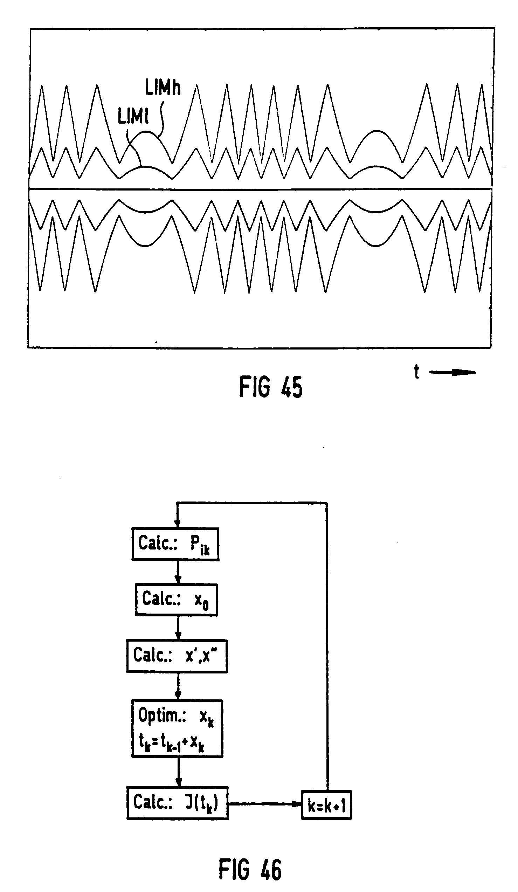

Wird daher bei der Optimierung ein nächster Umschaltzeitpunkt $t_k < t'$ oder $t_k > t''$ errechnet, so wird nicht bei diesem Wert $t_k$, sondern beim entsprechenden Zeitpunkt t' oder t'' gezündet. FIG 45 zeigt den Zeitverlauf der beiden Grenzwerte LIM' und LIM'', die also die mögliche Variationsbreite bei der Optimierung des nach FIG 44 festgelegten Startwertes bestimmen.

Dadurch wird vermieden, daß bei der Optimierung die Ausbildung niedrigerer Oberschwingungen begünstigt wird.

Eine weitere Verbesserung wird im Hinblick auf die Schaltbelastung der einzelnen Schalteinrichtungen des Stromrichters erreicht, indem man ausnutzt, daß häufig zwischen verschiedenen Schalteinrichtungen gewählt werden kann, um eine bestimmte Spannungsstufe zu erzeugen. Die Auswahl kann nach einem entsprechenden Algorithmus derart getroffen werden, daß eine Umschalteinrichtung jeweils für eine bestimmte Dauer (Schonzeit) nicht betätigt wird und auch im Mittel die Schaltdauern aller Umschalteinrichtungen gleich sind.

FIG 46 zeigt die Bildung der optimierten Schaltzeitpunkte nach diesem Verfahren: Zur Bestimmung des Umschaltzeitpunktes $t_k$ wird zunächst der Phasor $P_{ik}$ vor dem Umschalten berechnet. Dann erfolgt die Berechnung eines Startwertes $x_o$ für das Intervall $t_k$ - $t_{k-1}$ nach der Bedingung $|J(t_k)|$ = LIM, und die Berechnung der Endpunkte t' und t'' nach den Bedingungen J(t') = LIM' und J(t'') = LIM'', wodurch die Grenzwerte x' = t'-$t_{k-1}$ und x'' = t''-$t_{k-1}$ für die Variation von $x_O$ festgelegt werden. Daran schließt sich die Variation selbst an, die zu dem optimierten Wert $x_m$ bzw. zu dem Zeitpunkt t = $t_{k-1}$ + $x_m$ führt, zu dem der tatsächliche Umschaltvorgang im Stromrichter vorgenommen wird. Zuletzt wird das Integral

$$J(t_k) = \int_{t_{k-1}}^{t_k} \left( u^*(\tau) - u s(\tau) \right) d\tau \quad + \quad J(t_{k-1})$$

gebildet, das als Wert $J_O$ für die Berechnung des nächsten Startwertes benötigt wird.

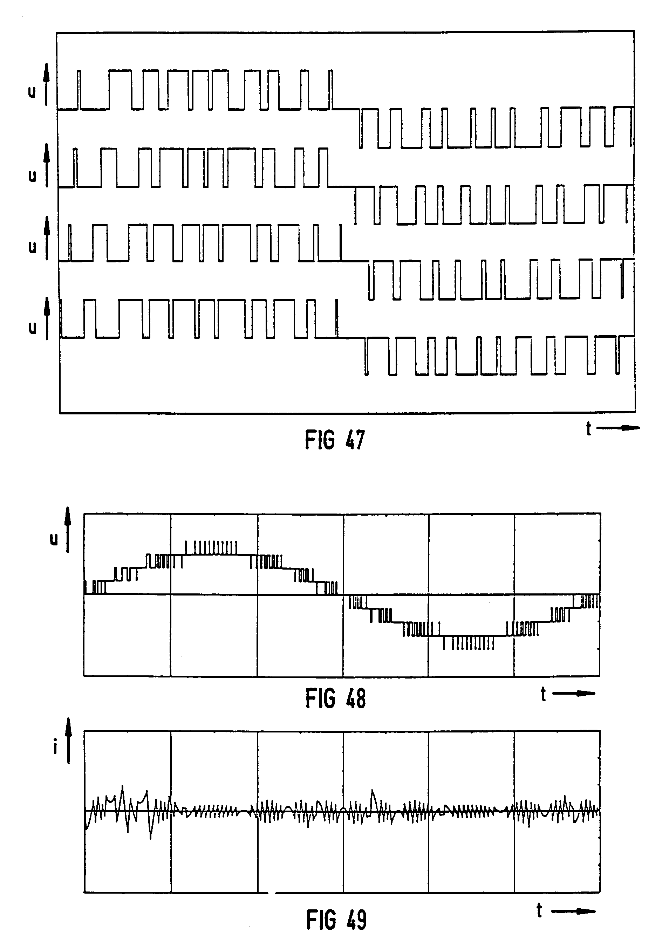

In FIG 47 ist das sich dadurch ergebende Pulsmuster für die vier Einzel-4-Quadranten-Steller der FIG 3 und in FIG 48 deren Addition zur Anschlußspannung (Steller-Ersatzspannung) Us(t) gezeigt. Der Störstrom nach FIG 49 zeigt im Vergleich zu FIG 6 einen unregelmäßigen, nur näherungsweise auf die Grundschwingung synchronisierten Verlauf, jedoch sind in Vergleich zu FIG 41 niedrigere Frequenzen wesentlich schwächer ausgebildet.

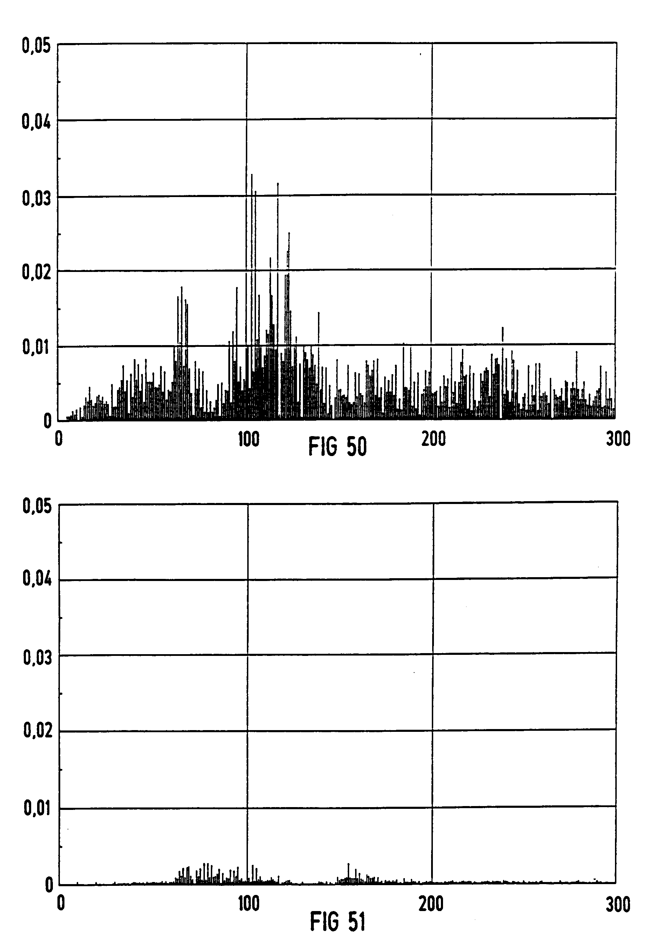

Im Frequenzspektrum von Us(t) (FIG 50) sind hauptsächlich Frequenzen angeregt, bei denen die Impedanz des Netzes minimal ist. Entsprechend treten in der Spannung Un(t) am Stromabnehmer nur noch schwache Anregungen des Frequenzspektrums (FIG 51) auf.

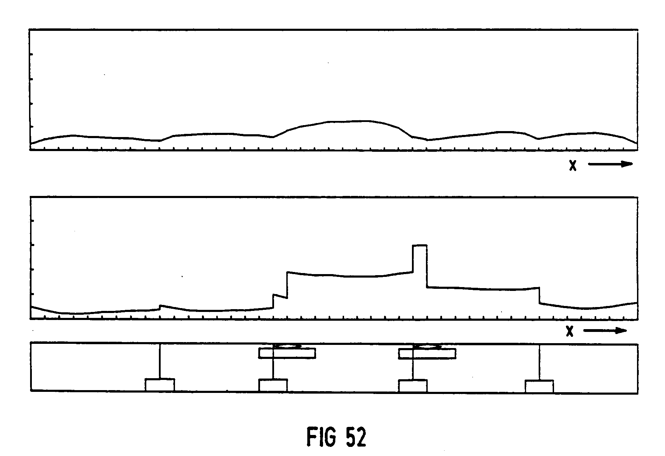

Wie FIG 52 der Gegensatz zu der FIG 42 zeigt, ist die Dämpfung von Störstrom und Störspannung noch stärker auf die benachbarten Unterwerke lokalisiert und aus dem Vergleich mit dem herkömmlichen Verfahren (FIG 10 bis 12) folgt, daß tatsächlich eine Ausbreitung stehender Wellen weitgehend unterdrückt ist.

**Patentansprüche**

1. Verfahren zum optimierten Betrieb eines Stromrichters, der an den Abgriff eines Netzes angeschlossen ist und Schalteinrichtungen enthält, die mittels Zündwinkeln, die auf eine Periode einer vorgegebenen Grundfrequenz bezogen sind, steuerbar sind, wobei während des Stromrichterbetriebes fortlaufend momentane Meßgrößen für eine die momentane Impedanz oder den momentanen Leitwert des Netzes beschreibende Übertragungsfunktion gebildet und die Zündwinkel nach einem Optimierungskriterium bestimmt werden, **dadurch gekennzeichnet**, daß die Zündwinkel aus einem virtuellen System errechnet werden, das den Stromrichter und ein daran angeschlossenes, durch eine Modell-Übertragungs funktion definiertes virtuelles Modell umfaßt, wobei die Modell-Übertragungsfunktion aus den momentanen Meßgrößen derart bestimmt wird, daß die Übertragungsfunktion zumindest im Bereich der Maxima oder Minima praktisch mit der Modell-Übertragungsfunktion übereinstimmt.

2. Verfahren nach Anspruch 1, **dadurch gekennzeichnet**, daß die Zündwinkel so berechnet werden, daß im virtuellen Betriebszustand eine Zielfunktion der Zündwinkel ein Optimum annimmt.

3. Verfahren nach Anspruch 2, **dadurch gekennzeichnet**, daß eine im Modell virtuell gespeicherte Energie oder ein im Modell virtuell fließender Strom als Zielfunktion der Zündwinkel verwendet wird und daß die Zündwinkel so bestimmt werden, daß die Änderung der Zielfunktion bei einer virtuellen Änderung der Zündwinkel Null wird.

4. Verfahren zum optimierten Betrieb eines an ein Netz angeschlossenen Stromrichters mit Schaltelementen, die zu steuerbaren Schaltzeitpunkten betätigt werden, mit folgenden Merkmalen:
   a) Am netzseitigen Anschluß des Stromrichters werden zwei unterschiedliche elektrische Größen während eines durch die Schaltzeitpunkte festgelegten Betriebszustandes des Stromrichters fortlaufend erfaßt und aus den erfaßten Größen wird durch Fourier-Transformation eine gemessene Übertragungsfunktion bestimmt,
   b) für virtuelle Schwingkreise, die jeweils aus einer Induktivität, einer Kapazität und einem Widerstand bestehen und ein virtuell vom Stromrichter gespeistes Modell darstellen, wird eine virtuelle Übertragungsfunktion gebildet, wobei die Parameter der virtuellen Schwingkreise durch Annäherung

30

der virtuellen Übertragungsfunktion des Modells an die gemessene Übertragungsfunktion bestimmt werden,

c) für einen virtuellen Betriebszustand des Netzmodells, der durch virtuelle Schaltzeitpunkte des Stromrichters bestimmt ist, werden durch Variation der virtuellen Schaltzeitpunkte optimale Werte errechnet, bei denen eine Zielfunktion der virtuellen Schaltzeitpunkte ein vorgegebenes Optimierungskriterium erfüllt,

d) die Schaltelemente des Stromrichters werden zu Zeitpunkten betätigt, die durch die optimalen Werte der virtuellen Schaltzeitpunkte bestimmt sind.

5. Verfahren nach Anspruch 4, **dadurch gekennzeichnet**, daß für jeden virtuellen Schwingkreis ein Maximalwert eines virtuellen Kreisstroms als Funktion der virtuellen Schaltzeitpunkte errechnet wird und daß die virtuellen Schaltzeitpunkte derart variiert werden, daß bei den optimalen Werten eine aus den virtuellen Kreisströmen der Schwingkreise gebildete Summe einen minimalen Wert annimmt.

6. Verfahren nach Anspruch 5, **dadurch gekennzeichnet**, daß

a) nach der Betätigung eines Umschaltelementes des Stromrichters der optimale Wert für die nächste Betätigung eines Umschaltelementes errechnet wird, indem

i) für einen Betriebszustand, der durch vorangegangene Zeitschaltpunkte bestimmt ist, für die virtuellen Schwingkreise jeweils ein erster virtueller Schwingkreisstrom errechnet wird,

ii) für einen auf die vorangegangenen Zeitschaltpunkte folgenden virtuellen Schaltzeitpunkt ein Startwert vorgegeben und jeweils ein einem Schwingkreis virtuell zugeführter Strom errechnet wird, dessen Amplitude durch die Parameter des virtuellen Schwingkreises und einer der Betätigung einer Umschalteinrichtung zugeordneten Spannungsänderung bestimmt ist und dessen Phasenlage durch den Startwert bestimmt wird,

iii) durch phasenrichtige Addition des virtuell zugeführten Stromes zu dem ersten virtuellen Kreisstrom jeweils ein zweiter virtueller Kreisstrom der virtuellen Schwingkreise errechnet wird, und

iv) der Startwert variiert wird, bis ein Mittelwert der Beträge der zweiten virtuellen Kreisströme einen minimalen Wert annimmt, und

b) daß zu dem durch den optimalen Wert vorgegebenen Zeitpunkt eine Umschalteinrichtung betätigt und anschließend der optimale Wert für die nächste Betätigung einer Umschalteinrichtung errechnet wird.

7. Verfahren nach Anspruch 6, **dadurch gekennzeichnet**, daß der durch vorangegangene Schaltzeitpunkte bestimmte Betriebszustand durch Meßwerte für zumindest eine Ausgangsgröße des Stromrichters erfaßt und der erste Kreisstrom aus diesen Meßwerten errechnet wird.

8. Verfahren nach Anspruch 4, **dadurch gekennzeichnet**, daß für die virtuellen Schaltzeitpunkte Startwerte vorgegeben werden, die durch die Variation verbessert werden.

9. Verfahren nach Anspruch 8, **dadurch gekennzeichnet**, daß die Startwerte dadurch vorgegeben werden, daß jeweils nach einem Schaltzeitpunkt eine vorausberechnete Differenz aus einem Sollwert und einem Istwert für eine der elektrischen Größen integriert wird und der Startwert dadurch bestimmt wird, daß die integrierte Differenz einen vorgegebenen Grenzwert erreicht.

10. Verfahren nach Anspruch 9, **dadurch gekennzeichnet**, daß der Grenzwert in Abhängigkeit von der Differenz des Sollwertes vom Istwert vorgegeben wird.

11. Verfahren nach Anspruch 9, **dadurch gekennzeichnet**, daß jeweils ein frühester und ein spätester Grenzwert für den optimalen Wert eines Schaltzeitpunktes dadurch bestimmt wird, daß die integrierte Differenz einen vorgegebenen unteren und oberen Grenzwert erreicht.

12. Vorrichtung zur Steuerung eines Stromrichters mit Schaltmitteln, die einem Netz Pulse einprägen, mit

a) einer Detektoreinrichtung, die während des Stromrichterbetriebes jeweils innerhalb einer Periode einer vorgegebenen Grundfrequenz den Verlauf zweien elektrische Größer erfaßt, die zwischen dem netzseitigen Ausgang des Stromrichters und einem Anschlußpunkt am Netz auftreten,

b) einer ersten an die Detektoreinrichtung angeschlossenen Recheneinrichtung, die aus den zwei erfaßten Größen eine Fourier-Funktion des Quotienten der beiden Größen errechnet, wobei die erste Recheneinrichtung Meßgrößen liefert, die die Parameter eines virtuellen, Resonanzfrequenzen aufweisenden Modells derart festlegen, daß eine dem Modell entsprechende Modellübertragungsfunktion zumindest im Bereich der Resonanzfrequenzen mit der größeren Fourier-Funktion übereinstimmt,

c) einer zweiten, an die erste Recheneinrichtung angeschlossenen Recheneinrichtung mit Mitteln zur Pulsbreitenmodulation, Mitteln zur Optimierung und Mitteln zur Schaltimpulserzeugung, wobei

i) die Mittel zur Modulation aus einem Sollwert, der für eine der beiden elektrischen Größen vorgegeben wird, Startwerte für auf die Periode der Grundfrequenz bezogene Phasenlagen von Impulslagen bilden,

ii) die Mittel zur Optimierung aus den Startwerten und den Meßgrößen optimierte Werte für die Impulsflanken bilden, und

iii) die Mittel zur Schaltimpulserzeugung jeweils bei den optimierten Werten der Impulsflanken Schaltimpulse zum Betätigen der Schaltelemente abgeben.

13. Vorrichtung nach Anspruch 12, **dadurch gekennzeichnet**, daß die erste Recheneinrichtung von einem Programm gesteuert ist, das

i) aus den erfaßten elektrischen Größen jeweils für eine Transformationsfrequenz, die einer Harmonischen der Grundfrequenz entspricht und innerhalb eines vorgegebenen Frequenzbereiches liegt, jeweils den Fourier-Koeffizienten jeder elektrischen Größe und deren Quotienten ermittelt, und

ii) aus plausiblen Werten des Quotienten dessen Maximalwerte und zu einem Maximalwert jeweils die entsprechende Transformationsfrequenz und den Bereich der Transformationsfrequenz, in dem der Quotient größer als ein vorgegebener Bruchteil des Maximalwertes ist, ermittelt und entsprechende Meßgrößen für die Resonanzamplitude, Resonanzfrequenz und die Bandbreite eines im Modell enthaltenen virtuellen Schwingkreises ausgibt.

14. Vorrichtung nach Anspruch 12, **dadurch gekennzeichnet**, daß die zweite Recheneinrichtung von einem Programm gesteuert ist, das jeweils nach einem Betätigen einer Umschalteinrichtung einen neuen Startwert bildet, nach einem vorgegebenen Optimierungskriterium für eine vom neuen Start wert abhängige Zustandsgröße des Modells durch virtuelle Variation des Startwertes den optimierten Wert einer neuen Impulseflanke berechnet und aus dem optimierten Wert den Zeitpunkt für die nächste Betätigung der Schalteinrichtungen bestimmt.

15. Vorrichtung zum optimierten Betrieb eines an ein Netz angeschlossenen Stromrichters, der dem Netz Pulse einprägt, deren Flanken durch Betätigen von Schalteinrichtungen des Stromrichters bestimmt sind, mit

a) zwei an der Verbindung zwischen Stromrichter und Netz angeordneten Meßeinrichtungen zum Messen von Strom und Spannung,

b) einer ersten Recheneinrichtung, die

i) jeweils während einer Periode einer vorgegebenen Grundfrequenz Fourier-Koeffizienten des gemessenen Stromes und der gemessenen Spannung berechnet,

ii) für plausible Werte eines Quotienten der gemessenen Koeffiziente die Maximalwerte als Funktion der Fourierfrequenz und für jeden Maximalwert die dazu gehörende Fourierfrequenz und Halbwertsbreite bestimmt und

iii) jeweils einem Maximalwert, seiner Frequenz und seiner Halbwertsbreite die Resonanzamplitude, Resonanzfrequenz und Resonanzbreite eines virtuellen Schwingkreises derart zuordnet, daß die Übertragungsfunktion von Strom und Spannung in einem durch die virtuellen Schwingkreise gebildeten Modell zumindest im Bereich der Resonanzfrequenzen betragsmäßig mit den plausiblen Werten des Quotienten übereinstimmt,

c) Steuermitteln, die aus einem vorgegebenen Sollwert Startwerte für die auf die Grundperiode bezogenen Flanken der vom Stromrichter einzuprägenden Impulse erzeugen, und

d) einer zweiten Recheneinrichtung, die

i) jeweils nach einer Flanke eines Pulses aus dem Startwert für die nächste Flanke eine Zustandsgröße für jeden virtuellen Schwingkreis ermittelt,

ii) durch virtuelle Variation des Startwertes einen optimalen Wert für die nächste Flanke berechnet, bei dem die Summe der Zustandsgröße dieser Schwingkreise ein Optimierungskriterium erfüllt, und

iii) beim optimalen Wert für die nächste Flanke ein Zündsignal zum Betätigen der Umschalteinrichtungen abgibt.

**EP 0 491 689 B1**

**16.** Vorrichtung zum optimalen Betrieb eines spannungseinprägenden Pulswechselrichters, der über ein Filter oder ein anderes Impedanzelement an ein Netz angeschlossen ist, mit

a) zwei an die Enden des Impedanzelementes angeschlossenen Spannungsmeßeinrichtungen,

b) einer ersten Recheneinrichtung, die jeweils während einer Periode einer vorgegebenen Grundfrequenz den Quotienten der komplexen Fourier-Koeffizienten der gemessenen Spannungen berechnet und für plausible Werte des Quotienten die Maximalwerte und zu einem Maximalwert jeweils die entsprechende Fourierfrequenz und Halbwertsbreite ermittelt und aus den Maximalwerten, Fourierfrequenzen und Halbwertsbreiten die Resonanzamplituden, Resonanzfrequenzen und Resonanzbreiten virtueller Schwingkreise ermittelt, die ein virtuelles Modell zur Simulation des Netzes bilden,

c) Steuermitteln, die aus einem vorgegebenen Sollwert für die dem Netz eingeprägte Spannung Startwerte erzeugen, die den auf die Grundperiode bezogenen Flanken von Spannungspulsen entsprechen, und

d) einer zweiten Recheneinrichtung, die jeweils nach einer Flanke eines Spannungspulses aus dem Startwert für die nächste Flanke eine Zustandsgröße für jeden virtuellen Schwingkreis ermittelt, durch virtuelle Variation des Startwertes einen optimalen Wert für die nächste Flanke berechnet, bei dem die Summe der Zustandsgrößen dieses Schwingkreises ein Optimierungskriterium erfüllt, und beim optimalen Wert für die nächste Flanke ein Zündsignal zum Betätigen der Schalteinrichtungen abgibt.

## Claims

**1.** Method for the optimized operation of a converter which is connected to the tap of a system and contains switching devices which are controllable by means of ignition angles which are related to a period of a specified fundamental frequency, whereby during the operation of the converter instantaneous measured variables for a transfer function describing the instantaneous impedance or the instantaneous conductance of the system are continuously formed and the ignition angles are determined according to an optimization criterion, characterized in that the ignition angles are calculated from a virtual system which comprises the converter and a virtual model connected thereto and defined by a model transfer function, whereby the model transfer function is determined from the instantaneous measured variables in such a way that the transfer function at least in the region of the maxima or minima practically corresponds with the model transfer function.

**2.** Method according to claim 1, characterized in that the ignition angles are calculated in such a way that in the virtual operational state a target function of the ignition angles assumes an optimum.

**3.** Method according to claim 2, characterized in that an energy virtually stored in the model or a current virtually flowing in the model is used as target function of the ignition angles and in that the ignition angles are determined in such a way that the alteration of the target function with a virtual alteration of the ignition angles becomes zero.

**4.** Method for the optimized operation of a converter connected to a system with switching elements which are actuated at controllable switching instants, having the following features:

a) at the system-side terminal of the converter two different electrical variables are continuously detected during an operational state of the converter established by the switching instants and from the detected variables by means of Fourier transformation a measured transfer function is determined,

b) for virtual oscillating circuits which in each case comprise an inductance, a capacitance and a resistance and represent a model virtually supplied by the converter, a virtual transfer function is formed, whereby the parameters of the virtual oscillating circuits are determined through approximation of the virtual transfer function of the model to the measured transfer function,

c) for a virtual operational state of the system model which is determined by virtual switching instants of the converter, through variation of the virtual switching instants optimum values are calculated, where a target function of the virtual switching instants fulfils a specified optimization criterion,

d) the switching elements of the converter are actuated at instants which are determined by the optimum values of the virtual switching instants.

33

**5.** Method according to claim 4, characterized in that for each virtual oscillating circuit a maximum value of a virtual circulating current is calculated as function of the virtual switching instants and in that the virtual switching instants are varied in such a way that with the optimum values a sum formed from the virtual circulating currents of the oscillating circuits assumes a minimum value.

**6.** Method according to claim 5, characterized in that

a) after the actuation of a changeover element of the converter the optimum value for the next actuation of a changeover element is calculated, in that

i) for an operational state which is determined by preceding time switching points, for the virtual oscillating circuits in each case a first virtual oscillating circuit current is calculated,

ii) for a virtual switching instant following the preceding time switching points a starting value is specified and in each case a current virtually supplied to an oscillating circuit is calculated, the amplitude of which is determined by the parameters of the virtual oscillating circuit and a voltage change associated with the actuation of a changeover device and the phase angle of which is determined by the starting value,

iii) through in-phase addition of the virtually supplied current to the first virtual circulating current in each case a second virtual circulating current of the virtual oscillating circuits is calculated, and

iv) the starting value is varied until a mean value of the amounts of the second virtual circulating currents assumes a minimum value, and

b) at the instant specified by the optimum value a changeover device is actuated and subsequently the optimum value for the next actuation of a changeover device is calculated.

**7.** Method according to claim 6, characterized in that the operational state determined by preceding switching instants is detected by measured values for at least one output variable of the converter and the first circulating current is calculated from these measured values.

**8.** Method according to claim 4, characterized in that for the virtual switching instants starting values are specified which are improved through the variation.

**9.** Method according to claim 8, characterized in that the starting values are specified in that in each case after a switching instant a predicted difference from a desired value and an actual value for one of the electrical variables is integrated and the starting value is determined by the integrated difference achieving a specified limiting value.

**10.** Method according to claim 9, characterized in that the limiting value is specified in dependence upon the difference of the desired value from the actual value.

**11.** Method according to claim 9, characterized in that in each case an earliest and a latest limiting value for the optimum value of a switching instant is determined by the integrated difference achieving a specified lower and upper limiting value.

**12.** Device for the control of a converter with switching means which apply pulses to a system, having

a) a detector device which, during the converter operation, in each case detects within a period of a specified fundamental frequency the waveform of two electrical variables which occur between the system-side output of the converter and a connecting point at the system,

b) a first computing device connected to the detector device which calculates from the two detected variables a Fourier function of the quotient of the two variables, whereby the first computing device supplies measured variables which establish the parameters of a virtual model having resonance frequencies in such a way that a model transfer function corresponding to the model corresponds with the larger Fourier function at least in the region of the resonance frequencies,

c) a second computing device connected to the first computing device with means for pulse-width modulation, means for optimization and means for switching-pulse generation, whereby

i) the means for modulation from a desired value which is specified for one of the two electrical variables form starting values for phase angles of pulse positions related to the period of the fundamental frequency,

ii) the means for the optimization form from the starting values and the measured variables optimized values for the pulse flanks, and

34

EP 0 491 689 B1

iii) the means for the switching-pulse generation in each case deliver with the optimized values of the pulse flanks switching pulses for the actuation of the switching elements.

**13.** Device according to claim 12, characterized in that the first computing device is controlled by a program which

i) determines from the detected electrical variables in each case for a transformation frequency, which corresponds to a harmonic of the fundamental frequency and lies within a specified frequency range, in each case the Fourier coefficient of each electrical variable and its quotient, and

ii) determines from plausible values of the quotient its maximum values and at a maximum value in each case the appropriate transformation frequency and the range of the transformation frequency, in which the quotient is larger than a specified fraction of the maximum value, and issues appropriate measured variables for the resonance amplitude, resonance frequency and the bandwidth of a virtual oscillating circuit contained in the model.

**14.** Device according to claim 12, characterized in that the second computing device is controlled by a program, which after an actuation of a changeover device in each case forms a new starting value, which calculates the optimized value of a new pulse flank according to a specified optimization criterion for a state variable of the model, dependent on the new starting value through virtual variation of the starting value, and which determines from the optimized value the instant for the next actuation of the switching devices.

**15.** Device for the optimized operation of a converter connected to a system, which applies pulses to the system, the flanks of which are determined through actuation of switching devices of the converter, having

a) two measuring devices arranged at the connection between converter and system for measuring current and voltage,

b) a first computing device, which

i) in each case during a period of a specified fundamental frequency calculates Fourier coefficients of the measured current and the measured voltage,

ii) determines for plausible values of a quotient of the measured coefficients the maximum values as a function of the Fourier frequency and determines for each maximum value the appertaining Fourier frequency and half-value width, and

iii) in each case allocates the resonance amplitude, resonance frequency and resonance width of a virtual oscillating circuit to a maximum value, its frequency and its half-value width, in such a way that the transfer function of current and voltage in a model formed by the virtual oscillating circuits corresponds, at least in the range of the resonance frequencies, in terms of absolute values with the plausible values of the quotient,

c) control means which generate from a specified desired value starting values for the flanks of the pulses to be applied by the converter, which flanks are related to the fundamental period, and

d) a second computing device, which

i) in each case after a flank of a pulse determines from the starting value for the next flank a state variable for each virtual oscillating circuit,

ii) through virtual variation of the starting value calculates an optimum value for the next flank, where the sum of the state variable of these oscillating circuits fulfils an optimization criterion, and

iii) with optimum value for the next flank delivers an ignition signal for the actuation of the changeover devices.

**16.** Device for the optimum operation of a voltage-applying pulse inverter, which is connected by way of a filter or another impedance element to a system, having

a) two voltage measuring devices connected to the ends of the impedance element,

b) a first computing device, which in each case during a period of a specified fundamental frequency calculates the quotient of the complex Fourier coefficients of the measured voltages and determines for plausible values of the quotient the maximum values and for a maximum value in each case determines the appropriate Fourier frequency and half-value width and determines, from the maximum values, Fourier frequencies and half-value widths, the resonance amplitudes, resonance frequencies and resonance widths of virtual oscillating circuits, which form a virtual model for the simulation of the system,

35

c) control means which generate, from a specified desired value for the voltage applied to the system, starting values which correspond to the flanks of voltage pulses related to the fundamental period, and

d) a second computing device which in each case after a flank of a voltage pulse determines, from the starting value for the next flank, a state variable for each virtual oscillating circuit, which device calculates through virtual variation of the starting value an optimum value for the next flank, where the sum of the state variables of this oscillating circuit fulfils an optimization criterion and with the optimum value for the next flank delivers an ignition signal for the actuation of the switching devices.

**Revendications**

1. Procédé pour faire fonctionner d'une manière optimisée le convertisseur de courant, qui est raccordé à la prise d'un réseau et comporte des dispositifs de commutation, qui peuvent être commandés au moyen d'angles d'amorçage, qui sont rapportés à une période associée à une fréquence de base prédéterminée, selon lequel pendant le fonctionnement du convertisseur de courant, des grandeurs de mesure instantanées sont formées en permanence pour une fonction de transfert qui décrit l'impédance instantanée et l'état de conduction instantané du réseau, et les angles d'amorçage sont déterminés selon un critère d'optimisation, caractérisé par le fait que les angles d'amorçage sont calculés à partir d'un système virtuel, qui comprend le convertisseur de courant et un modèle virtuel qui lui est raccordé et qui est défini par une fonction de transfert modèle, la fonction de transfert modèle étant déterminée à partir des grandeurs de mesure instantanées de telle sorte que la fonction de transfert coïncide pratiquement avec la fonction de transfert modèle, au moins dans la zone des maxima ou des minima.

2. Procédé suivant la revendication 1, caractérisé par le fait que les angles d'amorçage sont calculés de telle sorte que dans l'état de fonctionnement virtuel, une fonction de performance des angles d'amorçage prend une valeur optimale.

3. Procédé suivant la revendication 2, caractérisé par le fait qu'une énergie accumulée virtuellement dans le modèle ou un courant circulant virtuellement dans le modèle est utilisée en tant que fonction de performance des angles d'amorçage et que les angles d'amorçage sont déterminés de telle sorte que la variation de la fonction de performance s'annule lors d'une variation virtuelle des angles d'amorçage.

4. Procédé pour faire fonctionner de façon optimisée un convertisseur de courant, qui est raccordé à un réseau et comporte des éléments de commutation, qui sont actionnés à des instants de commutation devant être commandés, présentant les particularités suivantes :

   a) sur la borne du convertisseur de courant, située côté réseau, deux grandeurs électriques différentes sont détectées en permanence pendant un état de fonctionnement du convertisseur de courant, qui est fixé par les instants de commutation, et une fonction de transfert mesurée est déterminée à partir des grandeurs détectées au moyen d'une transformation de Fourier,

   b) pour des circuits oscillants virtuels, qui sont constitués respectivement par une inductance, une capacité et une résistance et représentent un modèle alimenté virtuellement par le convertisseur de courant, une fonction de transfert virtuelle est formée, les paramètres des circuits oscillants virtuels étant déterminés par approximation de la fonction de transfert mesurée par la fonction de transfert virtuel du modèle,

   c) pour un état de service virtuel du modèle du réseau, qui est déterminé par des instants de commutation virtuels du convertisseur de courant, des valeurs optimales, pour lesquelles une fonction de performance des instants de commutation virtuels satisfait à un critère d'optimisation prédéterminé, sont calculées au moyen d'une modification des instants de commutation virtuels,

   d) les éléments de commutation du convertisseur de courant sont actionnés à des instants qui sont déterminés par les valeurs optimales des instants de commutation virtuels.

5. Procédé suivant la revendication 4, caractérisé par le fait que pour chaque circuit oscillant virtuel, une valeur maximale d'un courant virtuel du circuit est calculée en fonction des instants de commutation virtuelle, et qu'on modifie les instants de commutation virtuels de manière que, pour les valeurs optimales, une somme formée par les courants virtuels des circuits oscillants prend une valeur minimale.

6. Procédé suivant la revendication 5, caractérisé par le fait que

a) après actionnement d'un élément de commutation du convertisseur de courant, la valeur optimale est calculée pour l'actionnement immédiatement suivant d'un élément de commutation par le fait que

i) pour un état de service, qui est déterminé par des instants de commutation précédents, respectivement un premier courant virtuel est calculé pour les circuits oscillants virtuels,

ii) pour un instant de commutation virtuel qui succède aux instants de commutation précédents, une valeur de départ est prédéterminée et respectivement un courant envoyé virtuellement à un circuit oscillant est calculé, courant dont l'amplitude est déterminée par les paramètres du circuit oscillant virtuel et d'une variation de tension associée à l'actionnement d'un dispositif de commutation et dont la position de phase est déterminée par la valeur de départ,

iii) respectivement un second courant virtuel des circuits oscillants virtuels est calculé par addition, correcte du point de vue de la phase, du courant envoyé de façon virtuelle au premier courant virtuel d'un circuit oscillant, et

iv) la valeur de départ est modifiée jusqu'à ce qu'une moyenne des valeurs des deux courants virtuels des circuits oscillants prenne une valeur minimale, et

b) qu'à l'instant prédéterminé par la valeur optimale, un dispositif de commutation est actionné et qu'ensuite la valeur optimale est calculée pour l'actionnement immédiatement suivant d'un dispositif de commutation.

7. Procédé suivant la revendication 6, caractérisé par le fait que l'état de service, déterminé par des instants de commutation précédents, est détecté par des valeurs de mesure pour au moins une grandeur de sortie du convertisseur de courant et le premier courant des circuits oscillants est calculé à partir de ces valeurs de mesure.

8. Procédé suivant la revendication 4, caractérisé par le fait que des valeurs de départ, qui sont améliorées par la modification, sont prédéterminées pour les instants de commutation virtuels.

9. Procédé suivant la revendication 8, caractérisé par le fait que les valeurs de départ sont prédéterminées par le fait que respectivement après un instant de commutation, une différence calculée au préalable entre une valeur de consigne et une valeur réelle pour l'une des grandeurs électriques est intégrée et que la valeur de départ est déterminée par le fait que la différence intégrée atteint une valeur limite prédéterminée.

10. Procédé suivant la revendication 9, caractérisé par le fait que la valeur limite est prédéterminée en fonction de la différence entre la valeur de consigne et la valeur réelle.

11. Procédé suivant la revendication 9, caractérisé par le fait que respectivement une valeur limite la plus précoce et une valeur limite la plus tardive pour la valeur optimale d'un instant de commutation sont déterminées par le fait que la différence intégrée atteint une valeur limite inférieure prédéterminée et une valeur limite supérieure prédéterminée.

12. Dispositif pour la commande d'un convertisseur de courant comportant des moyens de commutation, qui injectent des impulsions dans un réseau, comportant

a) un dispositif de détection, qui, pendant le fonctionnement du convertisseur de courant, détecte, respectivement au cours d'une période correspondant à une fréquence de base prédéterminée, l'allure de deux grandeurs électriques qui apparaissent entre la sortie, située côté réseau, du convertisseur de courant et un point de raccordement au réseau,

b) un premier dispositif de calcul, qui est raccordé au dispositif de détection et qui calcule, à partir des deux grandeurs détectées, une fonction de Fourier du quotient des deux grandeurs, le premier dispositif de calcul délivrant des grandeurs de mesure qui fixent les paramètres d'un modèle virtuel possédant des fréquences de résonance, de sorte qu'une fonction de transfert de modèle, qui correspond au modèle, coïncide, au moins au voisinage des fréquences de résonance, avec la fonction de Fourier supérieure,

c) un second dispositif de calcul, qui est raccordé au premier dispositif de calcul et comporte des moyens de modulation d'impulsions en durée, des moyens d'optimisation et des moyens de production d'impulsions de commutation,

i) les moyens de modulation formant, à partir d'une valeur de consigne qui est prédéterminée pour l'une des deux grandeurs électriques, des valeurs de départ pour des positions de phase, rapportées à la période correspondant à la fréquence de base, de positions d'impulsions,

ii) les moyens d'optimisation forment, à partir des valeurs de départ et des grandeurs de mesure, des valeurs optimisées pour les flancs des impulsions, et

iii) les moyens de protection d'impulsions de commutation délivrent, respectivement pour les valeurs optimisées des flancs d'impulsions, des impulsions de commutation servant à actionner les éléments de commutation.

13. Dispositif suivant la revendication 12, caractérisé par le fait que le premier dispositif de calcul est commandé par un programme, qui

i) détermine, à partir des grandeurs électriques détectées, respectivement pour une fréquence de transformation qui correspond à un harmonique de la fréquence de base et est située à l'intérieur d'une gamme prédéterminée de fréquences, respectivement les coefficients de Fourier des différentes grandeurs électriques et leurs quotients, et

ii) détermine, à partir de valeurs vraisemblables du quotient des valeurs maximales de ces valeurs et d'une valeur maximale, respectivement la fréquence correspondante de transformation et la gamme de la fréquence de transformtion, dans laquelle le quotient est supérieur à une fraction prédéterminée de la valeur maximale, et délivre des grandeurs de mesure correspondantes pour l'amplitude de résonance, la fréquence de résonance et la largeur de bande d'un circuit oscillant virtuel contenu dans le modèle.

14. Dispositif suivant la revendication 12, caractérisé par le fait que le second dispositif de calcul est commandé par un programme qui forme, respectivement après l'actionnement d'un dispositif de commutation, une nouvelle valeur de départ, calcule, selon un critère prédéterminé d'optimisation pour une grandeur d'état du modèle, qui dépend de la nouvelle valeur de départ, et au moyen d'une variation virtuelle de la valeur de départ, la valeur optimisée d'un nouveau flanc d'impulsion et détermine, à partir de la valeur optimisée, l'instant de l'actionnement immédiatement suivant des dispositifs de commutation.

15. Dispositif pour faire fonctionner de façon optimisée un convertisseur de courant raccordé à un réseau et qui injecte, dans le réseau, des impulsions dont les flancs sont déterminés par l'actionnement de dispositifs de commutation du convertisseur de courant, comportant

a) deux dispositifs de mesure disposés dans la liaison entre le convertisseur de courant et le réseau et qui servent à mesurer le courant et la tension,

b) un premier dispositif de calcul, qui

i) calcule, respectivement pendant une période correspondant à une fréquence de base prédéterminée, des coefficients de Fourier du courant mesuré et de la tension mesurée,

ii) détermine, pour des valeurs vraisemblables d'un quotient des coefficients mesurés, les valeurs maximales en fonction de la fréquence de Fourier et pour chaque valeur maximale la fréquence de Fourier et la largeur à mi-valeur, qui leur sont associées, et

iii) associe respectivement à une valeur maximale, à sa fréquence et à sa largeur à demi-valeur, l'amplitude de résonance, la fréquence de résonance et la largeur de résonance d'un circuit oscillant virtuel de telle sorte que la valeur de la fonction de transfert du courant et de la tension coïncide, dans un modèle formé par les circuits oscillants virtuels, au moins au voisinage des fréquences de résonance, avec les valeurs vraisemblables du quotient,

c) des moyens de commande, qui, à partir d'une valeur de consigne prédéterminée, produisent des valeurs de départ pour les flancs, rapportés à la période de base, des impulsions qui doivent être injectées par le convertisseur de courant, et

d) un second dispositif de calcul, qui

i) détermine, respectivement après un flanc d'une impulsion, à partir de la valeur de départ pour le flanc immédiatement suivant, une grandeur d'état pour chaque circuit oscillant individuel,

ii) calcule, au moyen d'une variation virtuelle de la valeur de départ, une valeur optimale pour le flanc immédiatement suivant, pour laquelle la somme des grandeurs d'état de ces circuits oscillants satisfait à un critère d'optimisation, et

iii) délivre, pour la valeur optimale pour le flanc immédiatement suivant, un signal d'amorçage servant à actionner les dispositifs de commutation.

16. Dispositif pour faire fonctionner de façon optimale un onduleur à impulsions, qui injecte une tension et est raccordé à un réseau par l'intermédiaire d'un filtre ou d'un autre élément d'impédance, comportant

a) deux dispositifs de mesure de tension, qui sont raccordés aux extrémités de l'élément d'impédance,

b) un premier dispositif de calcul, qui calcule, respectivement pendant une période correspondant à une fréquence de base prédéterminée, le quotient des coefficients de Fourier complexes des tensions mesurées, et détermine, pour des valeurs vraisemblables du quotient, les valeurs maximales et, pour une valeur maximale, respectivement la fréquence correspondante de Fourier et la largeur respective à mi-valeur et détermine, à partir des valeurs maximales, des fréquences de Fourier et des largeurs à mi-valeur, les amplitudes de résonance, les fréquences de résonance et les largeurs de résonance de circuits oscillants virtuels qui forment un modèle virtuel pour la simulation du réseau,

c) des moyens de commande qui produisent, à partir d'une valeur de consigne prédéterminée pour la tension injectée dans le réseau, des valeurs de départ qui correspondent aux flancs, rapportés à la période de base, d'impulsions de tension, et

d) un second dispositif de calcul, qui détermine, respectivement après un flanc d'une impulsion de tension, à partir de la valeur de départ pour un flanc immédiatement suivant, une grandeur d'état pour chaque circuit oscillant virtuel, calcule, pour le flanc immédiatement suivant, par modification virtuelle de la valeur de départ, une valeur optimale, pour laquelle la somme des grandeurs d'état de ce circuit oscillant satisfait à un critère d'optimisation, et délivre, dans le cas d'une valeur optimale, pour le flanc immédiatement suivant, un signal d'amorçage servant à actionner les dispositifs de commutation.

FIG 1

FIG 2

FIG 3

FIG 4

FIG 5

FIG 6

41

**FIG 7**

**FIG 10**

**FIG 11**

**FIG 12**

FIG 8

FIG 9

FIG 13

FIG 14

FIG 15

FIG 16

FIG 17

FIG 18

FIG 19

EP 0 491 689 B1

FIG 20

FIG 22

FIG 24

FIG 25

FIG 21A

FIG 21B

FIG 21

FIG 21A

FIG 21B

READ: $\omega_i$; MAXi → i=1

i=i+1

Yes ← i > MAXi

RETURN

j=i

DECREMENT j UNTIL:
$Z(\omega_j) < Z(\omega_i)/\sqrt{2}$    OR    j=0

$\omega_{uu} = j \cdot \omega_0$

DECREMENT j UNTIL:
$Z(\omega_j) > 0$    OR    j=0

No ← $Z(\omega_j) < Z(\omega_{uu})$

INCREMENT j UNTIL:
$Z(\omega_j) \neq 0$   AND   $Z(\omega_j) > Z(\omega_i)/\sqrt{2}$

$\omega_{uo} = j \cdot \omega_0$

CALCULATE: $\omega_u = u \cdot \omega_0$

j=i

INCREMENT j UNTIL:
$Z(\omega_j) < Z(\omega_i)/\sqrt{2}$   OR   j=M

$\omega_{ao} = j \cdot \omega_0$

INCREMENT j UNTIL:
$Z(\omega_j) \neq 0$   OR   j=M

No ← $Z(\omega_j) < Z(\omega_{ao})$

FIG 23A

FIG 23B

FIG 23

FIG 23A

DECREMENT j UNTIL:
$Z(\omega_j) \neq 0$   AND   $Z(\omega_j) > Z(\omega_i)/\sqrt{2}$

$\omega_{au} = j \cdot \omega_0$

CALCULATE: $\omega_a = a \cdot \omega_0$

STORE: $D\omega = \omega_u - \omega_a$

FIG 23B

$$|Z(\omega)| = |\Sigma_i Z_i(\omega)|$$

(i=1)

(i=2)

(i=3)

$\omega_1$ $\omega_2$ $\omega_3$ $\omega$

FIG 26

$|\underline{Z}_2^{(n+1)}(\omega)|$ $F(\omega)$

$|\underline{Z}^{(n)}(\omega) - \underline{Z}_2^{(n)}(\omega)|$

$\omega_1$ $\omega_2$ $\omega_3$ $\omega$

FIG 27

FIG 28

FIG 29

FIG 30

$$n = \frac{\omega_n}{\omega_0}$$

FIG 31

$$n = \frac{\omega_n}{\omega_0}$$

FIG 32

$$\frac{t}{\tau}$$

FIG 33

FIG 34

FIG 35

EP 0 491 689 B1

FIG 36

FIG 37

Us(t)

**FIG 38**

0

T

0,04

0,03

0,02

0,01

0

$\omega_n / \omega_0$

**FIG 39**

0,02

0,01

0

0          100          200          300

**FIG 40**

Is(t)

t=0

t=T

**FIG 41**

FIG 42

FIG 43

FIG 44

EP 0 491 689 B1

FIG 45

FIG 46

FIG 47

FIG 48

FIG 49

**FIG 50**

**FIG 51**

X ⟶

X ⟶

FIG 52